# EUROPEAN PATENT APPLICATION

(11) **EP 4 699 917 A2**
(43) Date of publication of application: **25.02.2026**
(21) Application number: 25197015.8
(22) Date of filing: 20.08.2025
(51) Int. Cl.: B62K 25/04

(54) **MODIFYING OPERATIONAL ASPECTS OF A SUSPENSION CONTROL SYSTEM**

(30) Priority: 20.08.2024 US 202418810397
(71) Applicant: Fox Factory, Inc., Duluth, GA 30097 (US)
(72) Inventor: Ericksen, Everet Owen, Duluth, 30097 (US); Pollock, Thomas, Duluth, 30097 (US); Lindsley, Ariel, Duluth, 30097 (US); Otterness, Christopher, Duluth, 30097 (US); Peterson, Evan, Duluth, 30097 (US); Power, Evan, Duluth, 30097 (US); Michaels, Zachary, Duluth, 30097 (US); Fraguglia, Michael, Duluth, 30097 (US); Coaplen, Joshua, Duluth, 30097 (US)
(74) Representative: Greaves Brewster LLP

(57) **Abstract**

A computer-implemented method comprising:
receiving a modification request (1705);
accessing a control system of one or more electronic components of a vehicle (1710);
modifying an original operational aspect of one or more of said electronic components based on said request (1715);
receiving a return request (1720); and
returning said modified operational aspect of said one or more of said electronic components back to said original operational aspect (1725).

## Description

This application claims priority from U.S. Patent Application No. 18/810,397 filed 20 August 2024.

### TECHNICAL FIELD

Embodiments of the present technology relate generally to modifying operational aspects of suspension system.

### BACKGROUND

Vehicle systems and components used to be mostly analog. However, as technology advances and becomes smaller, a number of vehicle systems and components are moving from analog to digital. One of the main issues affecting the transition is the power needs and communications infrastructures necessary to operate and manage the digital components of the suspension system.

### SUMMARY OF THE INVENTION

According to some embodiments there is provided a method, such as a computer-implemented method. The method may comprise receiving a modification request. The method may comprise accessing a control system of one or more electronic components of a vehicle. The method may comprise modifying an original operational aspect of one or more of said electronic components based on said request. The method may comprise receiving a return request. The method may comprise returning said modified operational aspect of said one or more of said electronic components back to said original operational aspect.

In some embodiments said one or more electronic components may comprise a dropper seatpost. The modification may comprise disabling an extension functionality of said dropper seatpost.

In some embodiments the one or more electronic components may comprise a dropper seatpost. The modification may comprise locking said dropper seatpost in a lowered configuration.

In some embodiments the one or more electronic components may comprise an external input for a dropper seatpost. The modification may comprise deactivating an operation of said external input.

In some embodiments the one or more electronic components may comprise an external input for a dropper seatpost. The modification may comprise stopping a signal from said external input modifying a position of a dropper seatpost.

In some embodiments the one or more electronic components may be an external input for a dropper seatpost may be selected from a group comprising or consisting of: an electronic lever and a wireless electronic lever.

In some embodiments the one or more electronic components may comprise at least one sensor. The modification may comprises deactivating an operation of said at least one sensor.

In some embodiments the one or more electronic components may comprise at least one sensor. The modification may comprise blocking a signal from said at least one sensor.

In some embodiments the method may further comprise modifying said original operational aspect via an application operating on a computing device.

In some embodiments the return request may comprise receiving a predefined input. The predefined input may be received from a group comprising or consisting of: a switch, a button, a lever, a pedal pressure sensor, a crank rotation sensor, a wheel rotation sensor in conjunction with said crank rotation sensor, a visual sensor, an audio sensor, a shock assembly compression sensor, and a shock assembly rebound sensor.

In some embodiments the method may further comprise the step of receiving a predefined pattern as the predefined input.

In some embodiments the method may further comprise determining a location of the vehicle. The method may further comprise generating said modification request or said return request based on said location of said vehicle.

In some embodiments the method may further comprise generating said return request after a predefined period of time, such as when the predefined period of time is tolled (i.e. expired).

In some embodiments the method may further comprise generating said return request after a predefined gesture is recognized by a visual capture device.

In some embodiments the method may further comprise generating said return request after a predefined sound is recognized by an audio capture device.

According to some embodiments there is provided a non-transitory computer-readable medium for storing instructions. The instructions may comprise one or more instructions which, when executed by one or more processors, cause one or more processors to access a control system of one or more electronic components of a vehicle. The instructions may comprise one or more instructions which, when executed by the one or more processors, cause one or more processors to modify an original operational aspect of one or more of said electronic components based on said request.

In some embodiments the original operational aspect may comprise a low-power sensor mode monitoring motion (e.g. of the vehicle or a part of the vehicle) and sending a wakeup signal when a motion is detected.

In some embodiments the modification of said original operational aspect may disrupt a delivery criteria for sending of said wakeup signal.

In some embodiments the original operational aspect may be an electronic actuator configured to open and/or close a valve/mechanism that determines a movable state of a dropper seatpost.

In some embodiments the modification of said original operational aspect may alter a criteria for sending said wakeup signal.

According to some embodiments there is provided a non-transitory computer-readable medium for storing instructions. When executed the instructions may cause a receiver to listen for a modification request. When executed the instructions may cause access to a control system of one or more electronic components of a vehicle. When executed the instructions may cause modify an original operational aspect of said one or more electronic components based on said modification request.

In some embodiments the instructions, when executed, may cause the receiver to receive a return request. The instructions, when executed, may cause the modified operational aspect of said one or more electronic components to be returned to said original operational aspect.

In some embodiments the original operational aspect may comprise a low-power sensor. The low-power sensor may monitor for motion (e.g. of the vehicle or a part of the vehicle). The low-power sensor may send a wakeup signal to said one or more electronic components upon detecting said motion.

In some embodiments the original operational aspect may comprise a low-power sensor. The low-power sensor may monitor for motion (e.g. of the vehicle or a part of the vehicle). The modifying of the original operational aspect of said one or more electronic components may comprise altering a criteria for sending a wakeup signal to said one or more electronic components.

In some embodiments the one or more electronic components may comprise a dropper seatpost. The modifying of the original operational aspect may comprise disabling a functionality of said dropper seatpost.

In some embodiments the one or more electronic components may comprise a dropper seatpost. The modifying of said original operational aspect may comprise ignoring a user-activated signal for operating said dropper seatpost.

In some embodiments the one or more electronic components may comprise a dropper seatpost. The modifying of said original operational aspect may comprise ignoring a sensor signal for operating said dropper seatpost.

According to some embodiments there is provided a computer-implemented system. The system may comprise at least one processor adapted to perform the steps of a method as set out above or as described or as claimed anywhere herein.

According to some embodiments there is provided a computer program comprising instructions which, when the program is executed by a computer, cause the computer to carry out the steps of a method as set out above or as described or as claimed anywhere herein.

According to some embodiments there is provided a computer-readable data carrier having stored thereon a computer program as set out above or as described or as claimed anywhere herein.

According to some embodiments there is provided a data carrier signal carrying a computer program as set out above or as described or as claimed anywhere herein.

According to some embodiments there is provided a vehicle comprising one or more electronic components and a computer program or a computer-readable data carrier or a computer-implemented system as set out above or as described or as claimed anywhere herein.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

Aspects of the present invention are illustrated by way of example, and not by way of limitation, in the accompanying drawings, wherein:
Figure 1A is a perspective view of a bicycle having a plurality of electronically actuated components including a dropper seatpost, in accordance with an embodiment.
Figure 1B is a side view of the bicycle of Figure 1A showing only some of the plurality of electronically actuated components including the dropper seatpost, in accordance with an embodiment.
Figure 1C is a perspective view of a switch for selecting different active valve control tunes, in accordance with an embodiment.
Figure 2A is a perspective view of a fork including a portion of the wireless active suspension system and its components, in accordance with an embodiment.
Figure 2B is a cross-sectional view of an exemplary front fork damper assembly, in accordance with an embodiment.
Figure 2C is a perspective view of an adjustable shock assembly having an electronically actuated valve, in accordance with an embodiment.
Figure 3A is a block diagram of a controller, shown in accordance with an embodiment.
Figure 3B is a block diagram of a sensor, shown in accordance with an embodiment.
Figure 3C is a flow diagram of a wireless communication protocol, shown in accordance with an embodiment.
Figure 3D is a flow diagram of a number of states of the sensor, shown in accordance with an embodiment.
Figure 4 is a perspective view of an electronically adjustable valve assembly in the dropper seatpost, in accordance with an embodiment.
Figure 5 is a cross-section view of the electronically adjustable valve assembly in the dropper seatpost, in accordance with an embodiment.
Figure 6A is a cross-section view (identified in Figure 5) of a portion of the dropper seatpost including a motor to drive the electronically adjustable valve assembly, in accordance with an embodiment.
Figure 6B is a cross-section view (identified in Figure 5) of a portion of the dropper seatpost including a mechanical input to adjust the electronically adjustable valve assembly, in accordance with an embodiment.
Figure 7 is a block diagram of a computer system, in accordance with an embodiment.
Figure 8 is a block diagram of a switch, shown in accordance with an embodiment.
Figure 9 is a flow diagram of a wireless communication protocol, shown in accordance with an embodiment.
Figure 10 is a block diagram of a mobile device, in accordance with an embodiment.
Figure 11 is a block diagram of a mobile device display having a number of inputs shown for the application, in accordance with an embodiment.
Figure 12A is a screenshot of the application having a number of different tunes shown on a display, in accordance with an embodiment.
Figure 12B is a screenshot of the application having a number of different tunes shown on a display with at least one tune assigned to a switch input, in accordance with an embodiment.
Figure 13 is a screenshot of a user adjustable capability that is accessed when the user wants to change a tune in the application, in accordance with an embodiment
Figure 14 is a screenshot of a ride settings management page, in accordance with an embodiment.
Figure 15 is a high-level view of a defined area, in accordance with an embodiment.
Figure 16 is a screenshot of the application having a number of different control system modifications shown on a display, in accordance with an embodiment.
Figure 17 is a flow diagram of a method for modifying one or more aspects of a vehicle's control system, in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, objects, and circuits have not been described in detail as not to unnecessarily obscure aspects of the present disclosure.

The term "active", as used when referring to a valve or shock assembly component, means adjustable, manipulatable, etc., during typical operation of the valve. For example, an active valve can have its operation changed to thereby alter a corresponding shock assembly characteristic damping from a "soft" setting to a "firm" setting (or a stiffness setting somewhere therebetween) by, for example, adjusting a switch in a passenger compartment of a vehicle. Additionally, it will be understood that in some embodiments, an active valve may also be configured to automatically adjust its operation, and corresponding shock assembly damping characteristics, based upon, for example, operational information pertaining to the vehicle and/or the suspension with which the valve is used.

Similarly, it will be understood that in some embodiments, an active valve may be configured to automatically adjust its operation, and corresponding shock assembly damping characteristics, based upon received user input settings (e.g., a user-selected "comfort" setting, a user-selected "sport" setting, and the like). In many instances, an "active" valve is adjusted or manipulated electronically (e.g., using a powered solenoid, electric motor, poppet, or the like) to alter the operation or characteristics of a valve and/or other component. As a result, in the field of suspension components and valves, the terms "active", "electronic", "electronically controlled", and the like, are often used interchangeably.

The term "manual" as used when referring to a valve or shock assembly component means manually adjustable, physically manipulatable, etc., without requiring disassembly of the valve, damping component, or shock assembly which includes the valve or damping component. In some instances, the manual adjustment or physical manipulation of the valve, damping component, or shock assembly which includes the valve or damping component, occurs when the valve is in use. For example, a manual valve may be adjusted to change its operation to alter a corresponding shock assembly damping characteristic from a "soft" setting to a "firm" setting (or a stiffness setting somewhere therebetween) by, for example, manually rotating a knob, pushing or pulling a lever, physically manipulating an air pressure control feature, manually operating a cable assembly, physically engaging a hydraulic unit, and the like. For purposes of the present discussion, such instances of manual adjustment/physical manipulation of the valve or component can occur before, during, and/or after "typical operation of the vehicle".

It should further be understood that a vehicle suspension may also be referred to using one or more of the terms "passive", "active", "semi-active" or "adaptive". As is typically used in the suspension art, the term "active suspension" refers to a vehicle suspension which controls the vertical movement of the wheels relative to vehicle. Moreover, "active suspensions" are conventionally defined as either a "pure active suspension" or a "semi-active suspension" (a "semi-active suspension" is also sometimes referred to as an "adaptive suspension"). In a conventional "pure active suspension", a motive source such as, for example, an actuator, is used to move (e.g. raise or lower) a wheel with respect to the vehicle. In a "semi-active suspension", no motive force/actuator is employed to adjust move (e.g. raise or lower) a wheel with respect to the vehicle.

Rather, in a "semi-active suspension", the characteristics of the suspension (e.g. the firmness of the suspension) are altered during typical use to accommodate conditions of the terrain and/or the vehicle. Additionally, the term "passive suspension", refers to a vehicle suspension in which the characteristics of the suspension are not changeable during typical use, and no motive force/actuator is employed to adjust move (e.g. raise or lower) a wheel with respect to the vehicle. As such, it will be understood that an "active valve", as defined above, is well suited for use in a "pure active suspension" or a "semi-active suspension".

In the following discussion, an electronically adjustable component may be active and/or semi-active. In general, the electronically adjustable component will have one or more electronically adjustable features controlled by a motive component such as a solenoid, stepper motor, electric motor, or the like. In operation, the electronically adjustable component will receive an input command which will cause the motive component to move, modify, or otherwise change one or more aspects of one or more electronically adjustable features.

For example, in the case of an electronically adjustable component such as an active valve in a shock assembly, the motive component (e.g., solenoid, electric motor, stepper motor, or the like) will seat, unseat, or partially unseat a valve needle (or poppit, plug, etc.) with respect to a valve seat (or orifice, opening, pathway, etc.). Thus, in one embodiment, when the electronically adjustable valve receives an input command, the motive component will adjust the position of the valve needle with respect to the valve seat (which will cause the fluid pathway flow characteristics to change as the fluid pathway will be closed, opened, partially opened, or partially closed), thereby modifying one or more damping characteristics of the shock assembly.

The term "seat tube" refers to a portion of a bicycle frame to which a seatpost is attached (often by insertion of a portion of the seatpost into the seat tube).

A seatpost is a component, e.g., a tube or other geometric shaped member, that couples a saddle with the bicycle frame. In one embodiment, at least a portion of the bottom of the dropper seatpost is designed to be inserted into the seat tube of the bicycle frame and the top of the seatpost will include (or be coupled to) a saddle clamp assembly.

In general, a user adjusts the amount of seatpost sticking out of the seat tube to establish the vertical height of the saddle (e.g., how far the saddle is above the ground plane, above the pedals, etc.). Once the seatpost (with saddle) is adjusted within the seat tube to obtain the desired saddle height, a clamping member (or another retaining device) is used about the seat tube to fasten the seatpost within the seat tube.

The saddle clamp assembly is used to couple a bicycle saddle with the seatpost, in one embodiment, by clamping with the saddle rails of the saddle. The saddle clamp assembly allows a user to adjust the horizontal location of the saddle (e.g., toward the front or rear of the bicycle) and the pitch of the saddle (e.g., nose-up, nose-level, nose-down).

A dropper seatpost includes a lower post, an upper post, and an electronically adjustable valve assembly. In one embodiment, the lower post is a hollow or semi-hollow design. In one embodiment, the upper post is a hollow or semi-hollow design. In one embodiment, the lower post and the upper post are telescopically coupled such that the overall length of the dropper seatpost is modified by adjusting the telescoping extension and retraction.

In one embodiment, the telescoping extension and retraction capability of the upper and lower posts is controlled by the electronically adjustable valve assembly. In one embodiment, the electronically adjustable valve assembly is located in the lower post. In one embodiment, the electronically adjustable valve assembly is located in the upper post. In one embodiment, the electronically adjustable valve assembly could span the upper post and the lower post.

In one embodiment, the electronically adjustable valve assembly is an electronic rotary flow control valve assembly. In one embodiment, the electronically adjustable valve assembly also includes a mechanically actuated flow control valve capability.

As discussed herein, in one embodiment, the dropper seatpost actuating system includes a short-throw electronic handlebar lever that is relatively easy to press. This is good for most situations. However, when riding at a bike park (for instance) on a jump line, a rider might not want the seatpost to extend if accidentally the lever is pressed while jumping.

In addition, one or more electronic components discussed herein use a 'shake-to-wake' low power mode to automatically turn one or more electronic components on or to full power operating mode when motion, bumps, or the like are detected. This means that a power button is not needed. However, when transporting a vehicle with one or more components in a shake-to-wake state, when motion, bumps, or the like are detected, the one or more electronic components would turn on which would consume battery power.

In one embodiment, a number of features can be enabled to address these issues. In one embodiment, the features are mobile-app enabled. For example, one feature is park mode. The rider can select park mode to deactivate the dropper seatpost actuation lever from normal operation. In general, park mode preventing accidental seat post operations including, but not limited to, extension of the eat post when riding. By enabling park mode, bike park riders no longer need to flip their wireless dropper lever to the bar's topside to avoid accidental actuation. In one embodiment, park mode can be entered or exited by using the application, by performing a specific action or a pattern of actions, or the like.

Another feature is transport mode. When enabled, transport mode disables shake-to-wake functionality. Transport mode is designed to conserve battery power while the bike is in transit (e.g., car rides, etc.). In one embodiment, park mode can be entered or exited by using the application, by performing a specific action or a pattern of actions, or the like.

### Operation

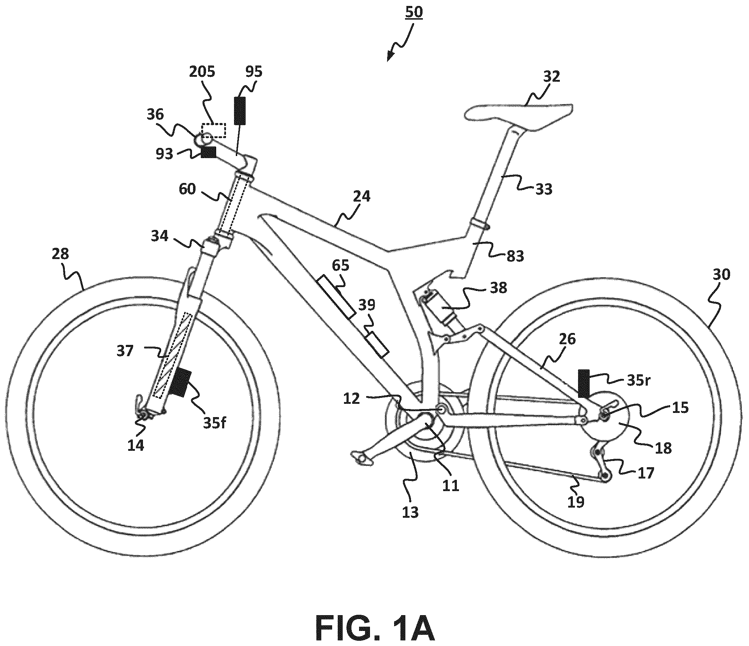

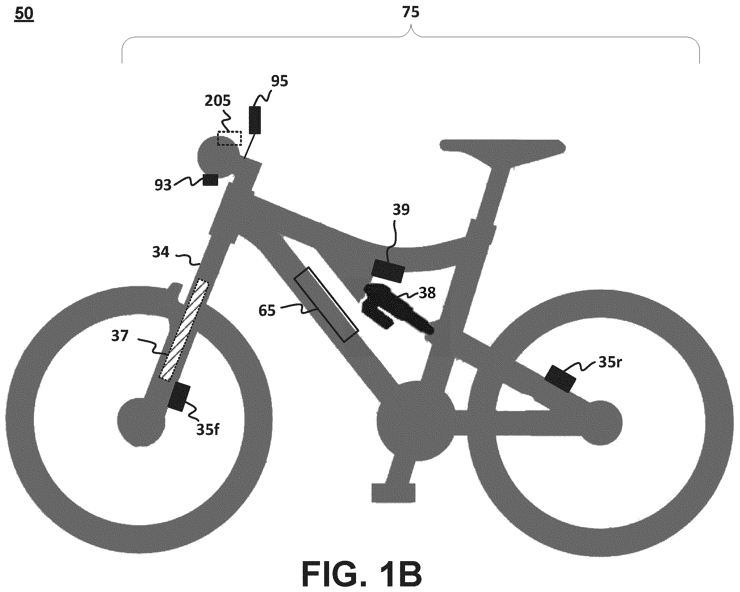

Referring now to Figure 1A, a perspective view of a bicycle 50 having a plurality of electronically actuated components is shown in accordance with an embodiment. Although a bicycle is used in the discussion. In one embodiment, the electronically actuated components 75 (shown in Figure 1B) could be used on another vehicle such as, but not limited to a road bike, a mountain bike, a gravel bike, an electric bike (e-bike), a hybrid bike, a scooter, a motorcycle, an ATV, a personal water craft (PWC), a four-wheeled vehicle, a snow mobile, a UTV such as a side-by-side, and the like. In one embodiment, the electronically actuated components 75 could be used on a suspension inclusive device such as, but not limited to an exoskeleton, a seat frame, a prosthetic, a suspended floor, and the like. However, in the following discussion, and for purposes of clarity, a bicycle is utilized as the example vehicle.

Thus, between the disclosed examples as provided in view of a bicycle 50, the disclosed embodiments can be used on electronically actuated components used by vehicles with wheels, skis, tracks, hulls, and/or with suspension inclusive devices such as prosthetic limbs, exoskeletons, and the like.

In one embodiment, bicycle 50 has a main frame 24 with a suspension system comprising a swing arm 26 that, in use, is able to move relative to the rest of main frame 24; this movement is permitted by, inter alia, rear shock assembly 38. The front fork 34 also provide a suspension function via a front shock assembly 37 in at least one fork leg; as such the bicycle 50 is a full suspension bicycle (such as an all-terrain bike (ATB), mountain bike, e-bike, etc.).

However, the embodiments described herein are not limited to use on full suspension bicycles. In particular, the term "suspension system" is intended to include vehicles having front suspension only, rear suspension only, seat suspension only, a combination of two or more different suspensions, and the like.

In one embodiment, swing arm 26 is pivotally attached to the main frame 24 at pivot point 12 which is located above the bottom bracket axis 11. Although pivot point 12 is shown in a specific location, it should be appreciated that pivot point 12 can be found at different distances from bottom bracket axis 11 depending upon the rear suspension configuration. The use of the specific pivot point 12 herein is provided merely for purposes of clarity. For example, in a hardtail bicycle embodiment, there would be no pivot point 12. In one embodiment of a hardtail bicycle, main frame 24 and swing arm 26 would be formed as a fixed frame. Bottom bracket axis 11 is the center of the pedal and front sprocket assembly 13. Bicycle 50 includes a front wheel 28, a rear wheel 30 and a seat 32. A seat 32 is connected to the main frame 24 via a dropper seatpost 33 in order to support a rider of the bicycle 50. In one embodiment, dropper seatpost 33 is used to adjustably retain and/or adjust the height of saddle 32 with respect to main frame 24, without modifying a yaw or a pitch position of saddle 32 with respect to main frame 24. In one embodiment, dropper seatpost 33 is used to adjustably retain and/or adjust the height of saddle 32 with respect to main frame 24, and may also modify one or both of the yaw and pitch positions of saddle 32 with respect to main frame 24

Front wheel 28 which is coupled with the front fork 34 via axle 14. The front fork 34 includes a crown and at least one fork leg. Above the crown, a steerer tube 60 passes through a portion of bicycle main frame 24 and attaches the fork 34 to the handlebar 200 (via a stem) allowing the rider to steer the bicycle 50. In one embodiment, at least one active valve damper 37 is integrated with fork 34.

The rear wheel 30 is connected to the swing arm 26 of the frame 22 at rear axle 15. A rear damping assembly (e.g., rear shock assembly 38) is positioned between the swing arm 26 and the frame 22 to provide resistance to the pivoting motion of the swing arm 26 about pivot point 12. Thus, the illustrated bicycle 50 includes a suspension member between swing arm 26 and the main frame 24 which operate to substantially reduce rear wheel 30 impact forces from being transmitted to the seat 32 (and thus the rider) of the bicycle 50.

In one embodiment, saddle 32 is connected to the main frame 24 via a dropper seatpost 33. In one embodiment, front shock assembly 37, rear shock assembly 38, dropper seatpost 33, handlebar 200 and/or the like include one or more active and/or semi-active damping components which are used to reduce an initial force generated by an event (e.g., imparted to a wheel of the vehicle from the surface on (or through) which the vehicle is traveling) to a lesser force as it is transferred to the rest of the vehicle and/or persons riding therein/thereon.

In one embodiment, bicycle 50 is driven by a chain 19 coupled with both front sprocket assembly 13 and rear sprocket 18. As the front sprocket assembly 13 is rotated about bottom bracket axis 11, a force is applied to chain 19 which transfers the energy from the front sprocket assembly 13 to rear sprocket 18. Chain tension device 17 provides a variable amount of tension on chain 19. The need for chain 19 length variation can be due to factors such as a number of different gears that may be on one or both of front sprocket assembly 13 and/or rear sprocket 18 and/or changes in chain stay length as the distance between bottom bracket axis 11 (where front sprocket assembly 13 attaches to main frame 24) and the rear axle 15 changes due to suspension articulation.

In one embodiment, bicycle 50 includes a number of electronically actuated components 75 (identified in Figure 1B) including one or more of: a switch 93, a user interface 205, an active valve damper(s) (e.g., rear shock assembly 38, front shock assembly 37), dropper seatpost 33, and the like, as well as other interactive components and features such as one or more of: a controller 39, a sensor(s) (e.g., sensor(s) 35f, 35r, and the like), a mobile device 95, a power source 65, smart components, and the like.

In one embodiment, sensor 35r is positioned on the swing arm 26 the rear axle 15 of bicycle 50. In one embodiment, sensor 35f is positioned in an unsprung location of front fork 34. Although a number of sensors are shown in accordance with one embodiment, in other embodiments, the same sensors (and or additional sensors) could be located in other locations, to sense and/or measure things such as temperature, voltage, current, resistance, noise, positions of one or more components of bicycle 50, such as dropper seatpost 33, pedals, derailer, chain, lever locations, etc.

Additional information for vehicle suspension systems, sensors, and their components as well as adjustment, modification, and/or replacement aspects including manually, semi-actively, semi-actively, and/or actively controlled aspects and wired or wireless control thereof is provided in U.S. Patents 8,838,335; 9,353,818; 9,682,604; 9,797,467; 10,036,443; 10,415,662; to each of which reference is made.

In one embodiment, one or a plurality of component(s) of the bicycle 50 are also smart component(s). Examples of the smart component(s) can include one or more of the forks, wheels, rear shocks, front shocks, handlebars, seat posts, pedals, cranks, and the like. In one embodiment, the smart component(s) will include connective features that allow them to communicate wired or wirelessly with one or more of the electronically actuated components 75 (of Figure 1B), and/or any other smart component(s) within transmission range (thereby becoming connected components).

In one embodiment, data (including real-time data) is collected or provided from the smart component to the controller 39. Depending upon the connected component, data such as telemetry attributes to provide angle, orientation, velocity, acceleration, RPM, operating temperature, and the like, can be obtained.

Referring now to Figure 1B, a schematic side view of a bicycle 50 with focus on the one or more of the electronically actuated components 75 is shown in accordance with an embodiment.

In one embodiment, one or more of the electronically actuated components 75 include one or more of: a switch 93, a user interface 205, an active valve damper(s) (e.g., rear shock assembly 38, front shock assembly 37), dropper seatpost 33, and the like, as well as other interactive components and features such as one or more of: a controller 39, one or more sensors (e.g., sensor 35f, 35r, and the like), hereinafter "sensor 35", mobile device 95, power source 65, smart components, and the like.

In one embodiment, mobile device 95 is mounted to handlebar 200 of bicycle 50. Although mobile device 95 is shown mounted to handlebar 200, it should be appreciated that the mobile device 95 could be in a rider's backpack, pocket, or the like. In general, mobile device 95 is a smart device such as a mobile phone, tablet, a smart phone, a tablet, a smart watch, a piece of smart jewelry, smart glasses, or other user portable device(s) having wireless connectivity. Mobile device 95 is capable of broadcasting and receiving via at least one network, such as, but not limited to, WiFi, Cellular, Bluetooth, NFC, and the like. In one embodiment, mobile device 95 includes one or more of a display, a processor, memory, a location or position system (such as a global positioning system (GPS), local positioning system, or the like), camera, and one or more sensors such as audio, visual, motion, acceleration, altitude, and the like.

In one embodiment, switch 93 is mounted to handlebar 200 of bicycle 50. In one embodiment, switch 93 is a positional switch used in conjunction with one or more of the electronically actuated components 75.

In one embodiment, switch 93 is a multi-positional switch, an upshift/downshift type of switch, a button type switch, or the like. For example, switch 93 would be a 2-position switch, a 3-position switch, a switch that can cycle through a number of different modes (similar to a gear shift), or the like. Although switch 93 is shown mounted to handlebar 200, it should be appreciated that switch 93 could be mounted in a different location on the vehicle, on a mount coupled to the vehicle, or the like. In one embodiment, the location of switch 93 is modifiable and is located on the vehicle based on a user's preference.

In general, sensor 35 could be a single sensor (such as an accelerometer) or a combination of sensor types. Sensor 35 is used for sensing characteristics (or changes to characteristics) such as terrain, environment, temperature, vehicle speed, vehicle pitch, vehicle roll, vehicle yaw, component activity, or the like. It is understood that the one or more sensors may be imbedded, moved, mounted, or the like, in any suitable configuration and allowing for any suitable range of adjustment as may be desirable.

In one embodiment, sensor 35 is a force or acceleration transducer (e.g., strain gage, Wheatstone bridge, accelerometer, hydraulic, interferometer based, optical, thermal or any suitable combination thereof). Further, the sensor 35 may utilize solid state electronics, electro-mechanical principles or MEMS, or any other suitable mechanisms.

Although a number of sensors are shown in Figures 1A and 1B, it should be appreciated that there may be only a single sensor or two or more sensors in operation. Moreover, in one embodiment, mobile device 95 is can be used as a sensor.

In general, the one or more sensors may be attached to the swing arm 26 directly, to any link thereof, to an intermediate mounting member, to front fork 34, to rear shock assembly 38, seat 32, handlebar 200, or to any other portion or portions of the bicycle 50 as may be useful, available, or the like. In one embodiment, one or more sensors may be attached to another vehicle, another rider, user, stationary object, and the like. For example, in one embodiment, the controller may receive sensor information from a sensor located on a lead vehicle, another vehicle in the group with a larger power source and thus a greater sensor array, capacity, capability, etc.

In one embodiment, one or more sensors and valve actuators (e.g. electric solenoid or linear motor type-note that a rotary motor may also be used with a rotary actuated valve), suspension components, suspension component controller(s) and/or data processing system(s), and the like may be coupled to and/or integrated with the vehicle structure, such as disclosed in U.S. Pat. Nos. 7,484,603; 8,838,335; 8,955,653; 9,303,712; 10,036,443; 10,060,499; 10,443,671; and 10,737,546; to each of which reference is made. Further, sensors and valves, or principles, of patents and other documents to which reference has been made, may be integrated one or more embodiments hereof, individually or in combination.

In one embodiment, the sensor(s) 35 provides the obtained sensor data to controller 39. In one embodiment, controller 39 uses the sensor data to determine one or more adjustments of one or more of the electronically actuated components.

In one embodiment, controller 39 monitors the sensor(s) 35 for sensor input (and/or the location and terrain data, etc.) and determines the one or more adjustments in a matter of milliseconds after receiving the sensor data. For example, in one embodiment, sensors on the fork, rear axle, and/or main frame read bump input at the wheel and send the obtained sensor data to the controller 39. Thus, by placing sensors on the frame and/or in unsprung location for both wheels, the controller 39 is able to processes data from the terrain to constantly adjust the suspension for maximum efficiency and control.

In one embodiment, controller 39 provides the one or more adjustments of one or more of the electronically actuated components as input to one or more of the electronically actuated components which then perform the one or more adjustments.

In one embodiment, location data from a position system (such as location information obtained by mobile device 95, by a navigation system, by broadcasting beacons, and the like) is used in conjunction with terrain data by the controller 39 to determine probability of obstacles (e.g., to provide a priori knowledge) which is used to optimize the suspension configuration. For example, location information and a terrain database (or the like) is used to establish the bicycle's current location and the terrain about the location (e.g., on a bumpy patch of trail, etc.).

In one embodiment, controller 39 and/or any other controllers utilized by one or more components described herein are removably coupled with the component and as such, may be removeable as a unit. In one embodiment, the controller 39 (or the like), once removed, can be coupled to a power source for charging purposes, if needed. Additionally, in one embodiment, the removed controller can, for example, download software or firmware upgrades. As a result, the rider/user obtains the advantage of having a controller which has the "latest and greatest" features available to the rider/user.

In one embodiment, suspension controller 39 is in wireless communication with wireless sensor(s) 35f, wireless sensor(s) 35r, and/or other sensors. In one embodiment, communication is transmitted via a network such as WPAN, an LPN, IoT connectivity, or the like. In one embodiment, the wireless transmission protocol could be, but is not limited to, Bluetooth, WiFi, BLE, NFC, UHF radio signal, WiMax, ISM band, an IEEE 802.15.4 standard communicator, Zigbee, ANT, ISA100.11a, wireless HART protocol, MiWi, IPv6, 6LoWPAN, thread network protocol, SNAP, and the like.

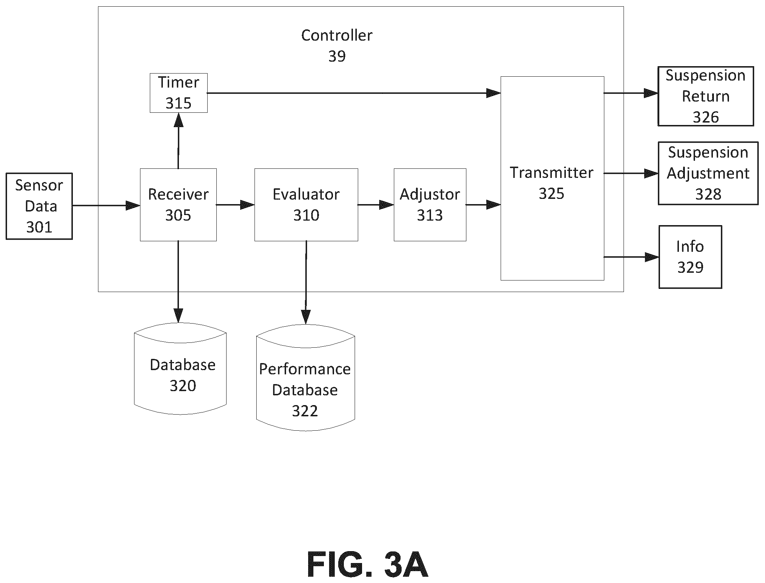

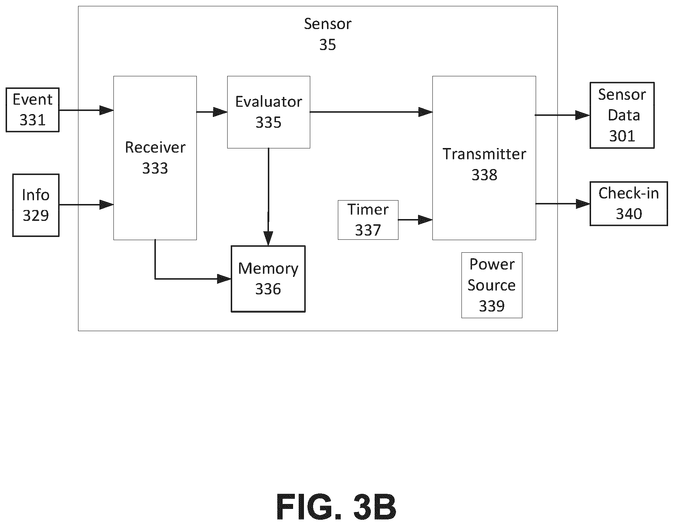

Further discussion of the controller 39 is shown in Figure 3A and described in the discussion of Figure 3A. Further discussion of the wireless sensor(s) 35 is shown in Figure 3B and described in the discussion of Figure 3B.

Although controller 39 is shown in a number of locations in Figures 1A and 1B, it should be appreciated that in other embodiments, controller 39 could be located in other locations. For example, the controller could be located on the side of the frame, at the handlebars, under the saddle, carried by the rider if it is wireless, etc. The use of the mounting locations shown in Figures 1A and 1B are indicative of one embodiment, which is provided for purposes of clarity.

Similarly, although shown in certain locations in Figures 1A and 1B, in accordance with one embodiment, in other embodiments, one, some, or all of the components shown in Figures 1A and 1B could be located in other locations. For example, one, some, or all of the components could be located on the sides of components, at the handlebars, under the saddle, carried by the rider if it is wireless, located on a mount attached to a portion of the bicycle 50, etc. Thus, the use of the locations of components as shown in Figures 1A and 1B are indicative of one embodiment, which is provided for purposes of clarity.

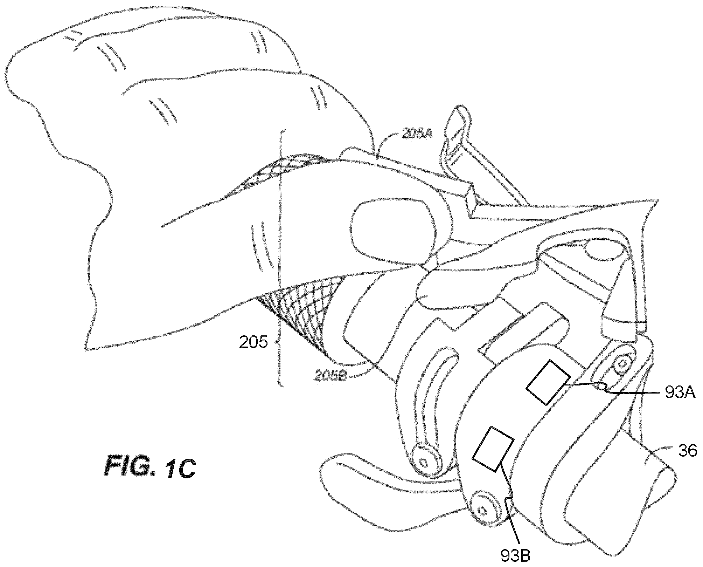

Referring now to Figure 1C, a perspective view of handlebar 36 having the switch 93 and user interface 205 coupled therewith is shown in accordance with an embodiment. In one embodiment, user interface 205 is a lever used in conjunction with the active valve suspension and the active valve mobile device application (e.g., mobile device application 1124 discussed in further detail herein).

In one embodiment, switch 93 is a multi-positional switch, an upshift/downshift type of switch, a button type switch, or the like. For example, switch 93 would be a 2-position switch, a 3-position switch, a switch that can cycle through a number of different modes (similar to a gear shift), or the like. In one embodiment, as shown in Figure 1C, switch 93 is a 2-button switch having a first button 93A and a second button 93B.

For example, in one embodiment, wireless switch 93 has two positions allowing the selection of two different modes. The modes could be auto and lock out (different levels of bump sensing, or some combination thereof). The lock out mode would be a "sprint" type setting that would lock-out the suspension, providing no bump sensing and removing the opportunity for pedal bob.

In one embodiment, switch 93 is integrated with user interface 205. In another embodiment, switch 93 is separate from user interface 205. In the following discussion, the switch 93 is treated as being integrated with user interface 205 for purposes of clarity and the entire component is referred to as user interface 205. In one embodiment, the user interface 205 is mounted on handlebar 36. In one embodiment, user interface 205 is coupled with handlebar 36 via a clip or other retaining device.

User interface 205 includes a power source similar to power source 65, the discussion of which is incorporated by reference for purposes of clarity. In one embodiment, user interface 205 is a low power consumption wireless device that operates and communicates in the same general power conserving manner as described herein. In one embodiment, user interface 205 communicates with one or more of the other components of wireless active suspension system via a wireless personal area network (WPAN), a low power network (LPN), Internet of things (IoT) connectivity, or the like. In one embodiment, communication protocol could be, but is not limited to, Bluetooth, WiFi, Bluetooth Low Energy (BLE), near field communication (NFC), UHF radio signal, Worldwide Interoperability for Microwave Access (WiMax), industrial, scientific, and medical (ISM) band, IEEE 802.15.4 standard communicators, Zigbee, ANT, ISA100.11a (wireless systems for industrial automation: process control and related applications) wireless highway addressable remote transducer protocol (HART), MiWi, IPv6 over low-power wireless personal area networks (6LoWPAN), thread network protocol, subnetwork access protocol (SNAP), and the like.

In one embodiment, user interface 205 includes a controller. In one embodiment, the controller coupled with user interface is similar in operation to the controller 39 described herein.

In one embodiment, user interface 205 includes both a power source and a controller.

In one embodiment, user interface 205 communicates seatpost height instructions for the dropper seatpost 300 to electronically adjustable valve assembly 333 of dropper seatpost 300 via a wired connection, via a wireless connection, or via a combination of wired and wireless connections.

In one embodiment, user interface 205 includes a wireless transmitter/receiver and is wirelessly coupled with electronically adjustable valve assembly 333. In one embodiment, user interface 205 communicates wired or wirelessly using communication devices and protocols such as those described in the communications discussion herein. For purposes of clarity, the communications discussion is not repeated herein. Instead, the entirety of any communications discussions provided herein is incorporated by reference for purposes of clarity.

Although the user interface 205 is shown coupled with handlebar 36, in another embodiment, the user interface 205 could be located on another portion of the main frame 24, on a mount coupled with the vehicle, worn as a smart device, carried by the rider, worn by a rider such as on an arm/wrist/hand, like a watch, glove, etc., on a thigh wrap, or the like, is an app on mobile device 95, or the like.

In one embodiment, user interface 205 includes at least one control, such as the first user interface 205A and may include a second user interface 205B, it should be understood that in an embodiment, there may be only a single control, or in an embodiment there may be a set of controls. In one embodiment, when the cyclist interacts the user interface 205, a signal is sent from the user interface 205 to the electronically adjustable valve assembly 333. As described in detail herein, the signal causes the actuation of an active valve (e.g., such as a rotation of a rotary flow control valve) within the electronically adjustable valve assembly 333. The actuation of the active valve causes the active valve to open and/or close, thereby controlling the fluid flow between two or more fluid volumes within the dropper seatpost 300. This opening and/or closing of the active valve allows the dropper seatpost 300 to drop to a lower saddle ride height, or return to a previous saddle ride height as discussed herein.

Although components of Figure 1C are shown in given locations in accordance with one embodiment, in other embodiments, one, some, or all of the components shown in Figure 1C could be located in other locations, one or more components could be separated into two or more pieces and dispersed, etc. The use of the locations of the components as shown in Figure 1C are indicative of one embodiment, which is provided for purposes of clarity.

Referring now to Figure 1A-1C, in one embodiment, one or a plurality of component(s) of the bicycle 50 are also smart component(s). Examples of the smart component(s) can include one or more of the forks, wheels, rear shocks, front shocks, handlebars, seatposts, pedals, cranks, and the like. In one embodiment, the smart component(s) will include connective features that allow them to communicate wired or wirelessly with suspension controller 39, mobile device 95, one or more sensors, and/or any other smart component(s) within transmission range (thereby becoming connected components). In one embodiment, the sensors, smart components, smart devices, controllers, valves, and the like may be interconnected or connected by (one or a combination of) wire, or wirelessly via systems such as WPAN, an LPN, IoT connectivity, or the like. In one embodiment, the transmission protocol could be, but is not limited to, Bluetooth, WiFi, BLE, NFC, UHF radio signal, WiMax, ISM band, an IEEE 802.15.4 standard communicator, Zigbee, ANT, ISA100.11a, wireless HART protocol, MiWi, IPv6, 6LoWPAN, thread network protocol, SNAP, and the like, or any suitable power or signal transmitting mechanism, making them connected components.

By using a connected component, data (including real-time data) can be collected from the smart component by suspension controller 39. Depending upon the connected component, data such as telemetry attributes to provide angle, orientation, velocity, acceleration, RPM, operating temperature, and the like, can be obtained.

For example, a smart wheel would be a connected component that is attached to the wheel (or wheels) to provide telemetry such as RPM, tire pressure, tire temperature, or the like to suspension controller 39. For example, the smart component could be a smart valve stem, a MEMS device, or the like coupled with the rim of the wheel.

An example of a smart handlebar would be a connected component that provides handlebar geometry information, handlebar dimensions, stress measurements, or the like. For example, the smart component could be a MEMS device coupled with the handlebar.

An example of a smart seatpost would be connected component that provides geometry information such as seat height, seat pitch, roll, yaw, seat forward or aft location, weight on the seat, or the like. For example, the smart component could be a MEMS device coupled with the seatpost.

An example of a smart pedal would be connected component that provides telemetry such as RPM's, push and pull pressure, left side versus right side performance data (e.g., a stronger force on the right pedal or left pedal, in the up or down direction), or the like. For example, the smart component could be a MEMS device or other sensor type coupled with the pedal(s).

An example of a smart crank set would be connected component that provides telemetry such as RPM's, chain tension, chain temperature, internal crank temperature, bearing operation, or the like. For example, the smart component could be a MEMS device coupled with the crank set.

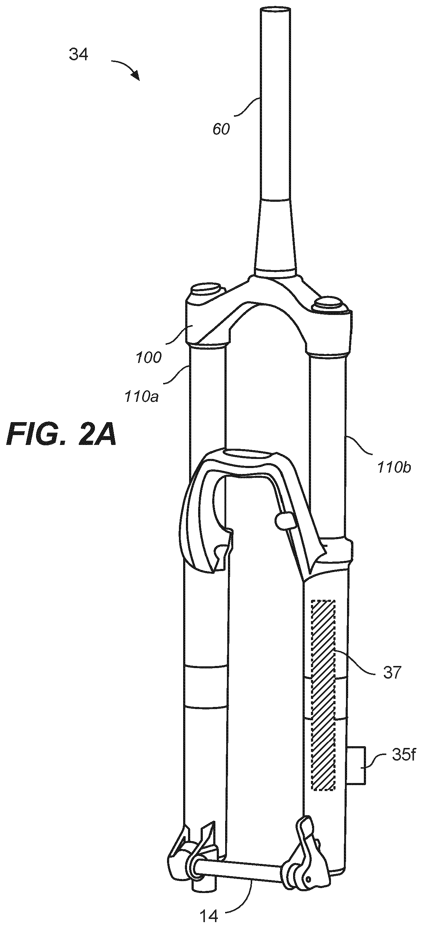

Referring now to Figure 2A, a perspective view of a fork 34 that includes the active valve damper assembly 37 is shown in accordance with an embodiment. In one embodiment, fork 34 includes a crown 100, fork tube 110a, and fork tube 110b, and an axle 14. Above the crown 100, a steerer tube 60 attaches the fork 34 to the bicycle main frame 24 and the handlebar assembly 36 (via a stem) allowing the rider to steer the bicycle 50. The steerer tube 60 interfaces with main frame 24 via bearings called a headset mounted in the head tube.

In one embodiment, axle 14 passes through the center of front wheel 28 and, as such, defines the point about which front wheel 28 rotates. In a duel legged fork setup, axle 14 is removably coupled to fork tube 110a and fork tube 110b, thereby coupling the front wheel to the fork 34. In a single legged fork setup, axle 14 is removably coupled to the single fork tube, thereby coupling the front wheel to the fork 34.

Although Figure 2A shows fork 34 with two forks 110a and 110b, in one embodiment, there may only be a single fork. In one embodiment, the components of fork 34 are fixedly coupled during the assembly process. In one embodiment, one, some, or all of the components of fork 34 could be metal, composite, 3D printed, or the like.

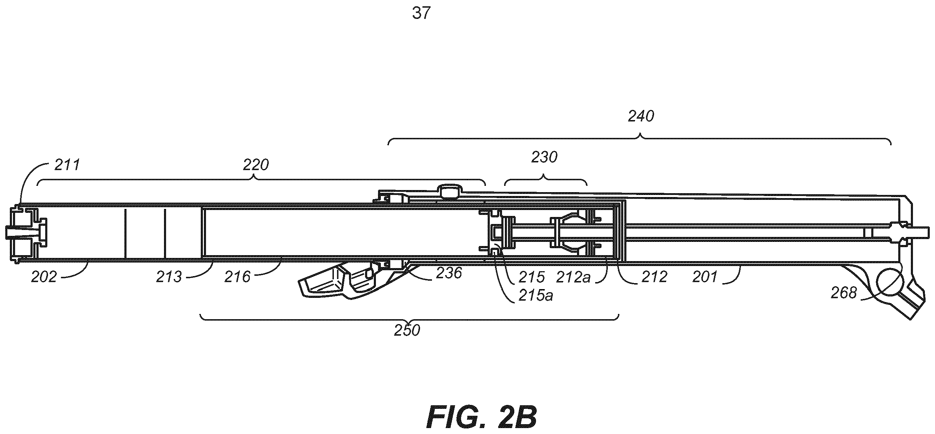

Referring now to Figure 2B, a cross-sectional view of an example of a damper assembly 37 is shown in accordance with an embodiment. In one embodiment, damper assembly 37 includes a top cap 211, a lower fork tube 201, an upper fork tube 202, a partial cartridge tube 216, a partial cartridge tube gas seal 213, a movable piston 215 with a piston gas seal 215a, a base 212 with a base gas seal 212a, a positive damper volume 220, a negative damper volume 230, a lower leg gas volume 240, and an annular gas volume 250. In one embodiment, one or more of the valves in damper assembly 37 are active valves such as active valve 450.

Although a number of features are shown in damper assembly 37, it should be appreciated that a damper assembly with more, fewer, or different components can also be utilized. Further, other damping assemblies could be used as a damper in one or more legs of fork 34. In one embodiment, the positive damper volume 220 is at the top of the damper and includes the area from the top cap 211 (or to the top of partial cartridge tube 216) and within partial cartridge tube 216 to gas seal 215a on movable piston 215. The negative damper volume 230 includes the space below gas seal 215a on movable piston 215 down toward gas seal 212a on the base 212 within partial cartridge tube 216. The lower leg gas volume 240 is defined as the space from the gas seal 236 to atmosphere at the top of lower fork tube 201, about the exterior of upper fork tube 202, to the bottom 268 of the damper assembly 37.

In one embodiment, the positive damper is the volume that is compressed as the movable piston 215 is driven upward during a compression of the fork. Thus, as the fork compresses-the positive damper volume 220 compresses. The negative damper volume 230 is the volume that is expanded as the movable piston 215 is driven upward during a compression of the fork. Thus, as the fork compresses-the negative damper volume 230 expands. In one embodiment, the positive damper volume 220 and the negative damper volume 230 communicate at one or more position(s)/stroke(s) through an internal bypass channel.

In one embodiment, partial cartridge tube 216 can be an integral part of the fork or it can be a removably coupleable part that is axially added to the internals of the upper fork tube (such as fork tube 110a or 110b of Figure 2A). For example, the damper could have a main piston seal on the inner diameter of fork tube 110b. In another embodiment, a cartridge damper is used. In general, a cartridge damper is completely separable from the fork tube. In other words, it can be removed from the fork tube and it would still be a damper. In general, the cartridge damper is coaxial and is a cartridge that threads into the fork tube of the suspension fork.

In one embodiment, damper assembly 37 is filled with air. However, in another embodiment, a fork damper could be filled with many different types of fluid, instead of air. The fluid could be one of an assortment of gasses (such as regular air, nitrogen, helium, carbon dioxide, and the like.) Similarly, the fluid could be a liquid.

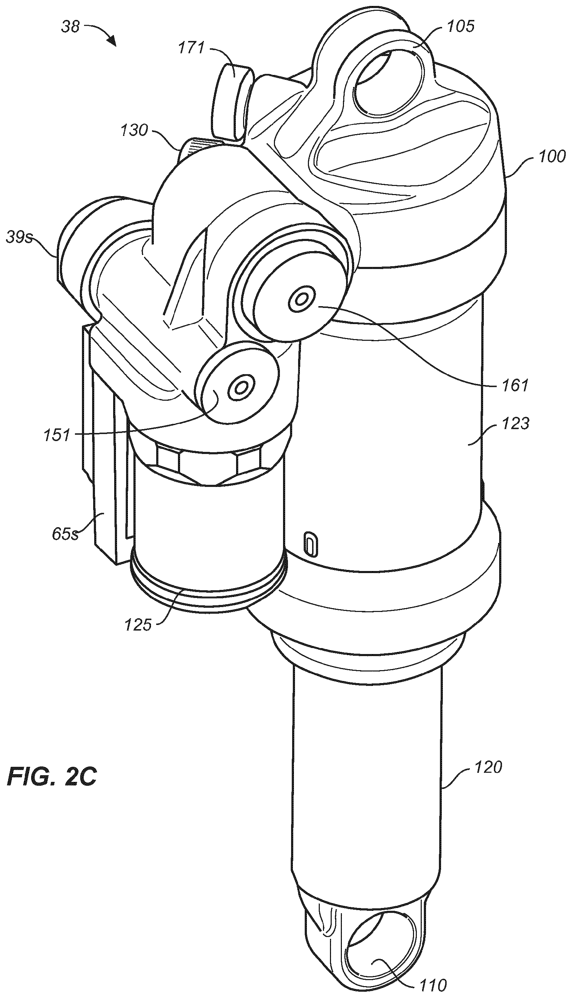

With reference now to Figure 2C, a perspective view of an adjustable shock assembly is shown in accordance with one embodiment. In one embodiment, the adjustable shock assembly is a stand-alone fluid damper assembly, a coil sprung adjustable shock assembly, an air sprung fluid damper assembly, or the like. In its basic form, the adjustable shock assembly controls the speed of movement of a piston shaft by metering incompressible fluid from one side of the main piston to the other. In one embodiment, such as during a compression stroke, the adjustable shock assembly will also meter incompressible fluid from the main chamber to the reservoir 125, to account for the addition of the piston shaft volume as the piston shaft (coupled with the main piston) moves into the compression side of the main chamber and reduces the overall volume of the compression side of the main chamber. In one embodiment, such as during a rebound stroke, the adjustable shock assembly will also meter incompressible fluid from the reservoir 125 back to the main chamber to account for the overall volume change of the main chamber as the piston shaft (coupled with the main piston) moves out of the compression side of the main chamber.

In one embodiment, the adjustable shock assembly is the rear shock assembly 38. In another embodiment, the adjustable shock assembly is the front shock assembly 37. In one embodiment, both the front shock assembly 37 and the rear shock assembly 38 are adjustable shock assemblies. In one embodiment, the adjustable shock assembly will include a mechanical spring (e.g., a helically wound spring that surrounds or is mounted in parallel with the body of the adjustable shock assembly). In one embodiment, the adjustable shock assembly will include an air spring. In one embodiment, the adjustable shock assembly will include both a mechanical spring and an air spring.

In the following discussion, the operation of the adjustable shock assembly (including any electronically actuated aspects) is described in conjunction with the rear shock assembly 38. However, this is done for purposes of clarity. It should be appreciated that in some embodiments, some, most, or all, of the discussion of the adjustable shock assembly could be applied to the front shock assembly 37, the dropper seatpost 300, an exoskeleton, a seat frame of a vehicle, an adjustable shock assembly in a prosthetic appliance, or any other devices, vehicles, and the like, where a shock assembly may be utilized.

In one embodiment, rear shock assembly 38 includes a top cap portion 100, shaft end eyelet 105, lower eyelet 110, damper body 120, air sleeve 123, and reservoir 125. In one embodiment reservoir 125 is an external or piggyback type of reservoir. In another embodiment, reservoir 125 may be an internal reservoir. In one embodiment, the use of an external reservoir is provided merely for purposes of clarity in accordance with an embodiment. In one embodiment, rear shock assembly 38 may not include an external reservoir.

In one embodiment, rear shock assembly 38 includes one or more adjustable features such as, but not limited to, a pneumatic valve 130 (e.g., a Shrader valve, Presta valve, Dunlop valve, or the like), an adjustable active valve assembly 151, a compression adjuster 161, and an adjustable rebound valve assembly 171. In one embodiment, rear shock assembly 38 includes each of the pneumatic valve 130, the adjustable active valve assembly 151, the compression adjuster 161, and the adjustable rebound valve assembly 171.

In one embodiment, the adjustable shock assembly may include fewer components, e.g., rear shock assembly 38 may not include most, some, or one of the top cap portion 100, shaft end eyelet 105, damper body 120, reservoir 125, pneumatic valve 130, adjustable active valve assembly 151, compression adjuster 161, and adjustable rebound valve assembly 171.

As described herein, the electronically adjustable component such as the active valve in the adjustable shock assembly, includes a motive component (e.g., solenoid, electric motor, stepper motor, or the like) to seat, unseat, or partially unseat a valve needle (or poppit, plug, etc.) with respect to a valve seat (or orifice, opening, pathway, etc.). Thus, in one embodiment, when one or more of the electronically adjustable valve assemblies (e.g., adjustable active valve assembly 151, compression adjuster 161, adjustable rebound valve assembly 171, and or any other active valves) of rear shock assembly 38 receive an input command, the input will cause a solenoid, electric motor, poppet, or the like to adjust one or more characteristics of one or more electronically adjustable valve(s) of the rear shock assembly 38.

In one embodiment, the input is received wired or wirelessly using communication devices and protocols such as those described in the communications discussion herein. For purposes of clarity, the communications discussion is not repeated herein. Instead, the entirety of any communications discussions provided herein is incorporated by reference for purposes of clarity.

In one embodiment, the input is received from one or more of the controller(s) and component(s), such as, but not limited to controller 39, a controller coupled with another active shock assembly, another vehicles' controller, a controller coupled with user interface 205, controller 39d of dropper seatpost 300, mobile device 95, user interface 205, another active shock assembly (e.g., front shock assembly 37), dropper seatpost 300, switch 93, sensor(s) 35, or the like.

In one embodiment, rear shock assembly 38 has a controller 39s coupled therewith. In one embodiment, controller 39s is similar in operation to the controller 39 described herein. In one embodiment, the input received by one or more of the electronically adjustable valve assemblies of rear shock assembly 38 is received from controller 39s. In one embodiment, the input is received from one or more of the controller(s) and component(s), such as, but not limited to controller 39, controller 39s, a controller coupled with another active shock assembly, a controller and/or component associated with another vehicle and/or party, a controller coupled with user interface 205, controller 39d of dropper seatpost 300, mobile device 95, user interface 205, another active shock assembly (e.g., front shock assembly 37), dropper seatpost 300, switch 93, sensor(s) 35, or the like.

In one embodiment, the motive component (e.g., solenoid, electric motor, stepper motor, or the like) of the electronically adjustable component receives power from a power source such as those described in the power source discussion herein. In one embodiment, the power source (such as power source 65, power source 65d, or the like) is coupled with the electronically adjustable component of rear shock assembly 38.

In one embodiment, rear shock assembly 38 has power source 65s coupled therewith. In one embodiment, power source 65s is similar to those described in the power source discussion herein, and as such, the type, operation, capabilities, removability, and the like of power source 65s is not repeated herein. Instead, the entirety of any power source discussion provided herein is incorporated by reference for purposes of clarity.

In one embodiment, the power source 65s is integrated with the electronically adjustable component. In one embodiment, power source 65s is located separate from the electronically adjustable component. In one embodiment, rear shock assembly 38 includes both controller 39s and power source 65s. In one embodiment, the power source 65s is integrated with the controller 39s. In one embodiment, power source 65s is located separate from controller 39s.

In one embodiment, rear shock assembly 38 may include one or more sensors (such as sensors 35), in addition to controller 39s and/or power source 65s. In one embodiment, rear shock assembly 38 may include one or more sensors (such as sensors 35), in addition to controller 39s and power source 65s resulting in a fully self-contained active rear shock assembly 38.

Although components of Figure 2C are shown in given locations in accordance with one embodiment, in other embodiments, one, some, or all of the components shown in Figure 2C could be located in other locations, one or more components could be separated into two or more pieces and dispersed, etc. The use of the locations of the components as shown in Figure 2C are indicative of one embodiment, which is provided for purposes of clarity.

Referring now to Figure 3A, a block diagram of a controller 39 is shown in accordance with an embodiment. In one embodiment, suspension controller 39 includes a sensor data receiver 305, a sensor data evaluator 310, an active valve damper adjustor 313, a transmitter 325, and a timer 315.

In one embodiment, the information from suspension controller 39 is displayed on a graphical user interface (GUI) and/or human machine interface (HMI) such as an infotainment system HMI/GUI (e.g., in-vehicle infotainment (IVI) system, or the like).

Further discussion and examples of an IVI control system and componentry are described in U.S. Patent 10,933,710, to which reference is made.

In one embodiment, the IVI system may be integrated with the vehicle structure, suspension components, suspension component controller(s) and data processing system as described in U.S. Pat. Nos. 7,484,603; 8,838,335; 8,955,653; 9,303,712; 10,060,499; 10,443,671; and 10,737,546; to each of which reference is made. In one embodiment, the IVI system could incorporate vehicle systems consisting of one or more sensor(s), imagers, active valves, active damping components, suspension system controllers and the like. The principles of patents and other documents incorporated herein by reference, may be integrated one or more embodiments hereof, individually or in combination, as disclosed herein.

In one embodiment, controller 39 receives sensor data input 301 from one or more sensor(s) 35 and outputs a suspension adjustment command 328, a suspension return command 326, and information 329.

In general, the one or more sensor(s) 35 transmit sensor data input 301 when an event that is over a threshold is identified, as part of a cycle (e.g., a heartbeat check-in, etc.), as a radio event, or the like.

In one embodiment, the sensor data 301 could be data transmitted over a wireless mesh at a predetermined and/or dynamic interval. Moreover, in one embodiment, the transmission type, transmitted information, and/or transmission rate of sensor data 301 over a regular or a wireless mesh network could be based upon connected low-power and/or high precision sensors that may/ or may not include additional microprocessors, and the like.

For example, in one embodiment, the wireless network is an intra-vehicle wireless network (such as a BAN) for data transmission between at least two components coupled with the vehicle, the at least two components including, but not limited to, at least one sensor, the controller, and at least one peripheral device (such as a smart component, switch, or the like) coupled with the vehicle. In one embodiment, the intra-vehicle wireless network is a wireless mesh network. In one embodiment, the intra-vehicle wireless network includes an intra-vehicle transmission authentication and encryption protocol.

In one embodiment, the information or data (e.g., message payload) provided in sensor data 301 will include additional information/data comprising the wireless network which is passed to and from peripheral devices in the network. Thus, in one embodiment, the wireless network communication and/or wireless mesh network will allow for information/data to be exchanged between adjacent vehicles, vehicle networks, etc. as described herein.

In one embodiment, the wireless network includes an inter-vehicle communication (IVC) wireless network for data transmission between the vehicle and at least another vehicle, between the vehicle and a mobile communications device distinct from the vehicle, between the vehicle and an infrastructure component (such as a traffic light, beacon on a stop sign, road mile marker, a benchmark, or the like). In one embodiment, the IVC wireless network is a wireless mesh network. In one embodiment, the IVC wireless network includes an IVC transmission authentication and encryption protocol.

In one embodiment, the IVC transmission authentication and encryption protocol is distinct and different from the intra-vehicle transmission authentication and encryption protocol, such that a device receiving a communication can determine the origin of the communication. In one embodiment, the origin of the communication is important depending upon the data provided in the communication. For example, a transmission that includes sensor provided information might only be verified and acted upon if it includes the intra-vehicle transmission authentication and encryption protocol (such as for security purposes discussed herein).

In one embodiment, the IVC transmission authentication and encryption protocol can include levels of trust. For example, a vehicle used by a friend may have a "trusted" IVC transmission authentication and encryption protocol that allows a sensor from the friend's vehicle to provide sensor data to the user's controller that is verified and acted upon as sensor data from a "trusted" peripheral. In contrast, when an IVC transmission includes sensor provided information but it does not have a "trusted" IVC transmission authentication and encryption protocol it would not be verified and acted upon. However, other information such as stop sign warnings, terrain changing information, or the like from IVC transmissions would be evaluated by the controller and may be used depending upon context, or the like.

In one embodiment, sensor data receiver 305 receives sensor data 301 from the one or more sensor(s) 35 (shown and described at least in Figures 1A-1B and 3B). In one embodiment, sensor data receiver 305 utilizes a database 320 (or other memory solution) to collect and store the received sensor data 301.

In one embodiment, evaluator 310 determines a value of the event identified in the sensor data, and obtains a damper setting change for at least one damping characteristic of the active valve damper related to the event value. In one embodiment, the damper setting changes for at least one damping characteristic of the active valve damper are stored in performance database 322.

For example, in one embodiment, controller 39 can evaluate what task should be performed upon receipt of sensor data 301 from the sensor(s) 35 by using evaluator 310 and information stored in performance database 322 to evaluate the event value and perform any of a number of tasks based upon the evaluation. For example, sensor data 301 could cause controller 39 to perform a task such as, but not limited to, firm up the suspension, soften the suspension, set the suspension to a predefined mapping (or suspension setup), or the like.

In one embodiment, depending upon the magnitude of the event, the receipt of sensor data 301 would cause controller 39 to instantly (or nearly instantly) soften the active suspension of one or more of the active dampers. For example, if the vehicle is about to, or is encountering an event such as a rock, root, bump, curb, pothole, or the like that causes a force above a certain threshold to be felt at the tire (such as the front tire) sensor data 301 would describe an event which identifies as an event that controller 39 should respond to by changing one or more active dampers into a softer mode (e.g., active damper assembly 37) such that the force imparted by the event would be reduced before it is felt at the handlebars (or the saddle, pedals, etc.).

In one embodiment, depending upon the magnitude of the event, the receipt of sensor data 301 would cause controller 39 to instantly (or nearly instantly) change the suspension to its firmest mode. For example, if the vehicle is about to, or is encountering an event such as an obstacle that would cause a harsh or dangerous condition (such as bottom out, roll over, or the like), sensor data 301 would describe an event which identifies as an event that controller 39 should respond to by changing one or more active dampers to a firm mode.

In one embodiment, controller 39 could be programmed with different actions to take upon receipt of sensor data 301 based on vehicle location, vehicle speed, terrain, vehicle load, or the like. For example, if controller 39 knows the vehicle is on a roadway, an event defined in sensor data 301 that is indicative of the suspension diving while the wheel is not being impacted by a force, would cause controller 39 to initiate a firming of the front suspension due to hard braking.

In one embodiment, active valve damper adjustor 313 is configured to monitor and adjust at least one damping characteristic of the at least one active valve damper (e.g., active valve damper assembly 38 and/or active valve damper assembly 37). That is, active valve damper adjustor 313 will provide suspension adjustment command 328 to at least one active valve.

In one embodiment, transmitter 325 transmits a suspension adjustment command 328 to one or more active dampers. In one embodiment, the suspension adjustment command 328 is a command for the active damper to soften. For example, sensor data 301 includes information about an event that has occurred at a wheel (such as the front wheel for example), the event is a bump or the like that is above a threshold value. When controller 39 receives the event information, it is received, evaluated, active valve damper adjustor 313 will generate the suspension adjustment command 328 to soften the damper via an adjustment to at least one active valve of the damper, the transmitter 325 will then transmit the suspension adjustment command 328 to the damper (e.g., front fork damper assembly 37).

Transmitter 325 will also transmit information 329 to sensor(s) 35 (the sensor that provided the sensor data 301), to let sensor(s) 35 know that the information was received. In other words, there is an acknowledgement and a payload.

In one embodiment, included in the information 329 may be additional information in addition to the message received indication. For example, in one embodiment, information 329 will include information such as event threshold values, upcoming changes to event threshold values, and the like. In one embodiment, information 329 will include additional communication protocols such as those described herein.

In one embodiment, timer 315 begins to toll when the sensor data 301 about the event is received. In one embodiment, the timer 315 will run for a certain amount of time. In one embodiment, the timer 315 is 0.5 seconds. However, in one embodiment, the timer could be set to another value or could be a value that is dependent upon location, terrain, or the like. In one embodiment, the length of time measured by the timer 315 is fixed e.g., set by a manufacturer. In one embodiment, the length of time measured by the timer 315 is adjustable by a manufacturer, a user, a mechanic, a technician, or the like.

Using the example where the timer is a 0.5 second timer, if no further sensor data 301 is received during the 0.5 seconds, then timer 315 will trigger a suspension return command 326 that will be transmitted to the damper (e.g., front fork damper assembly 37 in this example). When front fork damper assembly 37 receives the suspension return command 326, the active damper will dismiss the suspension adjustment command 328 override. In one embodiment, the suspension return command 326 will include information that will cause the active damper to return to its previous firmness settings, to a preprogrammed setting, to a new setting automatically determined by controller 39, to a location-based setting, a terrain-based setting, or the like.

If further sensor data 301 is received during the 0.5 seconds, then timer 315 will reset at the receipt of each new sensor data 301 (from the same sensor) and the 0.5 second countdown will begin anew. If there is no additional sensor data 301 received during the new timer countdown, then timer 315 will trigger the suspension return command 326 that will be transmitted to the damper (e.g., front fork damper assembly 37).

In other words, when encountering successive bumps above the bump threshold, the sensor sends sensor data 301 (which would in one embodiment, be an above threshold message) at a rate of 10 Hz. When the terrain smooths out, the sensor stops sending sensor data 301 and timer 315 is no longer being reset with the sensor data 301 messages. Thus, using the above example, 0.5 seconds after the last sensor data 301 is received, timer 315 will expire and the suspension return command 326 is sent.

For example, during a ride, bicycle 50 encounters really bumpy terrain for 3 seconds and then the trail smooths out. At the first over threshold bump strike, bump sensor(s) 35 sends sensor data 301 to controller 39. Controller 39 opens the suspension (e.g., softens the damping of damper assembly 37). For the next 3 seconds, the bump sensor continues to send sensor data 301 at a rate of 10 Hz. During this period, the timer 315 is resetting as each sensor data 301 packet is received. When the trail smooths out (e.g., at the 3 second mark in this example), the last sensor data 301 message will have already been sent by the sensor(s) 35. That is, after the trail smooths out, there would be no over threshold events, and thus no sensor data 301 data sent from sensor(s) 35.

Because no more sensor data 301 messages are received, timer 315 is not reset and is allowed to run down to zero. When the timer 315 finishes, e.g., after the time period had tolled (i.e. expired), the suspension return command 326 is triggered and sent by transmitter 325 to the one or more active damper components. Thus, using the above example, the suspension return command 326 is triggered and sent by transmitter 325 3.5 seconds after the first sensor data 301 message was received (e.g., 3 seconds of sensor data 301 messages plus the 0.5 second timer clock).

With reference now to Figure 3B, a block diagram of a sensor(s) 35 is shown in accordance with an embodiment. As discussed herein, in one embodiment, the bicycle 50 has wireless sensors 35 on the front and rear unsprung masses that communicate to a central controller 39. Although in one embodiment, the sensors are wireless bump sensors, in one embodiment they could be any type of wireless sensors such as one or more of those disclosed herein. Moreover, although sensors are one focus area, in one embodiment the technology can be used in any wireless peripheral where low latency and long battery life is important.

Further, in one embodiment, the acceleration (or other force) identified by event 331 is analyzed locally at the sensor(s) 35. Only when data is read that exceeds the event threshold does the sensor(s) 35 send a wireless message (e.g., sensor data 301) to the controller 39.

In one embodiment, sensor(s) 35 includes a receiver 333, an evaluator 335, a memory 336, a transmitter 338, a timer 337, and a power source 339.

In one embodiment, sensor(s) 35 generates data based on an event 331, receives information 329 from controller 39, and outputs sensor data 301 message and check-in message 340.

In one embodiment, power source 339 of sensor(s) 35 is a CR2032 battery. In one embodiment, power source 339 is a different type of non-rechargeable battery.

In one embodiment, power source 339 is a rechargeable battery. In one embodiment, power source 339 can be recharged wired or wirelessly. For example, a power source 339 having a wirelessly rechargeable capability means it could be charged using a wireless power transfer system. E.g., using an inductive charger (or the like) within a given distance of the wirelessly rechargeable capability of the battery.

Wireless charging, in its most basic form utilizes a copper coil to create an oscillating magnetic field, which can create a current in one or more receiver antennas. In general, the wireless charger could be a charging pad that use tightly-coupled electromagnetic inductive or non-radiative charging; A charging bowl or through-surface type charger that uses loosely-coupled or radiative electromagnetic resonant charging to transmit a charge a few inches; An uncoupled radio frequency wireless charger that allows a trickle charging capability at distances of many feet, or the like.

Examples of a wireless power transfer systems that could be used in one or more embodiments include those defined by the wireless power consortium (WPC) Qi standard, the AirFuel Alliance (e.g., Duracell Powermat, PowerKiss, etc.), WiTricity, and the like.

In one embodiment, power source 339 is an energy harvesting switch that does not require a battery or other powered connection. As such, the energy harvesting switch is capable of operating for an indefinite amount of time without requiring any type of recharge, battery change, etc.

In one embodiment, the energy harvesting switch utilizes a momentary generator such as ZF electronics AFIG-0007 to provide power. In one embodiment, the energy harvesting switch includes an erasable programmable read-only memory. In one embodiment, the Eprom can be written to with RF energy, NFC protocols, or the like. In one embodiment, with an Eprom in the energy harvesting switch, a user could use a mobile device, NFC programmer, or the like to modify one or more of the transmission metrics, such as check-in, information broadcast, ID requirements, encryption, and the like.

In one embodiment, sensor(s) 35 communicates wirelessly via a network such as WPAN, an LPAN, IoT connectivity, or the like. In one embodiment, the transmission protocol could be, but is not limited to, Bluetooth, WiFi, BLE, NFC, UHF radio signal, WiMax, LTE, ISM band, an IEEE 802.15.4 standard communicator, Zigbee, ANT, ISA100.11a, wireless HART protocol, MiWi, IPv6, 6LoWPAN, thread network protocol, SNAP, and the like.

In one embodiment, if the IEEE 802.15.4 standard is utilized to transmit sensor data 301, controller 39 can include an IEEE 802.2 logical link control sublayer to receive the sensor data 301 and provide its content to controller 39.

In one embodiment, if SNAP is utilized to transmit sensor data 301, controller 39 can have a universal asynchronous receiver/transmitter (UART) interface supporting RS-232 or RS-485 using TTL logic levels to receive the signal 393 and provide its content to controller 39.

In one embodiment, event threshold refers to an acceleration magnitude sufficient to trigger the suspension to go from closed to open. In other words, how big of a bump is required to make the suspension go to the open or soft mode. This is a powerful tuning parameter for the rider: with a higher bump threshold, the suspension will spend more time in the closed mode and thus feel more efficient yet less comfortable. Higher thresholds generally are associated with a more race-oriented experience. The opposite is true for lower bump thresholds. With a lower bump threshold, the suspension will spend more time in the open mode and thus feel more comfortable yet less efficient.

The event threshold value can also be a variable that is changed depending upon vehicle operations. For example, the event threshold for a bike going uphill can be different than the event threshold for a bike going across flat ground, and one or both of those event thresholds can be different than the event threshold for a bike going downhill.

In one embodiment, the event threshold value is based on vehicle location, vehicle speed, terrain, vehicle load, or the like. For example, when the vehicle is on a roadway, the suspension would be in a firmer setting and the event threshold could be low (such as an impact that causes the wheel to deflect 0.5 inches or more). In contrast, when the vehicle is on a gravel road, the suspension would be in a softer setting and the event threshold could be higher than the roadway threshold (such as an impact that causes the wheel to deflect 1 inch or more). In a highly active suspension, such as on a vehicle (e.g., mountain bike, or the like) being used off-road the event threshold could be at an even higher setting (such as an impact that causes the wheel to deflect 2 inches or more).

When the event magnitude is at or above the event threshold magnitude, it is reported by sensor(s) 35. In one embodiment, the information about the event in the sensor data 301 will include a magnitude of the event, such that the controller 39 can evaluate the magnitude and provide the proper response, e.g., softening the suspension for an event with a magnitude indicative of a bump that is within a given suspension range, firming the suspension when the event has a magnitude indicative of a bottom out situation, and the like.

In one embodiment, the sensor receives the event threshold value from the controller. In one embodiment, the threshold value along with other optional data is embedded in the response from controller 39 to sensors 35 (e.g., info 329). In one embodiment, info 329 is provided during the initial paring handshake between sensor(s) 35 and controller 39. In one embodiment, info 329 is provided by the controller as part of an acknowledgement response to a sensor data 301 message sent by the sensor(s) 35. In one embodiment, info 329 is provided by the controller in response to a check-in 340 "heartbeat" message sent by the sensor(s) 35. In one embodiment, the info 329 is sent at a 1Hz communication rate.

In one embodiment, sensor data 301 includes a unique identifier (ID) that identifies the specific sensor(s) 35 that broadcast the sensor data 301. Thus, even when a number of different sensors are operating in the same environment, the controller 39 will be able to identify which sensor(s) 35 sent the signal 393. In one embodiment, the unique ID is used during the programming/pairing of sensor(s) 35 with controller 39.

In one embodiment, the unique ID in sensor data 301 is used by controller 39 to identify a valid sensor(s) 35, and the event information in sensor data 301 is used by controller 39 to identify the associated action to be taken. Although a unique ID is used in one embodiment, in another embodiment, a different identification methodology may be used to identify the sensor(s) 35 and/or the associated action to be taken.

In one embodiment, the event threshold information, unique ID, and other sensor data is stored in an erasable programmable read-only memory (e.g., memory 336). In one embodiment, memory 336 can be written to with RF energy, NFC protocols, or the like. As such, the memory 336 could be updated via controller 39, mobile device 95, a laptop, or the like.

In one embodiment, once sensor(s) 35 sends sensor data 301, it will remain active to listen for info 329 from controller 39. In one embodiment, info 329 is an acknowledgement signal and waiting for it would be programmed as part of the transmission and operation protocol within the sensor(s) 35 operating system.

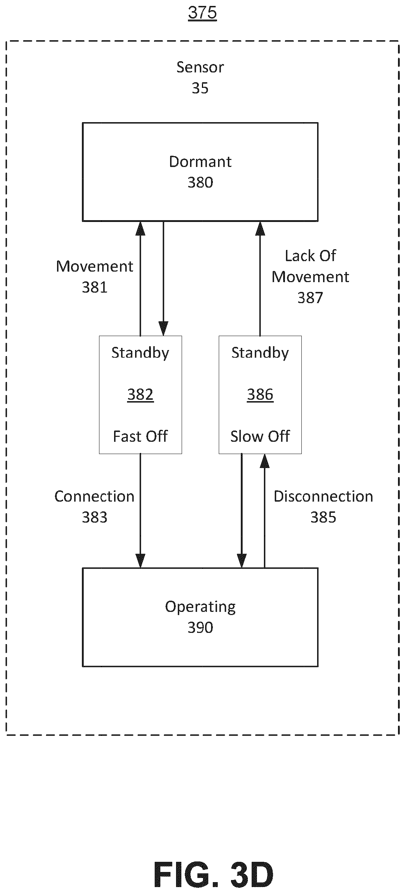

In one embodiment, once sensor(s) 35 receives info 329, the sensor would return to a lower power state that is not listening for any transmitted signals. In one embodiment, sensor(s) 35 would stay in the lower power state until an above magnitude event occurs. In one embodiment, the state of sensor(s) 35 will follow the state of flow diagram 375 of Figure 3D, and described in the discussion of Figure 3D.

In one embodiment, timer 337 of sensor(s) 35 counts down a check-in or heartbeat time period. In one embodiment, the time period measured by timer 337 is preset by the manufacturer. In one embodiment, the time period measured by timer 337 is adjustably set by the manufacturer, by the user, by a mechanic, based on the vehicle location, terrain type, or the like.

In one embodiment, when timer 337 expires, a check-in message 340 is sent from sensor(s) 35 to controller 39. The sensor(s) 35 will then listen for info 329 from controller 39. In one embodiment, once info 329 is received, timer 337 will be restarted.

In one embodiment, if there is no response to check-in message 340 with a predefined period of time, the sensor(s) 35 will send another check-in message 340. In one embodiment, if there is no response (e.g., info 329) received, the sensor will send an additional pre-defined number of check-in messages 340. If no response is received after the final check-in message of the pre-defined number, then sensor(s) 35 will move to a disconnected operational state as shown in Figure 3D and described in the associated discussion thereof.

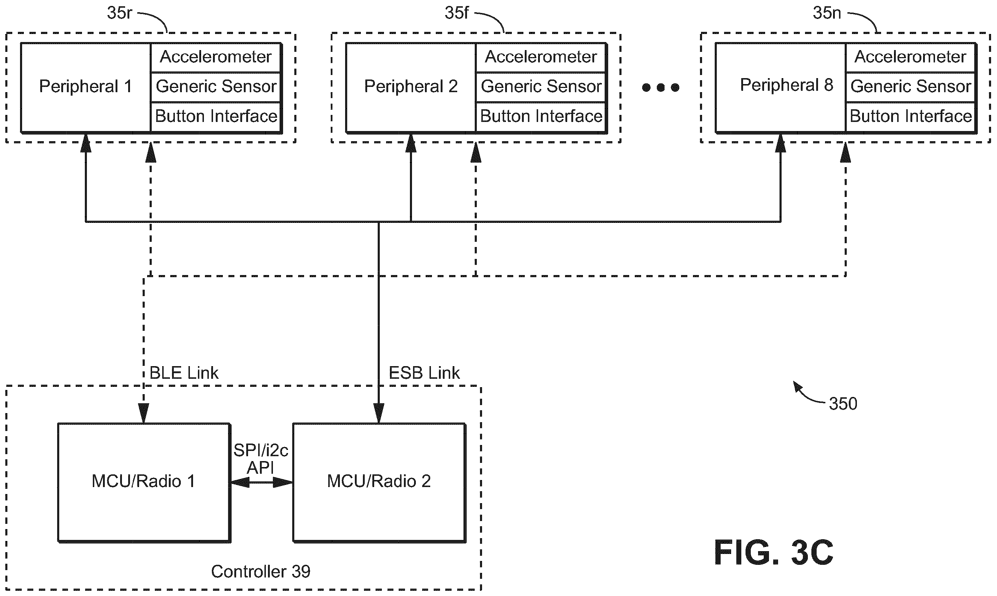

Referring now to Figure 3C, a flow diagram of a wireless communication protocol 350 is shown in accordance with an embodiment. In general, the goal of the wireless communication protocol 350 is low latency and long battery life.

In one embodiment, the network implements a proprietary low-latency low-power radio protocol to provide an effective transport for communication between sensors (such as the rear bump sensor(s) 35r, front bump sensor(s) 35f, handlebar switch 93, another sensor(s) 35n, and the like) (hereinafter "sensor(s) 35" for purposes of clarity) and the controller 39. In one embodiment, controller 39 acts in the receive role, always listening for messages from the sensor(s) 35. The sensor(s) 35 act in the transmit role, staying asleep until some time-sensitive data is ready to be sent (such as an at or above threshold event, a heartbeat check-in, or the like). When that data is ready to be sent, the sensor(s) 35 sends it, then, immediately after, listens for a response (e.g., info 329) from the controller 39. In one embodiment, the controller 39 will always try to respond with an acknowledgement, and optionally, some data in the response (e.g., info 329) back to the sensor(s) 35. After this exchange is complete, the sensor(s) 35 turns its radio off until the next time it wishes to send something to the controller 39.

In one embodiment, while the sensor(s) 35 radio is turned off, the controller 39 will know that any message sent to sensor(s) 35 will not be received. This means that the controller 39 can only send data to the sensor(s) 35, immediately after it receives a message (e.g., sensor data 301 and/or check-in 340) from sensor(s) 35. In so doing, the radio-on time on for sensor(s) 35 is minimized. Minimizing the radio-on time, reduces overall power consumption thereby providing a low latency connection from the sensor(s) 35 while still maintaining long battery lifetimes on the sensor(s) 35.

In one embodiment, if the sensor(s) 35 has no data to send to the controller 39, it will periodically send a heartbeat (e.g., check-in 340), to provide the controller 39 with a means of communicating with the sensor(s) 35, as well as informing the controller 39 that the sensor(s) 35 is still active, and further confirming by sensor(s) 35 that there is still a connection with controller 39.

In one embodiment, the microprocessor on the sensor(s) 35 includes a radio capable of standard BLE and other communication as part of the ISM Band technologies. In one embodiment, sensor(s) 35 uses Enhanced ShockBurst (ESB). In one embodiment, the microprocessor on the sensor(s) 35 built in radio protocol could be, but is not limited to, WiFi, NFC, UHF radio signal, WiMax, LTE, ISM band, an IEEE 802.15.4 standard communicator, Zigbee, ANT, ISA100.11a, wireless HART protocol, MiWi, IPv6, 6LoWPAN, thread network protocol, SNAP, and the like.

In one embodiment, controller 39 of Figure 3C has two wireless radios MCU radio 1 and MCU radio 2. In one embodiment, MCU radio one handles wireless communication with peripherals where latency and/or battery life is not a concern. For example, MCU radio one could communicate with devices such as other controllers, mobile device 95 or an app thereon, a power meter, or the like where ~ 200 msec latency is not a problem.

In one embodiment, there are any number of BAN, wireless mesh, wired mesh, wired and wireless mesh networks supported by one or a plurality of MCU radios. The use of 2 radios is discussed herein for purposes of clarity and identifying how two or more radios could operate within the network.

Moreover, in one embodiment, the way the radios interact with one another doesn't necessarily have to be only over SPI or I2C. In contrast, in one embodiment, the radio(s) could work with other radios across their own networks, partial mesh networks, only secure networks, only unsecure networks, etc.

In one embodiment, MCU radio two handles the ESB communication and is dedicated to any low latency/low power devices such as front and rear bump sensors 35 and handlebar switch 93. This radio is always listening for a message from the bumper sensors 35.

In one embodiment, having two radios operating as shown in Figure 3C is suboptimal from a battery life standpoint, but, in one embodiment, the controller 39 houses a relatively large rechargeable battery capable of running the suspension solenoids. Thus, the expectation for the controller battery burn time is hours not months. In one embodiment, the amount of power draw from the "always-listening" ESB radio is insignificant. However, the always-listening is key for low latency communication.

For example, when the bump sensor has a message to send, it can be nearly instantaneously received by the controller (or within 2 msec). It can be this quick because the central controller does not have to wake up and try to bond with the sensor (a strategy normally employed to conserve battery life). It is already awake and ready.

In one embodiment, the operation of the wireless communication protocol 350 is to pair the sensor(s) 35 to the controller 39. In one embodiment, the operation of the wireless communication protocol 350 will also include connecting peripheral devices in the network into the wireless network communication and/or wireless mesh network. In one embodiment, the operation of the wireless communication protocol 350 will allow for information/data to be exchanged between adjacent vehicles, vehicle networks, etc. as described herein.

### Security

In one embodiment, the wireless communication pairing is made resistant against attempts made by unauthorized actors trying to attack and control the system by performing authentication and encryption between the wireless components. In general, examples of system attacks include, but are not limited to, replay attacks, impersonation, denial of service, and the like.

In one embodiment, replay attacks refers to actions such as, but not limited to, an attacker recording one or more of the messages and playing them back to the device which mistakenly interprets them as valid messages from the sensor(s).

In one embodiment, impersonation refers to actions such as, but not limited to, an attacker pretending to be a sensor, and sending one or more messages directly to the controller 39.

In one embodiment, denial of service refers to actions such as, but not limited to, an attacker sending one or more specially crafted messages that stop the system from working. Although a number of examples of system attacks are discussed herein, the examples are not exhaustive. In contrast, it is possible, and should be appreciated, that other types of system/communication attacks may be utilized.

In one embodiment, the authentication and encryption between the wireless components includes the utilization of AES 128, or the like. For example, in one embodiment, the pairing procedure sets up all state required for the radio protocol to be secure, including the AES-128 symmetric key. Whenever a device - sensor(s) 35, controller 39, switch 93, a peripheral, or the like - is turned on, it generates a session-specific 4-byte nonce using a secure random number generator. This nonce is included in all communication between devices.

Within a single session, each device also stores a 4-byte sequence number, that starts at 0, and increments for every transmitted message. The AES-128 block cipher is operated in the Authenticated Encryption with Associated Data (AEAD) scheme, which allows encrypting the given plaintext, and authenticating associated plain text data. The AEAD scheme requires a 13-byte nonce value, referred to herein as AEADNonce. When the AES-128 symmetric key, and AEADNonce are unique for every packet, the connection is secured.

In one embodiment, the AEADNonce is constructed by concatenating the nonce of each device with the sequence number of the particular packet, for a total of 12 bytes, with the 13th byte padded with 00. This ensures the AEADNonce is unique, and the connection is therefore secure. In one embodiment, the application does not accept any packet which it receives that has a sequence number earlier than another packet it has already received. This ensures that replay attacks are not possible. To generate new packets with a valid sequence number, the attacker must know the AES-128 symmetric key.

In one embodiment, to perform this activity, any of a number of different communication protocols may be used. In one embodiment, once the pairing is completed and each component (e.g., peripherals 1, 2, and 8 for example) has the keys, the communication operation is turned over to ESB, BLE, or the like, for the fast-communication battery-saving state.

In one embodiment, the pairing of one or more of the sensors, controller(s), peripherals and the like, coupled with the vehicle is performed via an out-of-band method such as a proximity detection (e.g., any devices within a certain distance where the distance is defined by the size of the vehicle, an acoustic and/or ultrasonic technique that resonates through the vehicle (e.g., frame, body, etc.) to identify any devices attached to the vehicle, and the like.

In one embodiment, one or more of the sensors, controller(s), peripherals and the like that are coupled with the vehicle may be paired via a UI aspect. For example, when a device (e.g., a sensor, peripheral, etc.) is added to a vehicle, the device will automatically initiate the pairing process.

### Wireless communications

In various embodiments, communication between the components uses wireless communications such as described herein. In one embodiment, those wireless communications are Bluetooth communication channels. In one embodiment, the communications can use one, some, or all of the different Bluetooth channels to transmit and receive information. However, in some embodiments, where a larger data packet does not need to be communicated, the wireless communication can use smaller packed data transmission capabilities at higher transmission rates, such as available on Bluetooth 5 protocol. Thus, one embodiment, using the Bluetooth 5 protocol, allows the components on the vehicle to use a smaller data packet size with increased speed to provide a faster transmission rate between components.

For example, Bluetooth Low Energy (LE) uses 40 different frequency channels (PHY channels), separated by 2 MHz. Three of these channels are labeled primary advertisement channels, while the remaining 37 channels are for secondary advertisements and data channels for transfers during a connection. In general, advertisements are used by devices to broadcast data and info for other observer devices to discover and process. It allows the device to broadcast this information for multiple devices to discover without a connection between the observers and broadcaster.

The three primary advertisement channels (e.g., channels 37, 38 & 39) are divided into advertising events where each event can occur on each of the 3 advertising PHY channels (or a subset). In one embodiment, consecutive events start with the first advertising PHY channel (e.g. if advertisements start with channel 37, then each event will start with an advertisement packet sent on channel 37).

In contrast, secondary advertisement channels (e.g., same as the data channels used during a connection - channels 0-36) are not part of the advertisement event, but rather part of the extended advertisement event. These begin at the same time as the advertisement event on the primary channel and end with the last packet on the secondary channel. The secondary channels are used to offload data that would otherwise exist on the primary channel (e.g., auxiliary packets). In general, an advertisement packet on the primary channel contains the PHY channel and the offset to the start time of the extended advertisement packet. The secondary advertisement channel can use any LE PHY (Uncoded 1M PHY, Uncoded 2M PHY, or Coded S=8 or S=2 PHY). For example, advertisements will start with advertisement packets sent on the 3 primary channels (or a subset of these channels). Extra information can then be offloaded to the Secondary advertisement channels to allow for more data to be broadcast.

Bluetooth 5 utilizes extended advertisements, e.g., a way to advertise more (offloaded) data than what's allowed with legacy advertisements. In general, offloading is accomplished by first advertising on the primary channel that points to an auxiliary packet on the secondary channel. As such, advertising sets are used to send out different types of advertising events simultaneously. Each advertisement set will have different advertisement parameters such as advertising PDU type, advertising interval, and PHY.

When advertising on the LE Uncoded 1M PHY, scan requests and responses can take place on the same PHY channel as the original advertisement or be offloaded to the secondary channel. In some cases when advertising on the Uncoded PHY, connection requests and responses are offloaded to the secondary channel.

When advertising on the LE Coded PHY, scan requests, scan responses, connection requests, and connection responses are always offloaded to the secondary channel.

Another feature of Bluetooth 5 extended advertisements are periodic advertisements. These are used for broadcasting packets to devices at a set period between two unconnected devices, meaning that more than one device can listen and tune in on these periodic advertisements. They consist of advertisements sent at a fixed interval with the advertisement data changing from time to time.

For example, the primary advertisement channel is used to transmit an ADV_EXT_IND PDU type which holds information (Time offset, PHY...etc.) that can be used to find an AUX_ADV_IND PDU packet. That packet, in turn, contains a SyncInfo field which defines the data needed to synchronize to periodic advertisement packets (e.g., AUX_SYNC_IND and AUX_CHAIN_IND) in a way similar to how connections are formed (channel map, hop sequence, which PHY...etc.).

Therefore, a scanner can target an advertising device by first discovering the advertisement event on the primary channel, and then tuning into the appropriate secondary channel and timing based on information sent in the primary advertisement packet.

In one embodiment, connectable devices can utilize the extended advertisements to send more data and allow connections on the secondary advertising channels, which can help avoid interference and noise from other devices broadcasting on the primary channels. Moreover, using periodic advertisements can help in making the broadcasting device more consistently discovered and monitored, with the possibility of the broadcast data being updated to reflect certain attributes and aspects of the broadcasting device. For example, in the case where a scanning device is always present in the proximity of a broadcasting device, now this scanning device can more consistently "follow" the advertiser and monitor its updates more frequently.

In one embodiment, the higher throughput is achieved when the components in communication with each other are using the new LE 2M PHY. In addition, when utilizing the higher speed PHY, a lower power consumption is achieved (for a transfer of the same amount of data). This is due to the radio-on time being reduced without the transmit power being increased. The reduced radio-on time, in turn, improves coexistence with other wireless technologies within the 2.4 GHz spectrum as crosstalk opportunities are reduced.

In one embodiment, the LE data packet includes a preamble (1 byte-1M PHY, or 2 bytes-2M PHY), access address (4 bytes), PDU (2-257 bytes) and CRC (3 bytes). In one embodiment, PDU can be further broken down into an LL header (2 bytes), a payload (0-251 bytes), and an optional MIC (4 bytes). In one embodiment, the payload can be further broken down into L2CAP header (4 bytes) and ATT data (0-247 bytes). In one embodiment, the ATT data can be further broken down into ATT header (1-3 bytes) and ATT payload (up to 244 bytes). In one embodiment, the ATT header can be further broken down to an op code (1 byte) and an attribute handle (2 bytes).

In one embodiment, it is the ATT payload in Bluetooth 4.2 and 5 that increases the maximum ATT payload from 20 bytes (legacy) to up to 244 bytes of data using data length extensions (DLE).

As described herein, in one embodiment, higher throughput is also obtained by using "write without response or notifications" to transfer the data from the client to the server and from the server to the client. These operations remove the need for the other device to acknowledge receipt of the data and respond before the next block of data can be sent.

In general, there are a few factors that impact the data throughput of a BLE application including: PHY being used (LE 1M vs. LE 2M vs. LE Coded (S=2 or S=8)), connection interval, maximum number of packets per connection interval, ATT Maximum Transmission Unit (ATT MTU), DLE, operation type: e.g., write with response vs. write without response, indications vs. notifications, inter frame space (IFS): time gap between consequent packets (150 us), transmission of empty packets, packet overhead - not all bytes, in a packet, are used for the application payload, and the like.

In general, there are three PHYs in Bluetooth 5: the original 1 Mbps PHY, the new 2 Mbps, and the coded PHY (with S=2, or S=8). The PHY used will directly impact the maximum achievable data throughput as it determines the actual raw data rate in which packets are sent over the air.

The connection interval effectively determines how many packets can be sent during one connection event. The higher the value, the more packets can be sent in one connection event.

ATT MTU Determines the max amount of data that can be handled by the transmitter and receiver and which they can hold in their buffers. For example, with DLE enabled, the data transfer can be up to 251 - 4 = 247 bytes (after deducting the L2CAP Header size). After taking into account the ATT header (3 bytes), there are a remaining 244 bytes for the actual ATT payload data. If the MTU is at least 247 bytes then the MTU will fit into one single packet. If the MTU is greater than 247 bytes, then the MTU will span multiple packets causing the throughput to go down (because of the packet overhead and timing in between the packets).

IFS is the time interval between two consecutive packets on the same channel index. It is defined as the time from the end of the last bit of the previous packet to the start of the first bit of the subsequent packet (presently 150 ms).

In general, the Bluetooth version and PHY determine the raw data transfer rate. For example, using Bluetooth version 4.2 and the LE 1M PHY the transfer rate is at 1 Mbps. In contrast, using the Bluetooth 5 LE Coded PHY with S=8, the data rate goes down to 125 kbps.

The DLE, ATT MTU, connection interval, the maximum number of packets per connection interval, Operation, and IFS all determine the portion of the on-radio time that's utilized for actual data transfer.

In one embodiment, to optimize data throughput, DLE is enabled, LE 2M PHY is used, notifications and writes without responses is enabled, the ATT MTU value is set to be at least greater than 247 bytes, and the connection interval is set to allow for the maximum number of packets per connection interval.

In one embodiment, the wireless network includes a number of wireless communications protocols and optimization capabilities (e.g., communications optimizers or optimizations) to enhance the throughput, increase battery life, sort the relevance of overlapping communications, and the like.

In one embodiment, the wireless communications protocols and optimization capabilities provide a single radio protocol comprising dynamic parameters configured to adjust one or more parameters based on a real-time traffic communication versus a non-real-time traffic communication. In one embodiment, the wireless communications protocols and optimization capabilities provide a multiple radio protocol comprising dynamic parameters configured to adjust one or more parameters based on a real-time traffic communication versus a non-real-time traffic communication. In one embodiment, the wireless communications protocols and optimization capabilities use frequency-domain multiplexing to provide different logical transports for a real-time traffic communication versus a non-real-time traffic communication. In one embodiment, a first radio protocol is used for setup and a second radio protocol is used for low latency communications.

In one embodiment, the wireless communications protocols and optimization capabilities provide intelligent adjustment of radio operating parameters, where the parameters to be adjusted include, but are not limited to, a transmission power, a receiver sensitivity, and the like, in order to optimize battery life based on a link reliability, an interference potential, an interference susceptibility, and the like.

In one embodiment, the wireless communications protocols and optimization capabilities use an intelligent transmission scheduler to schedule activity for at least two components of the network.

In one embodiment, the wireless communications protocols and optimization capabilities use adaptive techniques to perform acts such as data minimization and link scheduling to reduce a power consumption and/or a transmission latency.

In one embodiment, the wireless communications protocols and optimization capabilities utilize communication interference resolution techniques such as frequency hopping, spread spectrum operations, code-division multiple access (CDMA), global system for mobiles (GSM), and the like to maintain BAN, intra-vehicle, and or inter-vehicle communication operations in a busy environment (e.g., at a race, gathering, rally, ride, festival, or the like). For example, when a plurality of different vehicles are within the same vicinity/spectrum and some or all of the vehicles have wireless communications occurring thereon.

In one embodiment, the communications module is a BMD-350. Although a BMD-350 module is disclosed herein as one embodiment of a communications module used in the present discussion, it should be appreciated that another embodiment may utilize a different communications module and/or different components, protocols, and the like.

In general, BMD-350 is a stand-alone Bluetooth 5 low energy (LE) module that can be used individually or as part of a Bluetooth mesh. BMS-350 is an ultra-low power module based on the nRF52832 SoC from Nordic Semiconductor. BMD-350 has an Arm^{®} Cortex^{®}-M4 with FPU 32-bit processor, embedded 2.4GHz transceiver, and integrated antenna, to provide a complete RF.

BMD-350 includes an AES-128 security capability. The available LE connections include, concurrent central, observer, peripheral, and broadcaster roles with up to twenty concurrent connections along with one Observer and one Broadcaster (S132).

BMD-350 radio frequency range is 2.360 GHz to 2.500 GHz; the modulations are gaussian frequency-shift keying (GFSK) at 1 Mbps, 2 Mbps data rates. BMD-350 has a transmit power +4 dBm maximum, a receiver sensitivity -96 dBm (LE mode), and a ceramic chip antenna (1 dBi peak).

BMD-350 with the nRF52832 SoC supports the S132 (Bluetooth low energy Central and Peripheral), S212 (ANT) and S312 (ANT and Bluetooth low energy) SoftDevices.

BMD-350 current consumption are defined for the following settings:
(1) transmit (TX) only @ +4 dBm, 0 dBm @ 3V, DCDC enabled 7.5 mA, 5.3 mA.
(2) TX only @ +4 dBm, 0 dBm 16.6 mA, 11.6 mA.
(3) receive (RX) only @ 1 Mbps @ 3V, DCDC enabled 5.4 mA.
(4) RX only @ 1 Mbps 11.7 mA.
(5) central processing unit (CPU) @ 64 MHz from flash, from RAM 7.4 mA, 6.7 mA.
(6) CPU @ 64 MHz from flash, from RAM @ 3V, DCDC 3.7 mA, 3.3 mA.
(7) System Off, On 0.3 µA, 1.2 µA.
(8) Additional current for RAM retention 30 nA / 4 KB block.

In one embodiment, once the bumper sensor(s) 35 are connected to the controller 39, the ESB protocol (or similar ISM Band Technology) takes over. For example, as discussed herein, sensor(s) 35 periodically send a heartbeat message (e.g., check-in 340) to controller 39 to make sure the system is working properly. When the controller 39 responds to the heartbeat, it embeds configuration information back to memory 336 of the sensor(s) 35. This can include event magnitude threshold information for instance along with any other message.

In one embodiment, as sensor(s) 35 is operating it is reading the acceleration data at high frequency and also knows the event threshold value. When data comes in above the event threshold value, sensor(s) 35 sends sensor data 301 (e.g., an above threshold message) to the controller 39.

Since the controller 39 is always listening for a message from the sensor(s) 35, the controller will receive the message at the speed of the message being sent. In one embodiment, controller 39 will send info 329 (e.g., an acknowledgement message) back to the sensor(s) 35 which will be in a listening window. In one embodiment, embedded in info 329 is also the desired event threshold. This gives the controller two opportunities to update the sensors: through the periodic heartbeat acknowledgement and through the above threshold acknowledgement.

In one embodiment, when in bumpy terrain with successive above threshold acceleration events, the sensor(s) 35 will send sensor data 301 messages at a rate of 10Hz (for example). Although the rate of 10Hz is used herein, in one embodiment, the message rate could be higher or lower than 10Hz.

In one embodiment, when the terrain is less bumpy and the acceleration events are below the event threshold, the sensor(s) 35 will not send any sensor data 301 messages to the controller 39.

In one embodiment, the communication latency is approximately 2.2 milliseconds. For example, the communication latency will include the Accelerometer I2C at 100 kHz which is approximately 1000 microseconds, the encryption is approximately 610 microseconds, and the time from transmission to usable data at controller 39 (includes radio time and decryption) is approximately 545 microseconds.

Sometimes a message will not be received properly by the controller 39 and an associated acknowledgement message (e.g., info 329) will not be returned to the sensor(s) 35. A message resend is then initiated. Each message resend attempt adds an average of 0.5 milliseconds latency. For example, if sensor(s) 35 does not receive an acknowledgement message (e.g., info 329) from the controller 39 within a given amount of time, the sensor(s) 35 sends the info 329 message again. For example, assume a 10% chance of message failure. In this case, there is a 10% chance of needing a second message attempt, a 1% chance of needing a 3rd message attempt, and a .1% chance of needing a 4th message attempt. Each message attempt adds about 0.5 milliseconds latency, so even a 4th message attempt will be within the "feel it at the handlebar" latency period.

Referring now to Figure 3D is a flow diagram 375 of a number of states of the sensor in accordance with an embodiment. In one embodiment, the sensor can be in a number of different states to conserve battery life. Flow diagram 375 is one embodiment, that includes three states for the bump sensor(s) 35 to utilize to conserve battery life. Although flow diagram 375 includes 3 states, in one embodiment there may be more or fewer energy states. The use of three states is provided herein as one embodiment and for purposes of clarity.

In the operating state 390, the sensor(s) 35 is operating. This is the highest battery power consumption state. In the operating state 390, the sensor(s) 35 is operating as shown in Figure 3B. That is, the sensor(s) 35 is receiving movement 381 from an event 331, determining if the event 331 meets or exceeds the report threshold, and if the event 331 meets or exceeds the threshold then sensor(s) 35 user transmitter 338 to provide the sensor data 301 to controller 39. When the controller 39 replies with information 329, the sensor(s) 35 knows that there is a connection 383 with controller 39.

In standby state 382, sensor(s) 35 is awake and measuring accelerations and the sensor has a connection 383 with main controller 39. In standby state 382, the sensor is monitoring for any acceleration event(s) 331 that meet or exceed the predefined threshold. If an event does meet or exceed the pre-defined threshold, then sensor(s) 35 will move into operating state 390 and transmit the sensor data 301 to controller 39. When main controller 39 responds to the transmission from the sensor(s) 35 with information 329, sensor(s) 35 will know that there is a connection 383 with controller 39, that the event has been received by controller 39, and that sensor(s) 35 can return to standby state 382 until the next occurrence of an event 331 that meets or exceeds the threshold.

In contrast, if an event does meet or exceed the pre-defined threshold, then sensor(s) 35 will move into operating state 390 and transmit the sensor data 301 to controller 39. However, the sensor(s) 35 does not receive information 329 from the controller 39. In other words, the sensor(s) 35 is getting no acknowledgements from the controller 39. In one embodiment, sensor(s) 35 will include a programmed pre-defined number of attempts at transmitting the sensor data 301 to controller 39 before making the determination that there is a disconnection 385 in the communication between the sensor(s) 35 and the controller 39.

In one embodiment, the pre-defined number of attempts is based on the transmission rate. For example, in one embodiment, we will assume that it takes 0.5 milliseconds of time for the sensor to sense an event 331, determine the event is larger than the predefined threshold, transmit the sensor data 301 to controller 39, for controller 39 to transmit the info 329 (e.g., a message received transmission to sensor(s) 35) and also transmit suspension adjustment command 328 to modify the damper setting (e.g., soften the damper using active valve 450) to the active valve 450, the active valve 450 to modify the damper setting.

If the time between the event 331 occurring (e.g., the front wheel hitting a bump) and the bump being felt by the rider at the handlebars is 1.5 milliseconds, then the pre-defined number of attempts taken by the sensor would be 3. Thus, the sensor will have tried as many times as possible (e.g., 0.5 x 3) to send the information before the event was transmitted to the rider via the handlebars.

In one embodiment, the number of times the sensor tries could be more or less. The use of three attempts is used in one embodiment. In another embodiment, the sensor could continue to send the message until the bump is felt by the rider at the saddle (e.g., 3 milliseconds), till the rear tire passes the same event, or the like.

In one embodiment, if there are a number of events 331 that are continuing to occur, the sensor will send the sensor data 301 for each event. In one embodiment, the number of times the sensor(s) 35 repeats the sending of the sensor data 301 for each individual event can depend upon the time interval between events.

For example, a first event 331 causes sensor(s) 35 to send sensor data 301, sensor(s) 35 does not receive a response (e.g., info 329) from controller 39 within the 0.5 millisecond window, and thus resends the first event sensor data 301. At 0.8 milliseconds, a second event 331 occurs that is also above the threshold, at that time, and in one embodiment, the sensor(s) 35 will now send the second event sensor data 301 at the 0.8 millisecond mark and reset the timing such that the first event sensor data is no longer being sent and instead the second event sensor data 301 is repeated 0.5 seconds after the first broadcast of the second event sensor data 301. Thus, in one embodiment, if a new at or over threshold event occurs, the sensor(s) 35 will send the latest event sensor data 301 and discard the sending/transmitting of any prior event sensor data.

In one embodiment, once the sensor(s) 35 determines that the controller 39 is turned off (or otherwise not responding to the transmissions), sensor(s) 35 will enter standby state 386 (e.g., an intermediate battery power consumption state), where sensor(s) 35 is awake and measuring accelerations but there is a disconnection 385 between sensor(s) 35 and main controller 39. In one embodiment, once in standby state 386, even if an above threshold event 331 occurs, sensor(s) 35 will not move to operating state 390. Instead, sensor(s) 35 will continue under the premise that controller 39 is turned off, or is otherwise not responding to sensor(s) 35 with information 329.

In one embodiment, when in standby state 386, sensor(s) 35 will try to connect with controller 39 each time a threshold event 331 occurs. In one embodiment, when in standby state 386, sensor(s) 35 will only try to connect with controller 39 at predefined times such as when timer 315 determines that it is time to send a heartbeat to controller 39. In one embodiment, when in standby state 386, sensor(s) 35 will try to connect with controller 39 each time a threshold event 331 occurs and try to connect with controller 39 at predefined times such as when timer 315 determines that it is time to send a heartbeat to controller 39.

In one embodiment, sensor(s) 35 will remain in standby state 386 until the connection 383 with controller 39 is established, or until sensor(s) 35 determines there is a lack of movement 387.

In one embodiment, if sensor(s) 35 determines that the connection 383 with controller 39 is established (or re-established), sensor(s) 35 will transition from standby state 386 to standby state 382.

In one embodiment, if sensor(s) 35 determines there is a lack of movement 387, sensor(s) 35 will transition from standby state 386 to dormant state 380.

In dormant state 380, the bike is stationary and the sensor(s) 35 are reading no accelerations, e.g., a lack of movement 387. For instance, the bike is in storage or otherwise parked and not being ridden. In one embodiment, when in dormant state 380, the sensor(s) 35 go into low-power mode. In one embodiment, while in dormant state 380, the sensor(s) 35 will periodically wake up to check for accelerations (e.g., the bike is being ridden) or movement 381. If there is a lack of movement 387 (or accelerations), sensor(s) 35 will remain in the dormant state 380, e.g., go back to sleep.

In contrast, if the sensor(s) 35 determines that there is movement 381 (or accelerations) during the periodic wakeup, sensor(s) 35 will change from dormant state 380 into standby state 382.

Thus, in one embodiment, sensor(s) 35 can move between the different states fluidly using the model described above. In one embodiment, sensor(s) 35 will try to remain in (or return to) the lowest powered state for the specific situation.

In one embodiment, based on the different states described above, the estimate of battery life for power source 339 in sensor(s) 35 is determined using a duty cycle such as, for example, 2 hours per ride, 4 rides per week, 48 weeks per year.

In one embodiment, the power draw for each state is approximated as an average of 150 microamp draw during the active state (e.g., operating state 390), an average of 32 microamp draw during the standby state (e.g., 382 and/or 386), an average of 1 microamp draw during the dormant state 380.

In one embodiment, power source 339 of sensor(s) 35 is a CR2032 battery. In a CR2032 battery, the capacity is approximately 173 mAh. As such, and based on the power draw for each state and the duty cycle example above, the expected battery life of the power source 339 of sensor(s) 35 is 23 months. In one embodiment, if the duty cycle is different, the lifespan of the power source 339 will be different.

In one embodiment, a different power source 339 with a different capacity can be used. For example, to fit a smaller (or lighter) power source 339, a larger power source 339, or the like. For example, a road bike rider may want a smaller (or lighter) sensor as the reduction of weight is one of the most important goals. As such, the rider could use a sensor(s) 35 with a smaller power source 339 and therefore swap the battery life (e.g., reduce the battery life from 23 months to a lower life span e.g., a few months, weeks, or the like), in order to obtain a weight savings.

In contrast, an avid mount bike rider may have a harder duty cycle, with more time of sensor(s) 35 being in operating state 390, as such, the expected battery life for power source 339 would be reduced by the actual operation of sensor(s) 35.

### Dropper Seatpost

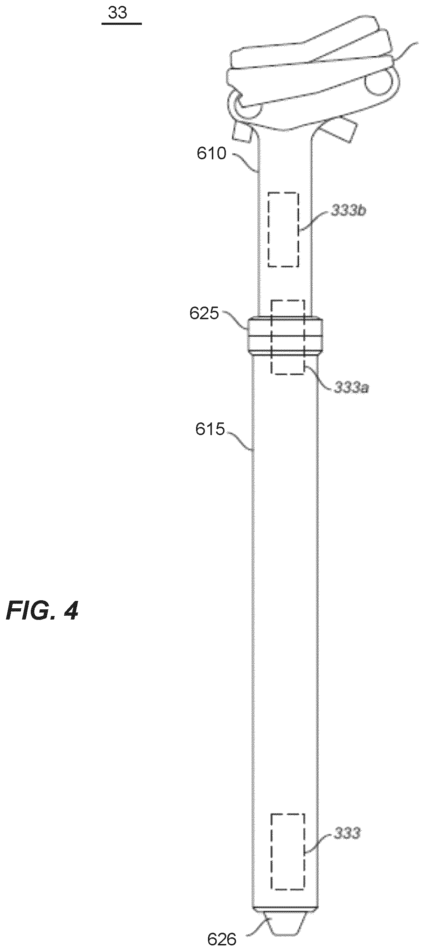

With reference now to Figure 4, a perspective view of a dropper seatpost 33 coupled with a saddle clamp assembly 650 is shown in accordance with an embodiment. In one embodiment, the dropper seatpost 33 includes an upper post 610, a lower post 615, an electronically adjustable valve assembly 333 (including a rotary flow control valve or the like) and a bottom 626.

The upper post 610 and the lower post 615 are telescopically coupled together to form the seatpost portion of the dropper seatpost 33. In one embodiment, the upper post 610 includes the saddle clamp assembly 650 at a top thereof (e.g., at the end (or close to the end) of the upper post 610 opposite the end of the upper post telescopically coupled with the lower post 615). In one embodiment, the lower post 615 is inserted into and then fixedly coupleable with the seat tube 83 of main frame 24.

In one embodiment, the electronically adjustable valve assembly 333 controls the telescoping capability of the upper post 610 and lower post 615 configuration, such that a user can operate a control lever (e.g., user interface 205 shown in Figure 2) to "drop" the dropper seatpost 33 to a lower setting (e.g., the saddle clamp assembly 650 is approximately at the top of the lower post 615), and then use the same control lever to "return" the dropper seatpost 33 to its preset ride height. This two-position capability allows a rider to have a preferred saddle ride height and also a lowered saddle height for traversing downhills, bumpy terrain, while standing on the pedals, or the like. Although two positions is discussed, the dropper seatpost 33 could be adjustable to any number of different ride height positions, the use of two positions is discussed herein for purposes of clarity.

In one embodiment, the amount that dropper seatpost 33 extending from the main frame 24 can be adjusted. In general, dropper seatpost 33 may be made of various materials, such as, but not limited to: steel, aluminum, titanium, carbon fiber, and aluminum wrapped in carbon fiber.

In one embodiment, the electronically adjustable valve assembly 333 includes a wired communication and actuation capability. For example, in one embodiment, the electronically adjustable valve assembly 333 is used as an actuator in a dropper seatpost 33 where the drop function is actuated via a wired connection between the electronically adjustable valve assembly 333 and a user interface 205 (and/or mobile device 95, switch 93, controller 39, and the like).

In one embodiment, the electronically adjustable valve assembly 333 includes a wireless communication and actuation capability. For example, in one embodiment, the electronically adjustable valve assembly 333 is used as an actuator in a dropper seatpost 33 where the drop function is actuated via a wireless remote connection between the user interface 205 (and/or mobile device 95, switch 93, controller 39, and the like) and a motive component used to power a flow control valve of the electronically adjustable valve assembly 333.

In one embodiment, the dropper seatpost 33 doesn't move under electrical power, but instead, the opening or closing of the electronically adjustable valve assembly 333 used in the dropper seatpost 33 is what receives the signal and utilizes the electrical power. The actual compression of the dropper seatpost 33 is caused by the rider's body weight on the saddle and the return of the dropper seatpost 33 is provided by a spring return force (or the like).

In one embodiment, using wireless communication devices and protocols such as those described in the communications discussion herein, which for purposes of clarity is not repeated, but instead the entirety of any communications discussions provided herein is incorporated by reference, the wirelessly electronically adjustable valve assembly 333 used for the dropper seatpost 33 will respond to the remote input as fast or faster than a cable actuated dropper seatpost 33. In other words, in one embodiment, the time lag, from the signal initiation by the rider using the wireless user interface until the wireless command is received and acted on by the electronically adjustable valve assembly causing the response in the dropper seatpost 33, is smaller than a user perceptible delay.

In one embodiment, using wired communication protocol such as, but not limited to, those disclosed herein, the wired electronically adjustable valve assembly 333 used for the dropper seatpost 33 will respond to the input from the user interface 205 (and/or mobile device 95, switch 93, controller 39, and the like) as fast or faster than a cable actuated dropper seatpost 33.

In one embodiment, the electronically adjustable valve assembly 333 uses small and light componentry with a focus on both the minimizing of power requirements resulting in a long battery life and the minimizing of the weight/rotational inertia of the electronically adjustable valve assembly. In one embodiment, such as in a dropper seatpost 33, the packaging envelope for the electronically adjustable valve assembly should be smaller than the diameter of the seat tube 83 within which the dropper seatpost 33 is to be installed.

In one embodiment, the operation of the electronically adjustable valve assembly 333 is provided in the context of a dropper seatpost 33. However, in another embodiment, the electronically adjustable valve assembly 333 may be used in other active valve suspensions and components, to include other hydraulic applications such as a fork, shock, brake, etc. Embodiments of different active valve suspension and components that may utilize the electronically adjustable valve assembly are disclosed in U.S. Patents 8,838,335; 9,353,818; 9,682,604; 9,797,467; 10,036,443; 10,415,662; to each of which reference is made.

In one embodiment, some, part, or all of the electronically adjustable valve assembly 333 is located in the lower post. In another embodiment, some, part, or all of the electronically adjustable valve assembly 333 (shown as 333b for purposes of clarity) is located in the upper post. In one embodiment, some, part, or all of the electronically adjustable valve assembly 333 (shown as 333a for purposes of clarity) could span the upper post and the lower post.

In one embodiment, e.g., a gravel or road bicycle, the dropper seatpost 33 travel does not need to be as long and as such, the lower post 615 of the dropper seatpost 33 can be trimmed or otherwise shortened. Therefore, in one embodiment, the location of the electronically adjustable valve assembly 333 could be placed further toward the saddle 32 within the dropper seatpost 33, such that an amount of material (e.g., a trimmable portion) could be removed from the outer post of the dropper seatpost 33. In one embodiment, the trimmable option may also be important for purposes of weight reduction, a better fit between dropper seatpost 33 and seat tube 83 (and/or main frame 24), user preference, and the like.

Although Figure 4 shows a number of electronically adjustable valve assembly 333 locations, in general, there is only one electronically adjustable valve assembly 333 and the shown locations of electronically adjustable valve assembly (e.g., 333, 333a, 333b, etc.) are indicative of a few of the possible placement locations for electronically adjustable valve assembly 333.

In one embodiment, seat tube collar 625 is the highest portion of the lower post 615 and is indicative of the lowest possible setting for the dropper seatpost 33 when it is installed into the main frame 24 seat tube 83. That is, seat tube collar 625 identifies a region of dropper seatpost 33 wherein the dropper seatpost 33 generally transitions between the portion thereof that is inside the main frame 24 and the portion of the dropper seatpost 33 that moves with respect to the main frame.

In one embodiment, the lower post 615 includes a top opening (e.g., approximately at seat tube collar 625) to receive the upper post 610 and a tubular sidewall axially extending between the top opening and the bottom 626 to form the lower post 615, the outer diameter (OD) of the tubular sidewall of the lower post 615 is smaller than an inner diameter (ID) of a seat tube 83 of main frame 24, the lower post 615 for insertion into the seat tube 83. In one embodiment, bottom 626 is the lowest portion of lower post 615 relative to when lower post 615 is within seat tube 83. For example, lower post 615 is inserted into the seat tube 83 and is fixed within the main frame 24 such that it cannot move with respect to the main frame 24.

In one embodiment, upper post 610 telescopically slides with respect to lower post 615. In one embodiment, the upper post 610 has an OD smaller than the ID of the lower post 615, such that a portion of the upper post 610 can telescopically slide within the lower post 615. In one embodiment, the upper post 610 has an ID larger than an OD of the lower post 615, such that a portion of the lower post 615 can telescopically slide within the upper post 610.

In one embodiment, upper post 610 and at least part of saddle clamp assembly 650 are formed as a single component. In another embodiment, upper post 610 and saddle clamp assembly 650 consist of two or more distinct and/or different components.

In one embodiment, when movement of the saddle is desired, (e.g., due to hills, terrain, aerodynamics, speed, etc.), a rider will cause the dropper seatpost 33 to lower by triggering user interface 205 while the rider also depresses the saddle. In one embodiment, the user interface 205 will send a wireless signal to electronically adjustable valve assembly 333 causing rotary flow control valve 420 to open a flow pathway such that the dropper seatpost 33 will be capable of being moved down or up. In one embodiment, dropper seatpost 33 has an air spring and use the rider's weight to move the saddle down, and will only raise the saddle back to the initial position when the electronically adjustable valve assembly 333 is activated (e.g., wirelessly via user interface 205). Although an air spring is disclosed, in other embodiments, the dropper seatpost 33 could use a mechanical spring, a combination of an air spring and a mechanical spring, and the like. The use of the air spring is provided herein for purposes of clarity when describing an embodiment.

In one embodiment, dropper seatpost 33 is "micro-adjustable". There are two types of micro-adjustable seatposts: (1) seatposts that can be continuously adjusted to an infinite number of positions; and (2) seatposts that can only be adjusted to a predetermined (preprogrammed) number of positions. For example, with regard to dropper seatposts that can only be adjusted to a preprogrammed number of positions, the dropper seatpost adjustment positions may be that of the following three positions: up; middle; and down. Generally, the rider prefers that the dropper seatpost 33 be in the "up" position during a ride over flat terrain, a road surface, or pedaling up small hills on a road surface. The rider generally prefers that the dropper seatpost 33 be in the "middle" position when the rider still wants a small amount of power through pedaling but yet would still like the saddle to be at least partially out of the way. This situation may occur while riding down a gentle hill or when the rider anticipates having to climb a hill immediately after a short decent. The rider generally prefers that the dropper seatpost 33 be in the "down" position when the rider is standing up to provide the most amount of power through pedaling and wants the saddle to be at its lowest possible out of the way setting, when the rider is descending a hill, traversing bumpy terrain (e.g., bunny hoping, using flexed legs to absorb bumps, pump track type scenarios, etc.), or the like. For example, the lowest saddle position would be valuable during a decent where the rider would be positioned rearward of the saddle thereby moving the center of gravity lower and/or rearward resulting in a more stable and safer decent.

Additional details regarding the operation of a dropper seatpost 33 can be found in US patent 9,422,018, to which reference is made.

Although components of Figure 4 are shown in given locations in accordance with one embodiment, in other embodiments, one, some, or all of the components shown in Figure 4 could be located in other locations, one or more components could be separated into two or more pieces and dispersed, etc. The use of the locations of the components as shown in Figure 4 are indicative of one embodiment, which is provided for purposes of clarity.

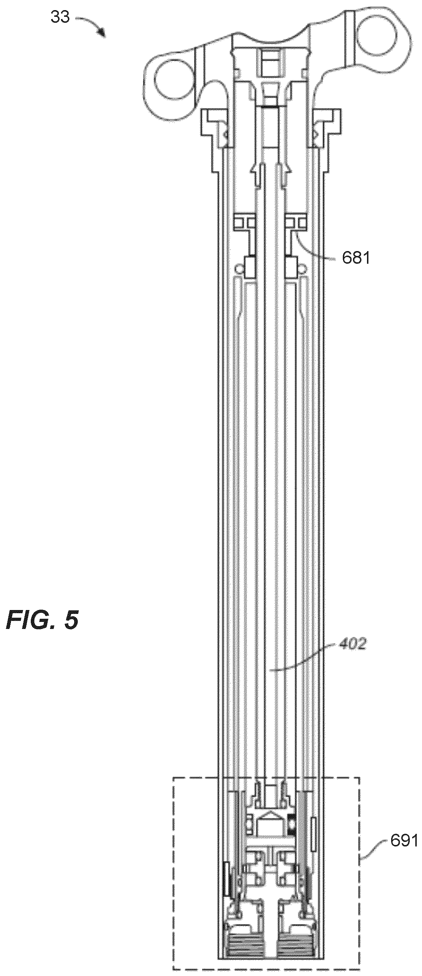

Referring now to Figure 5, a cutaway view of the electronically adjustable valve assembly 333 in the dropper seatpost 33 of Figure 4 is shown in accordance with an embodiment. For purposes of clarity, a discussion of the components that were visible and/or described in Figure 4 will not be repeated herein, but are incorporated by the discussion of Figure 4 in their entirety.

In Figure 5, dropper seatpost 33 includes IFP (Internal Floating Piston) 681, translating shaft 402, and cutaway sectional view 691. In one embodiment, the IFP 681 charge allows a gas spring to be used to extend the dropper seatpost 33. In cutaway sectional view 691, the electronically adjustable valve assembly 333 is shown at the bottom 626 of dropper seatpost 33. Is should be appreciated that the cross section is used to show one embodiment of the configuration of dropper seatpost 33 including the location of IFP 681 and the electronically adjustable valve assembly 333. However, as provided in further discussion herein, in another embodiment, one or more details of electronically adjustable valve assembly 333 including different possible installation locations, variations, components, operational characteristics and the like are possible. The use of the embodiment of Figure 5 is provided as an example of one embodiment and used herein for purposes of clarity.

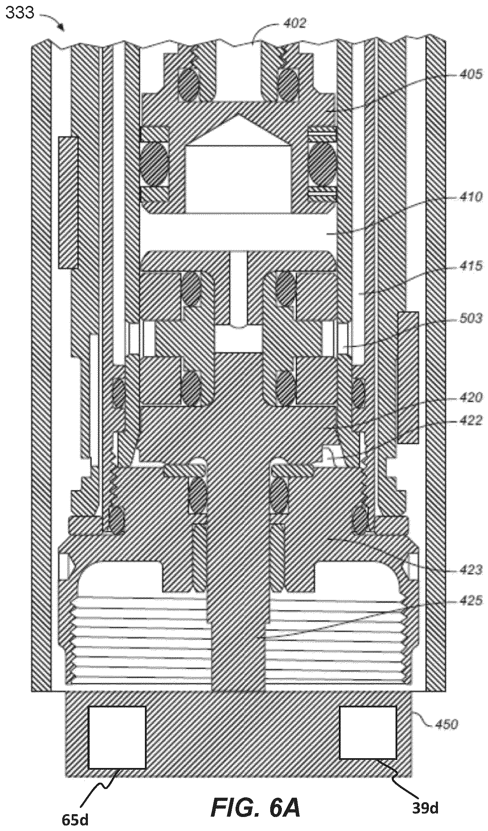

With reference now to Figure 6A, a cutaway sectional view 691 (as identified in Figure 5) of a portion of the dropper seatpost 33 including the electronically adjustable valve assembly 333 is shown in accordance with an embodiment. In one embodiment, electronically adjustable valve assembly 333 includes a piston 405 connected to a translating shaft 402, a first chamber or inner chamber which is a fluid chamber pressurized by a rider's weight on the saddle 32. For purposes of clarity, the first chamber is referred to hereinafter as an inner fluid chamber 410 (or inner pressure tube). In one embodiment, electronically adjustable valve assembly 333 also includes a second chamber having an annular region about inner fluid chamber 410 which is pressurized on extension and by the IFP 681. For purposes of clarity, the second chamber is referred to hereinafter as an outer fluid chamber 415 (or outer pressure tube). In one embodiment, the actions of the two chambers are reversed, e.g., the inner fluid chamber 410 is pressurized on extension and by the IFP 681 and the outer fluid chamber 415 is pressurized by the rider's weight on the saddle 32.

In one embodiment, electronically adjustable valve assembly 333 is an electronically adjustable valve assembly which includes a rotary flow control valve 420 with a drive feature 425 which is coupled to a motive component (e.g., a motor, actuator, solenoid, or the like- referred to hereinafter as motor 450). In one embodiment, the input from motor 450 into drive feature 425 will change the rotary position of rotary flow control valve 420.

In one embodiment, motor 450 is a brushed DC motor with a gearbox. In one embodiment, motor 450 is a stepper motor, brushless motor, coreless motor, or the like. In one embodiment, a control process is employed which controls the motor 450 ensuring it turn the rotary flow control valve 420 the proper amount. In one embodiment, the control process does not require the use of visual indices, motion measurement tools, or the like.

In one embodiment, the control process utilizes the wireless radio (at the user interface 205), a microcontroller and a motor controller (in one embodiment, both the microcontroller and the motor controller are located other than user interface 205 and closer (if not physically coupled with) motor 450). In one embodiment, the wireless radio senses an actuation signal from the trigger unit (e.g., the user pushing a button or the like on user interface 205) which, in one embodiment, is mounted at handlebar 200, when the user desires for the seatpost to change state. When the actuation signal is received from the user interface 205 to the microcontroller, the microcontroller sends a signal to the motor controller. In one embodiment, the motor controller allows power from the power source to be applied to the DC motor 450. In one embodiment, full voltage from the power source is supplied to the motor 450. In one embodiment, full voltage from the power source is supplied such that the motor 450 is spun as quickly as possible. In one embodiment, less than full voltage from the power source is supplied to the motor 450. In one embodiment, one or more components of the control process (e.g., microcontroller, motor controller, or the like) then monitor for a condition that occurs during the operation of motor 450 (e.g., current, proxy current, time, resistance, voltage, temperature, other sensors input, or the like) that satisfies a predetermined criteria. When the condition is met, the power to the motor 450 is removed.

For example, in one embodiment, as power is provided to the motor, the motor controller senses the current provided to the motor 450 using a circuit integrated into the motor controller. In general, the current (or other measurable aspect) varies over time (e.g., initially spiking to get the motor turning, then dropping while the valve opens, then spiking again when the valve is open and hits the hard stop). In one embodiment, the operating current provided to the motor 450 is compared to one or more pre-determined values (or current thresholds) stored in the memory of the microcontroller. In one embodiment, when the sensed current meets the predetermined threshold (e.g., a current threshold that represents motor stall), the microcontroller sends a signal to the motor controller to shut off the power to the motor 450. In one embodiment, this would complete an "open" portion of the control strategy (e.g., opening the rotary control flow valve 420). In one embodiment, as long as the user depresses the button on user interface 205, this is all that occurs. That is, power is not required to keep the rotary control flow valve 420 open.

In one embodiment, when the user releases the button on user interface 205, the reverse operation occurs to close the rotary control flow valve 420. That is, the wireless radio senses that the button is no longer being pushed (or the like) and sends a broadcast to the microcontroller. The microcontroller receives the broadcast and sends a signal to the motor controller to once again allow power to be provided to the motor 450, (however, in one embodiment, it is provided in an opposite polarity from that provided in the rotary control flow valve 420 open operation to cause the motor 450 to rotate in the opposite direction). Once again, the current (or other measurable aspect) is sensed until the current threshold criteria is met, at which point the microcontroller sends a signal to the motor controller to shut off the power to the motor 450. In one embodiment, this would complete the "close" portion of the control strategy (e.g., closing the rotary control flow valve 420). Once again, power is not required to hold the rotary control flow valve 420 closed.

In one embodiment, the use of the control process described herein to monitor and analyze the sensed current greatly reduces the complexity associated with conventional electronically-actuated seatposts. For example, in one embodiment of a wired configuration (as opposed to a wireless embodiment) only two wires are required to be coupled to motor 450. In general, the two wires provide the power to motor 450, (e.g., completing a circuit between the power source and motor 450). In one embodiment, the microcontroller and/or motor controller would also be included in the circuit to control the flow of power from the power source to the motor 450.

In one embodiment, the current (or other measurable aspect) can be sensed at any desired location of the circuit. For example, in various embodiments, the current may be sensed at, but not limited to, any of the following locations, at or very near motor 450, at a location remote from motor 450, at the same location as the power source for motor 450, at a control unit (such as microcontroller and/or motor controller) which controls motor 450, at a control unit which controls other features on the vehicle (e.g., in one embodiment, the control unit is not required to control motor 450), and the like.

In one embodiment, there is a cutout 422 in a portion of the rotary flow control valve 420 that interfaces with the lug 423 to create a hard stop (or bump stop, or the like). In various other embodiment, other aspects, features, or the like maybe used as the stopping feature of the rotation of the rotary flow control valve 420 (such as open, closed, or the like) which would cause a current threshold to be reached. In one embodiment, the hard stop is used to control the endpoint or endpoints of motor 450 with respect to moving/translating/rotating of some portion of dropper seatpost 33. Once the hard stop has restricted further moving/translating/rotating of a portion of the dropper seatpost 33, the controller will sense a corresponding change in current (e.g., a current spike, a current drop, or other change in current) through motor 450. In one embodiment, based upon sensing the current change, the controller stops power from being provided to motor 450, or otherwise alters the power received by motor 450.

In one embodiment, instead of (or in addition to) the measuring and/or monitoring of a current threshold of the motor to determine the rotation of the rotary valve has reached a stopping point, other measuring devices such as timers, filters, and the like, may be used to measure time, resistance, voltage, thermometer, other sensors, or the like. Here again, the control process is looking for a condition (e.g., current, proxy current, time, resistance, voltage, temperature, other sensors input, or the like) supplied to the actuating unit (e.g., motor 450) that satisfies a predetermined criteria.

For example, if the motor 450 rotational rate for a given power is known, and the amount of desired rotation of the rotary flow control valve 420 is also known, a timer or the like could be used to control the time the power is supplied to motor 450. For example, if motor 450 spins at a rate of 200 rpm and the rotary valve needs to be rotated 180 degrees, then the timer would let the motor 450 operate for 0.15 seconds. In one embodiment, the timer and/or filters disclosed herein could also be used as back-up or confirmation settings to ensure against faults/transients such as where the stall current threshold is reached before the valve is completely open or completely closed. Thus, using any and/or all of these methods, there is no need to measure the position of the motor 450 directly.

As a significant advantage over conventional approaches, the various current sensing embodiments, are not required to use visual indices, motion measurement tools, or the like, to determine that motor 450 has completed a desired movement/translation/rotation of some portion of dropper seatpost 33. As a result, embodiments do not require the additional complex features, additional wires (e.g., additional control wires between motor 450 and a controller dedicated and/or used to control motor 450). Instead, one embodiment is able to control motor 450 using the single wire which provides power to motor 450, or otherwise altering the power received by motor 450. Additionally, as physical space tends to be constrained in various vehicles, such as, for example, in bicycle 50, fewer wires and components will occupy far less physical space than is required by conventional electronic seatpost devices. Moreover, although the discussion above is provided in light of controlling a motor in a dropper seatpost, other embodiments are well suited to being utilized in conjunction with different components such as, but not limited to, front shock assembly 37, rear shock assembly 38, front fork 34, and various other vehicle components/features. Thus, one embodiment is able to control or determine the movement, translation, and/or rotation of some portion of the front shock assembly 37 (e.g., shock shaft movement), rear shock assembly 38, front fork 34 (e.g., fork extension and/or compression), or various other vehicle components/features (e.g., ski position on a snow machine, etc.). Additionally, in such embodiments, the controlling or determining of the movement, translation, and/or rotation of some portion of the vehicle component and/or feature is achieved without requiring the use of visual indices, motion measurement tools, or the like.

In one embodiment, although a wired connection between the controller and motor 450 is disclosed as one method for monitoring and or controlling the power to motor 450, other embodiments are well suited to using a wireless communication to communicate between, for example, the controller and motor 450.

In one embodiment, the cutout 422 in a portion of the rotary flow control valve 420 that interfaces with the lug 423 is used to key the rotary flow control valve 420 to the cross holes 503.

In one embodiment, electronically adjustable valve assembly 333 is (effectively) a two-state valve. In other words, the electronically adjustable valve assembly 333 is an on/off valve. In one embodiment, the rotary flow control valve 33 is an on/off valve such that it is fast enough in its response such that a user would not be able to stop the dropper seatpost 33 between states (e.g., state 1-the original user set saddle height and state-2 the lowest dropper seatpost setting).

In one embodiment, the electronically adjustable valve assembly 333 may have intermediate states (to limit flow, such as a high flow, a medium flow, a slow flow, etc., but not at zero flow). For example, the electronically adjustable valve assembly 333 could have intermediate settings to control flow. In one embodiment, there may be a control system (an encoder on motor 450 with different settings thereon, a stepper motor, etc.) to control/adjust the on/off type rotating valve into one or more intermediate states, (e.g., between on and off), to provide a regulated flow.

In general, translating shaft 402 moves up and down with the saddle 32. In one embodiment, the translating shaft 402 is attached to the piston 405 to create the inner fluid chamber 410 which is at high pressure when the rider weight is being supported. In one embodiment, the outer fluid chamber 415 is a fluid chamber that is annular to the inner fluid chamber 410. When the rotary flow control valve 420 is opened, the fluid in the inner fluid chamber 410 moves through the open rotary flow control valve 420 and into the outer fluid chamber 415. In one embodiment, the movement of the fluid into the outer fluid chamber 415 will move the IFP 681 upward toward the top of the dropper seatpost 33 as the dropper seatpost 33 is compressed (or moved into its lower height).

Although components of Figure 6A are shown in given locations in accordance with one embodiment, in other embodiments, one, some, or all of the components shown in Figure 6A could be located in other locations, one or more components could be separated into two or more pieces and dispersed, etc. The use of the locations of the components as shown in Figure 6A are indicative of one embodiment, which is provided for purposes of clarity.

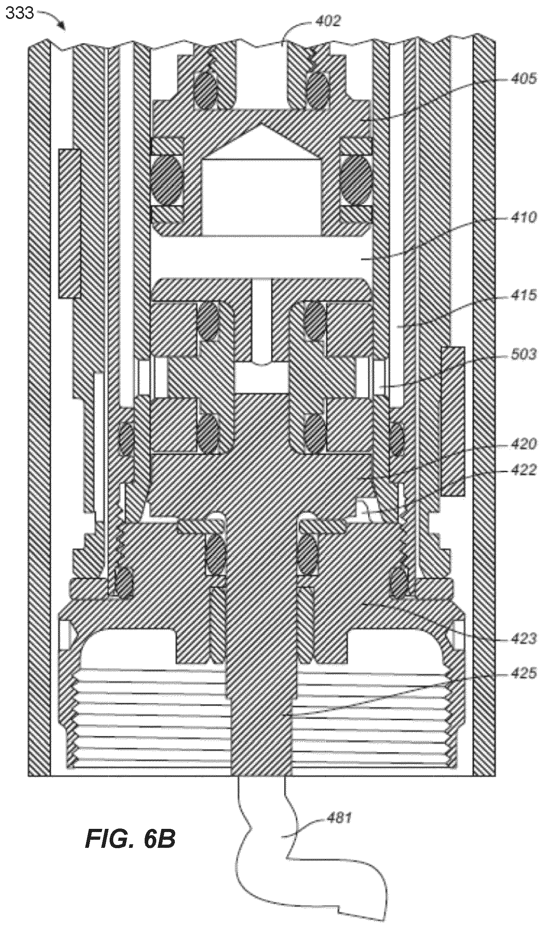

With reference now to Figure 6B, a cross-section view (identified in Figure 5) of a portion of the dropper seatpost 33 including a mechanical actuator 481 (e.g., a cable, hydraulic line, etc.) for mechanically actuating electronically adjustable valve assembly 333 is shown in accordance with an embodiment. In general, the operation of the embodiment shown in Figure 6B is similar to that of Figure 6A, except for the change from a motor 450 used to electronically drive the electronically adjustable valve assembly 333 of Figure 6A, to a mechanical actuator to mechanically actuate the electronically adjustable valve assembly 333.

In one embodiment, the mechanical actuator 481 would provide a control capability such that a user input on a user interface 205 (or similar type device) would provide a mechanical actuation of the rotary flow control valve within the electronically adjustable valve assembly 333 to change the state from open, to closed, and/or to partially open.

Although components of Figure 6B are shown in given locations in accordance with one embodiment, in other embodiments, one, some, or all of the components shown in Figure 6B could be located in other locations, one or more components could be separated into two or more pieces and dispersed, etc. The use of the locations of the components as shown in Figure 6B are indicative of one embodiment, which is provided for purposes of clarity.

### Electronically actuated dropper seatpost

With reference again to Figure 5 and Figures 6A and 6B, in one embodiment, the components of electronically adjustable valve assembly 333 are coupled together during manufacture/assembly to form a single electronically adjustable valve assembly 333. In one embodiment, electronically adjustable valve assembly 333 is broken down into two or more distinct and/or different component assemblies which are connectively coupled during installation to form an operational electronically adjustable valve assembly 333.

For example, in one embodiment where the electronically adjustable valve assembly 333 is broken down into two or more distinct and/or different component assemblies, one component assembly will include the piston 405, translating shaft 402, inner fluid chamber 410, outer fluid chamber 415, rotary flow control valve 420, and part of drive feature 425, and another component assembly will include part of a first assembly (e.g., may be located within the dropper seatpost 33 and sealed from atmosphere while the drive feature 425 will extend through a seal of some type and out of the bottom 626 of dropper seatpost 33) and the motor 450 is installed at a different location on the bicycle 50. Thus, upon installation of the dropper seatpost 33 into the seat tube 83, the electronically adjustable valve assembly 333 will be operationally assembled when the drive feature 425 of the rotary flow control valve 420 is in mechanical contact with motor 450.

In one embodiment, this mechanical contact occur when the motor 450 is installed within the seat tube 83 and the drive feature 425 makes mechanical contact therewith. In another embodiment, this mechanical contact occurs when the motor 450 is installed somewhere else on the vehicle and a mechanical connection is made between the drive feature 425 and the motor 450. In one embodiment, the mechanical connection may be a cable or the like that is coupled between the motor 450 and the drive feature 425, thereby allowing the output of motor 450 to be rotationally transferred to drive feature 425.

In one embodiment, electronically adjustable valve assembly 333 receives its power from an external power source such as power source 65 or the like.

In one embodiment, dropper seatpost 33 includes a power source 65d as shown in Figure 6A. In one embodiment, power source 65d provides power to motor 450. In one embodiment, power source 65d is similar to the power sources described in the power source discussion herein, and as such, the entirety of any power source discussion provided herein is incorporated by reference for purposes of clarity.

In one embodiment, the power source 65s is integrated with the electronically adjustable valve assembly 333. In one embodiment, power source 65s is located separate from electronically adjustable valve assembly 333. In one embodiment, the power source 65s is located separately from dropper seatpost 33.

In one embodiment, power source 65d is located at or near the saddle attachment location (e.g., saddle clasp assembly 650). For example, a location such as 333b shown in Figure 4. In one embodiment, power source 65d is not located at or near the saddle attachment location. For example, a location other than 333b shown in Figure 4.

In one embodiment, power source 65d is located on a portion of the dropper seatpost 33 that does not move with respect to main frame 24, such as lower post 615. In one embodiment, power source 65d is located on a portion of dropper seatpost that is inserted into seat tube 83, such as lower post 615. In one embodiment, power source 65d is located on a portion of the dropper seatpost 33 that does not move with respect to bicycle 50. For example, a location such as 333 shown in Figure 4.

In one embodiment, power source 65d is located at or near seat tube collar 625 of the dropper seatpost 33. For example, a location such as 333a shown in Figure 4.

In one embodiment, electronically adjustable valve assembly 333 (or the motive component thereof) receives its input information from one or more of the controller(s) and component(s), such as, but not limited to controller 39, a controller coupled with another active shock assembly, another vehicles' controller, a controller coupled with user interface 205, controller 39s of rear shock assembly 38, mobile device 95, user interface 205, another active shock assembly (e.g., front shock assembly 37), switch 93, sensor(s) 35, or the like.

In one embodiment, dropper seatpost 33 includes a controller 39d as shown in Figure 6A. In one embodiment, controller 39d is similar in operation to the controller 39 described herein. In one embodiment, controller 39d provides the input signal to the motive component of electronically adjustable valve assembly 333 (e.g., motor 450, actuator, solenoid, or the like). In one embodiment, the input signal is received from one or more of the controller(s) and component(s), such as, but not limited to controller 39, controller 39d, a controller coupled with another active shock assembly, a controller and/or component associated with another vehicle and/or party, a controller coupled with user interface 205, controller 39s, mobile device 95, user interface 205, another active shock assembly (e.g., front shock assembly 37), switch 93, sensor(s) 35, or the like.

In one embodiment, controller 39d includes wired or wirelessly communication capabilities and protocols such as those described in the communications discussion herein, which is not repeated herein. Instead, the entirety of any communications discussions herein is incorporated by reference for purposes of clarity.

In one embodiment, controller 39d is integrated with the electronically adjustable valve assembly 333. In one embodiment, controller 39d is located separate from electronically adjustable valve assembly 333. In one embodiment, controller 39d is located separately from dropper seatpost 33.

In one embodiment, controller 39d is located at or near the saddle attachment location (e.g., saddle clasp assembly 650). For example, a location such as 333b shown in Figure 4. In one embodiment, controller 39d is not located at or near the saddle attachment location. For example, a location other than 333b shown in Figure 4.

In one embodiment, controller 39d is located on a portion of the dropper seatpost 33 that does not move with respect to main frame 24, such as lower post 615. In one embodiment, controller 39d is located on a portion of dropper seatpost that is inserted into seat tube 83, such as lower post 615. In one embodiment, controller 39d is located on a portion of the dropper seatpost 33 that does not move with respect to bicycle 50. For example, a location such as 333 shown in Figure 4.

In one embodiment, controller 39d is located at or near seat tube collar 625 of the dropper seatpost 33. For example, a location such as 333a shown in Figure 4.

In one embodiment, controller 39d uses a two-wire configuration to interact with motor 450.

In one embodiment, controller 39d is integrated with dropper seatpost 33 and as such, is not easily or readily removable without some amount of disassembly. As such, controller 39d would have to be accessed during a disassembly procedure.

In one embodiment, controller 39d is removably coupled with dropper seatpost 33 such that it can be removed, replaced, or the like. For example, controller 39d would be located in an accessible location, such as a bottom of dropper seatpost 33, inside a cover or housing of dropper seatpost 33, or the like. In one embodiment, by being removably coupled with dropper seatpost 33, controller 39d can be removed by a user for replacement, storage, security (e.g., so it is not stolen), and the like. For example, in one embodiment, controller 39d may be removed from dropper seatpost 33 when the bicycle 50 is not being ridden to ensure that it is not being powered on and wasting energy, when other than riding movement occurs with respect to bicycle 50 (e.g., movement in a garage/storage area, loading and/or unloading, transit, etc.).

In one embodiment, electronically adjustable valve assembly 333 includes power source 65d and controller 39d to provide the input signal and power to motor 450. In one embodiment, power source 65d would be co-located with (or located near) motor 450 and controller 39d would be located apart from both power source 65d and motor 450.

In one embodiment, controller 39d would be co-located with (e.g., located near, next to, or even integrated with) motor 450 and power source 65d would be located apart from both controller 39d and motor 450.

In one embodiment, controller 39d and power source 65d would be co-located with (or located near) motor 450. In one embodiment, neither controller 39d nor power source 65d would be coupled with (or located near) motor 450.

In one embodiment, controller 39d and power source 65d would be co-located with (or located near) one another while also being located apart from motor 450. In one embodiment, controller 39d and power source 65d would be located apart from one another while also being located apart from motor 450.

In one embodiment, slip coupling is used to electrically couple power source 65d with other desired components and/or features such as, but not limited to, motor 450, controller 39d (or another controller, multiple controllers, etc.), and the like.

In one embodiment, motor 450 is integrated with the electronically adjustable valve assembly 333. In one embodiment, motor 450 is located separate from electronically adjustable valve assembly 333. In one embodiment, motor 450 is located separately from dropper seatpost 33.

In one embodiment, motor 450 is located at or near the saddle attachment location (e.g., saddle clasp assembly 650). For example, a location such as 333b shown in Figure 4. In one embodiment, motor 450 is not located at or near the saddle attachment location. For example, a location other than 333b shown in Figure 4.

In one embodiment, motor 450 is located on a portion of the dropper seatpost 33 that does not move with respect to main frame 24, such as lower post 615. In one embodiment, motor 450 is located on a portion of dropper seatpost that is inserted into seat tube 83, such as lower post 615. In one embodiment, motor 450 is located on a portion of the dropper seatpost 33 that does not move with respect to bicycle 50. For example, a location such as 333 shown in Figure 4.

In one embodiment, motor 450 is located at or near seat tube collar 625 of the dropper seatpost 33. For example, a location such as 333a shown in Figure 4.

In one embodiment, motor 450 is located at the base of dropper seatpost 33.

In one embodiment, motor 450 is integrated with dropper seatpost 33 and as such, is not easily or readily removable without some amount of disassembly. As such, motor 450 would have to be accessed during a disassembly procedure.

In one embodiment, a wiring harness is utilized to couple two or more of the components of the dropper seatpost 33 such as, but not limited to, motor 450, power source 65d, controller 39d (or another controller, multiple controllers, etc.), and the like. In one embodiment, for example, motor 450 and controller 39d are located between the upper post 610 and the lower post 615 of dropper seatpost 33. In one embodiment, the wires are disposed between the two members/posts of dropper seatpost 33 which slide with respect to each other. More specifically, in one embodiment, the wires are disposed in a gap between the upper post 610 and the lower post 615 of dropper seatpost 33. In one embodiment, an electrically conductive strip, or similar, is disposed, for example, along the interior of a portion of dropper seatpost 33. In one embodiment, a connection mechanism, such as but not limited to, a rolling mechanism, a lever arm, or similar, makes contact with the electrically conductive strip. In so doing, an electrically conductive current path is formed. In one embodiment, the electrically conductive path is used, for example, to couple controller 39d and motor 450, power source 65d and controller 39d, motor 450 and power source 65d, the like.

In one embodiment, the components of electronically adjustable valve assembly 333 are installed together during the build of dropper seatpost 33, such that the piston 405, translating shaft 402, inner fluid chamber 410, outer fluid chamber 415, rotary flow control valve 420, drive feature 425 and motor 450 are within the sealed atmospheric environment of the dropper seatpost 33. In the following discussion, this is referred to as a single electronically adjustable valve assembly 333 housing embodiment.

In one embodiment, the single electronically adjustable valve assembly 333 housing embodiment may include an O-ring or other type of seal about the drive feature 425 between the rotary flow control valve 420 and motor 450 to divide the single electronically adjustable valve assembly 333 into a "wet" side and a "dry" side. In one embodiment, the "wet" side components (e.g., piston 405, translating shaft 402, inner fluid chamber 410, outer fluid chamber 415, rotary flow control valve 420) are within the area of, and exposed to the working fluid while the "dry" side components, (e.g., motor 450, controller 39d, power source 65d, non-contact charging components, and the like), are separated from the working fluid. Although the above discussion includes a list of one embodiment of "wet" side and "dry" side components. It should be appreciated that one or more of the components of the single electronically adjustable valve assembly 333 could be moved from the "wet" side and/or "dry" side.

In one embodiment, when single electronically adjustable valve assembly 333 housing embodiment is completely installed within the dropper seatpost 33, the seal would be located somewhere along the drive feature 425 such that the working fluid can use the flow paths, e.g., inner fluid chamber 410, outer fluid chamber 415, rotary flow control valve 420, cross holes 503, and the like, and flow can be controlled by the "wet" components, while the "dry" components will remain separate from the working fluid.

In one embodiment, the seal is also a pressure type fluid seal such that the "wet" components would be in a pressurized environment, while the "dry" components would remain at atmosphere. In one embodiment, by utilizing a pressure type fluid seal, the battery for the electronically adjustable valve assembly 333 could be accessible for power source 65d replacement. For example, in the dropper seatpost 33 embodiment, some, or a portion of the bottom 626 could be removable to provide access to the power source 65d and then be reinstalled to provide a level of protection from debris, water, etc.

In one embodiment, by utilizing a pressure type fluid seal, a charging port for the power source 65d of the single electronically adjustable valve assembly 333 housing could be provided in the dropper seatpost 33 wherever the power source 65d is located. For example, when the power source 65d is located close to, or in proximity of the bottom 626, bottom 626 could include a charging port. In one embodiment, the charging port would include a dust cover (or the like) to provide a level of protection from debris, water, etc.

In one embodiment, e.g., the single electronically adjustable valve assembly 333 housing embodiment, the power source 65d (e.g., battery or other power source such as a capacitor, etc.) has a wirelessly rechargeable capability such that the power source 65d could be charged using a wireless power transfer system. E.g., using an inductive charger (or the like) within a given distance of the wirelessly rechargeable capability of the power source 65d.

In one embodiment, by using wireless power transfer, the power source 65d can be charged even though it is sealed within the dropper seatpost 33. In one embodiment, the power source 65d can be charged while the dropper seatpost 33 is installed in the seat tube 83. This can be dependent upon factors such as, the main frame 24 (e.g., composite, metal, thin, thick, etc.), the type of wireless power transfer being used, etc.

In one embodiment, the dropper seatpost 33 is removed from seat tube 83, and the portion of the dropper seatpost 33 containing the power source 65d, would be located proximate to the wireless charger to obtain the wireless charge.

In one embodiment, some, or the entirety of electronically adjustable valve assembly 333 is removably coupled with dropper seatpost 33 such that it can be removed, replaced, or the like. For example, electronically adjustable valve assembly 333 would be located in an accessible location, such as a bottom of dropper seatpost 33, inside a cover or housing of dropper seatpost 33, or the like. In one embodiment, by being removably coupled with dropper seatpost 33, electronically adjustable valve assembly 333 can be removed by a user for replacement, storage, security (e.g., so it is not stolen), and the like. For example, in one embodiment, electronically adjustable valve assembly 333 may be removed from dropper seatpost 33 when the bicycle 50 is not being ridden to ensure that it is not being powered on and wasting energy, when other than riding movement occurs with respect to bicycle 50 (e.g., movement in a garage/storage area, loading and/or unloading, transit, etc.).

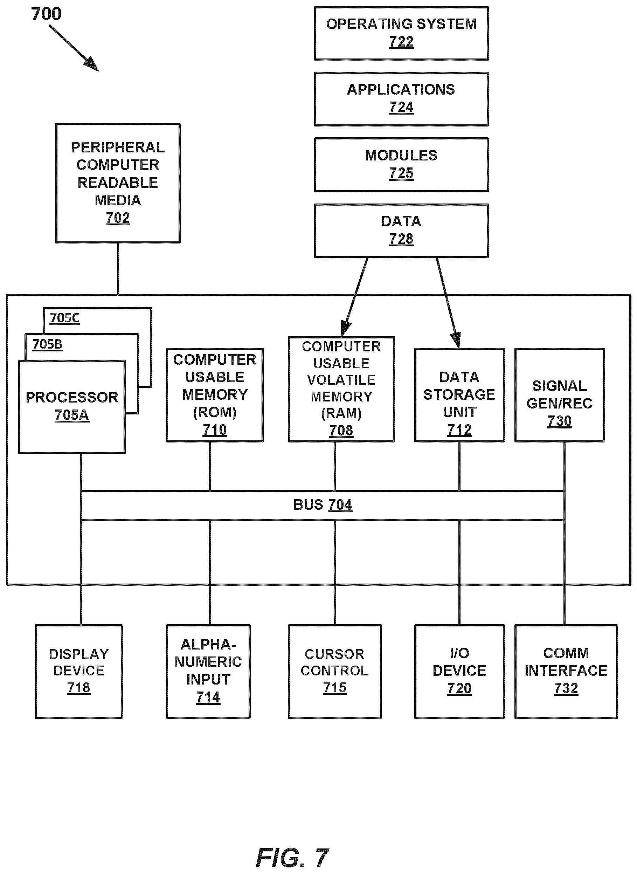

With reference now to Figure 7, an example computer system 700 is shown. In the following discussion, computer system 700 is representative of a system or components that may be used with aspects of the present technology. In one embodiment, different computing environments will only use some of the components shown in computer system 700.

In general, suspension controller 39, sensor(s) 35, switch 93, and the like, can include some or all of the components of computer system 700. In different embodiments, suspension controller 39, sensor(s) 35, switch 93, and the like can include communication capabilities (e.g., wired such as ports or the like, and/or wirelessly such as communication transmitted via a network such as WPAN, an LPN, IoT connectivity, or the like. In one embodiment, the transmission protocol could be, but is not limited to, Bluetooth, WiFi, BLE, NFC, UHF radio signal, WiMax, ISM band, an IEEE 802.15.4 standard communicator, Zigbee, ANT, ISA100.11a, wireless HART protocol, MiWi, IPv6, 6LoWPAN, thread network protocol, SNAP, and the like) such that some of the components of computer system 700 are found on suspension controller 39, sensor(s) 35, switch 93, and the like, while other components could be ancillary but communicatively coupled thereto (such as a mobile device, tablet, computer system or the like).

For example, in one embodiment, suspension controller 39 (and/or sensor(s) 35, switch 93, and the like) can be communicatively coupled to one or more different computing systems to allow a user (or manufacturer, tuner, technician, etc.) to adjust or modify any or all of the programming stored in suspension controller 39 (and/or sensor(s) 35, switch 93, and the like). In one embodiment, the programming includes computer-readable and computer-executable instructions that reside, for example, in non-transitory computer-readable medium (or storage media, etc.) of suspension controller 39 (and/or sensor(s) 35, switch 93, and the like) and/or computer system 700.

In one embodiment, computer system 700 includes peripheral computer readable media 702 which can include media such as, for example, an external storage drive, a compact disc, a flash memory, a universal serial bus (USB) flash memory, secure digital (SD) memory, MultiMediaCard (MMC) memory, an extreme Digital (XD) memory, a CompactFlash memory, a MemoryStick memory, a SmartMedia memory, and the like. In one embodiment, computer system 700 also includes an address/data/control bus 704 for communicating information, and a processor 705A coupled to bus 704 for processing information and instructions. As depicted in Figure 7, computer system 700 is also well suited to a multiprocessor environment in which a plurality of processors 705A, 705B, and 705C are present. Conversely, computer system 700 is also well suited to having a single processor such as, for example, processor 705A. Processors 705A, 705B, and 705C may be any of various types of microprocessors. Computer system 700 also includes data storage features such as a computer usable volatile memory 708, e.g., random access memory (RAM), coupled to bus 704 for storing information and instructions for processors 705A, 705B, and 705C.

Computer system 700 also includes computer usable non-volatile memory 710, e.g., read only memory (ROM), coupled to bus 704 for storing static information and instructions for processors 705A, 705B, and 705C. Also present in computer system 700 is a data storage unit 712 (e.g., a magnetic disk drive, optical disk drive, solid state drive (SSD), and the like) coupled to bus 704 for storing information and instructions. Computer system 700 also can optionally include an alpha-numeric input device 714 including alphanumeric and function keys coupled to bus 704 for communicating information and command selections to processor 705A or processors 705A, 705B, and 705C. Computer system 700 also can optionally include a cursor control device 715 coupled to bus 704 for communicating user input information and command selections to processor 705A or processors 705A, 705B, and 705C. Cursor control device may be a touch sensor, gesture recognition device, and the like. Computer system 700 of the present embodiment can optionally include a display device 718 coupled to bus 704 for displaying information.

Referring still to Figure 7, display device 718 of Figure 7 may be a liquid crystal device, cathode ray tube, OLED, plasma display device or other display device suitable for creating graphic images and alpha-numeric characters recognizable to a user. Cursor control device 715 allows the computer user to dynamically signal the movement of a visible symbol (cursor) on a display screen of display device 718. Many implementations of cursor control device 715 are known in the art including a trackball, mouse, touch pad, joystick, non-contact input, gesture recognition, voice commands, bio recognition, and the like. In addition, special keys on alpha-numeric input device 714 capable of signaling movement of a given direction or manner of displacement. Alternatively, it will be appreciated that a cursor can be directed and/or activated via input from alpha-numeric input device 714 using special keys and key sequence commands.

Computer system 700 is also well suited to having a cursor directed by other means such as, for example, voice commands. Computer system 700 also includes an I/O device 720 for coupling computer system 700 with external entities. For example, in one embodiment, I/O device 720 is a modem for enabling wired or wireless communications between computer system 700 and an external network such as, but not limited to, the Internet or intranet. A more detailed discussion of the present technology is found below.

Referring still to Figure 7, various other components are depicted for computer system 700. Specifically, when present, an operating system 722, applications 724, modules 725, and data 728 are shown as typically residing in one or some combination of computer usable volatile memory 708, e.g., random-access memory (RAM), and data storage unit 712. However, it is appreciated that in some embodiments, operating system 722 may be stored in other locations such as on a network or on a flash drive; and that further, operating system 722 may be accessed from a remote location via, for example, a coupling to the Internet. The present technology may be applied to one or more elements of described computer system 700.

Computer system 700 also includes one or more signal generating and receiving device(s) 730 coupled with bus 704 for enabling computer system 700 to interface with other electronic devices and computer systems. Signal generating and receiving device(s) 730 of the present embodiment may include wired serial adaptors, modems, and network adaptors, wireless modems, and wireless network adaptors, and other such communication technology. The signal generating and receiving device(s) 730 may work in conjunction with one (or more) communication interface 732 for coupling information to and/or from computer system 700. Communication interface 732 may include a serial port, parallel port, Universal Serial Bus (USB), Ethernet port, Bluetooth, thunderbolt, near field communications port, WiFi, Cellular modem, or other input/output interface. Communication interface 732 may physically, electrically, optically, or wirelessly (e.g., via radio frequency) couple computer system 700 with another device, such as a mobile phone, radio, or computer system.

The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

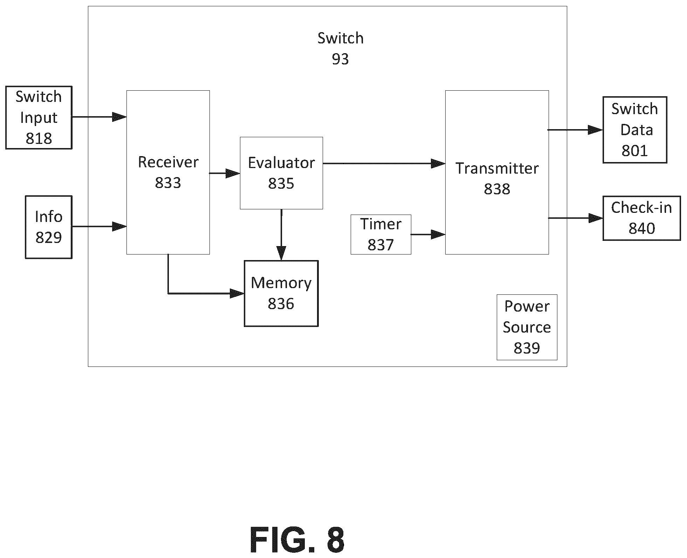

Referring now to Figure 8, a block diagram of a switch 93 is shown in accordance with an embodiment. As discussed herein (including Figure 1C), in one embodiment, the bicycle 50 has a wireless switch 93 that communicates with one or both of central controller 39 and mobile device 95.

In one embodiment, switch 93 is similar in function and operation to sensor(s) 35 discussed herein. As such, the following discussion incorporates the discussion of sensor(s) 35 in its entirety and attempts to provide a number of embodiments and some examples of differences in the operation thereof. In one embodiment switch 93 includes a receiver 833, an evaluator 835, a memory 836, a transmitter 838, a timer 837, and a power source 839. In one embodiment, power source 839 is similar to power source 339 discussed herein.

In one embodiment, switch 93 generates data based on a switch input 818, receives information 829 from controller 39 and/or mobile device 95, and outputs switch data 801 message and check-in message 840.

In one embodiment, switch 93 communicates wirelessly via a network such as WPAN, an LPN, IoT connectivity, or the like. In one embodiment, the transmission protocol could be, but is not limited to, Bluetooth, WiFi, BLE, NFC, UHF radio signal, WiMax, ISM band, an IEEE 802.15.4 standard communicator, Zigbee, ANT, ISA100.11a, wireless HART protocol, MiWi, IPv6, 6LoWPAN, thread network protocol, SNAP, and the like.

In one embodiment, if the IEEE 802.15.4 standard is utilized to transmit switch data 801, controller 39 and/or mobile device 95 can include an IEEE 802.2 logical link control sublayer to receive the switch data 801 and provide its content to controller 39 and/or mobile device 95.

In one embodiment, if SNAP is utilized to transmit switch data 801, controller 39 and/or mobile device 95 can have a universal asynchronous receiver/transmitter (UART) interface supporting RS-232 or RS-485 using TTL logic levels to receive the switch data 801 and provide its content to controller 39 and/or mobile device 95.

In one embodiment, switch input 818 is received when a rider pushes a button on switch 93 such as button 93A or button 93B, in one example. When switch input 818 is received, it is passed to evaluator 835 to evaluate the switch input 818 (e.g., was it input from button 93A, from button 93B, etc.). Once it is evaluated, it is transmitted by transmitter 838 as switch data 801 to controller 39 and/or mobile device 95.

In one embodiment, any information or optional data is embedded in the response (e.g., info 829) from controller 39 and/or mobile device 95. In one embodiment, info 829 is provided during the initial paring handshake between switch 93 and controller 39 and/or mobile device 95. In one embodiment, info 829 is provided by the controller 39 and/or mobile device 95 as part of an acknowledgement response to a switch data 801 message sent by the switch 93. In one embodiment, info 829 is provided by the controller 39 and/or mobile device 95 in response to a check-in "heartbeat" message 840 sent by the switch 93. In one embodiment, the info 829 is sent at a 1Hz communication rate.

In one embodiment, switch data 801 includes a unique identifier (ID) that identifies the specific switch 93 that broadcast the switch data 801. Thus, even when a number of different switches are operating in the same environment, the controller 39 will be able to identify which switch 93 sent the switch data 801. In one embodiment, the unique ID is used during the programming/pairing of switch 93 with controller 39 and/or mobile device 95.

In one embodiment, the unique ID in switch data 801 is used by controller 39 and/or mobile device 95 to identify a valid switch 93, and the information in switch data 801 is used by controller 39 and/or mobile device 95 to identify the associated action to be taken.

In one embodiment, the unique ID, and other switch data is stored in an erasable programmable read-only memory (e.g., memory 836). In one embodiment, memory 836 can be written to with RF energy, NFC protocols, or the like. As such, the memory 836 could be updated via controller 39, mobile device 95, a laptop, or the like.

In one embodiment, once switch 93 sends switch data 801, it will remain active to listen for info 829 from controller 39 and/or mobile device 95. In one embodiment, info 829 is an acknowledgement signal and waiting for it would be programmed as part of the transmission and operation protocol within the switch 93 operating system. In one embodiment, once switch 93 sends switch data 801 it will return to the dormant state and not wait for any response from controller 39 and/or mobile device 95.

In one embodiment, timer 837 of switch 93 counts down a check-in or heartbeat time period. In one embodiment, the time period measured by timer 837 is preset by the manufacturer. In one embodiment, the time period measured by timer 837 is adjustably set by the manufacturer, by the user, by a mechanic, based on the vehicle location, terrain type, or the like.

In one embodiment, when timer 837 expires, a check-in message 840 is sent from switch 93 to controller 39 and/or mobile device 95. The switch 93 will then listen for info 829 from controller 39 and/or mobile device 95. In one embodiment, once info 829 is received, timer 837 will be restarted.

In one embodiment, if there is no response to check-in message 840 with a predefined period of time, the switch 93 will send another check-in message 840. In one embodiment, if there is no response (e.g., info 829) received, the switch will send an additional pre-defined number of check-in messages 840. If no response is received after the final check-in message of the pre-defined number, then switch 93 will move to the dormant state as shown in Figure 3D and described in the associated discussion thereof.

Regarding the wireless communication protocol 350 described herein, in one embodiment, switch 93 utilizes the same wireless communication protocol 350 to obtain low latency and long battery life. In one embodiment, the only difference in the previously discusses wireless communication protocol 350 is that switch 93 may use the protocol while communicating with controller 39 and/or mobile device 95. Since the wireless communication protocol 350 is previously described, it is not repeated herein for purposes of clarity, but is instead incorporated by reference in its entirety herein.

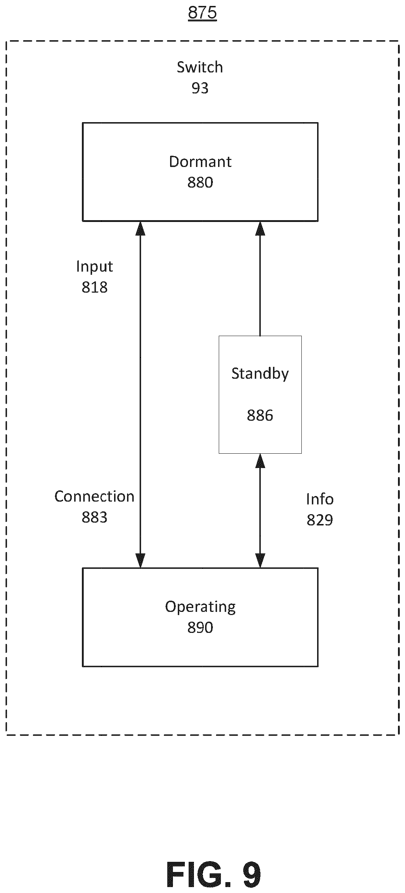

Referring now to Figure 9, Referring now to Figure 9, a flow diagram 875 of a number of states of the switch 93 is shown in accordance with an embodiment. In one embodiment, the switch can be in a number of different states to conserve battery life. Flow diagram 875 is similar in operation to flow diagram 375 of Figure 3D and the operations of switch 93 include a number of states for switch 93 to conserve battery life similar to that of Figure 3D. Although flow diagram 875 includes 3 states, in one embodiment there may be more or fewer energy states. The use of three states is provided herein as one embodiment and for purposes of clarity.

In the operating state 890, the switch 93 is operating. This is the highest battery power consumption state. In the operating state 890, the switch 93 has received input 818 from a user (e.g., the pressing of button 93A or 93B) for example. Once the input 818 is received, switch 93 user transmitter 838 to provide the switch data 801 to controller 39 or mobile device 95. When the controller 39 or mobile device 95 replies with information 829, the switch 93 knows that there is a connection 883 with controller 39 or mobile device 95. In one embodiment, unlike sensor(s) 35, switch 93 does not wait for information 829 to be received before powering down. In one embodiment, switch 93 only listens for information 829 when check-in message 840 is transmitted.

In standby state 886, switch 93 has transmitted the switch data 801 and/or check-in 340 and is waiting for information 829 from controller 39 or mobile device 95. When controller 39 or mobile device 95 responds to the transmission from the switch 93 with information 829, switch 93 will know that there is a connection 883 with controller 39 or mobile device 95, that the broadcast by switch 93 has been received by controller 39 or mobile device 95, and that switch 93 can return to dormant state 880 until either check-in message 840 or switch input 818 is received.

In one embodiment, if the switch 93 does not receive information 829 from the controller 39 or mobile device 95. In other words, the switch 93 is getting no acknowledgements from the controller 39 or mobile device 95, switch 93 will include a programmed pre-defined number of attempts at transmitting the switch data 801 to controller 39 or mobile device 95 before making the determination that there is a disconnection 385 in the communication between the switch 93 and the controller 39 or mobile device 95. In one embodiment, the pre-defined number is 5. In another embodiment, the predefined number could be any number of transmissions that occur in a 1-3 second time period, or the like.

In one embodiment, if switch 93 determines that the controller 39 or mobile device 95 is turned off (or otherwise not responding to the transmissions), switch 93 will periodically try to connect with controller 39 or mobile device 95. In one embodiment, switch 93 will only try to connect with controller 39 or mobile device 95 at predefined times such as when timer 815 determines that it is time to send a heartbeat to controller 39. In one embodiment, switch 93 will try to connect with controller 39 or mobile device 95 each time an input 818 is received at the switch.

In one embodiment, when in dormant state 880, the switch 93 is in low-power mode. In one embodiment, while in dormant state 880, the switch 93 will periodically check-in with controller 39 or mobile device 95.

In one embodiment, switch 93 can move between the different states fluidly using the model described above. In one embodiment, switch 93 will try to remain in (or return to) the lowest powered state for the specific situation.

In one embodiment, based on the different states described above, the estimate of a life cycle for power source 839 in switch 93 is determined using a duty cycle such as, for example, 2 hours per ride, 4 rides per week, 48 weeks per year.

In one embodiment, the power draw for each state is approximated as an average of 150 microamp draw during the active state (e.g., operating state 890), an average of 32 microamp draw during the standby state (e.g., 886), an average of 1 microamp draw during the dormant state 880.

In one embodiment, for example if power source 839 of switch 93 is a CR2032 battery with a capacity of approximately 173 mAh. As such, and based on the power draw for each state and the duty cycle example above, the expected operational life of the power source 839 of switch 93 is 23 months. In one embodiment, if the duty cycle is different, the lifespan of the power source 839 will be different.

In one embodiment, a different power source 839 with a different capacity can be used. For example, to fit a smaller (or lighter) power source 839, a larger power source 839, or the like. For example, a road bike rider may want a smaller (or lighter) switch as the reduction of weight is one of the most important goals. As such, the rider could use a switch 93 with a smaller power source 839 and therefore swap the operational life (e.g., reduce the operational life from 23 months to a lower life span e.g., a few months, weeks, or the like), in order to obtain a weight savings.

In contrast, an avid mount bike rider may have a harder duty cycle, with more time of switch 93 being in operating state 890, as such, the expected operational life for power source 839 would be reduced by the actual operation of switch 93.

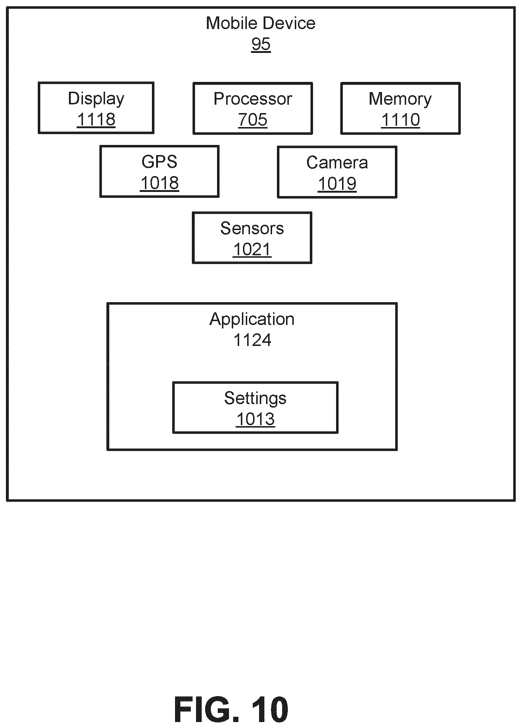

Referring now to Figure 10, a block diagram of a mobile device 95 is shown. Although a number of components are shown as part of mobile device 95, it should be appreciated that other, different, more, or fewer components may be found on mobile device 95.

In general, mobile device 95 is an example of a smart device that is available for a user. Mobile device 95 could be a mobile phone, a smart phone, a tablet, a smart watch, a piece of smart jewelry, smart glasses, or other user portable devices having wireless connectivity. For example, mobile device 95 would be capable of broadcasting and receiving via at least one network, such as, but not limited to, WiFi, Cellular, Bluetooth, NFC, and the like. In one embodiment, mobile device 95 includes a display 1118, a processor 705, a memory 1110, a GPS 1018, a camera 1019, and the like. In one embodiment, location information can be provided by GPS 1018. In one embodiment, the location information could be enhanced by the broadcast range of an identified beacon, a WiFi hotspot, overlapped area covered by a plurality of mobile telephone signal providers, or the like. In one embodiment, instead of using GPS information, the location of mobile device 95 may be determined within a given radius, such as the broadcast range of an identified beacon, a WiFi hotspot, overlapped area covered by a plurality of mobile telephone signal providers, or the like. In one embodiment, geofences are used to define a given area and an alert or other indication is made when the mobile device 95 enters into or departs from a geofence.

Mobile device 95 includes sensors 1021 which can include one or more of audio, visual, motion, acceleration, altitude, GPS, and the like. Mobile device 95 also includes a mobile device application 1124 which is an electronic application that operates on mobile device 95. Mobile device application 1124 includes settings 1013. Although settings 1013 are shown as part of mobile device application 1124, it should be appreciated that settings 1013 could be located in a different application operating on mobile device 95, at a remote storage system separate from mobile device 95, or the like.

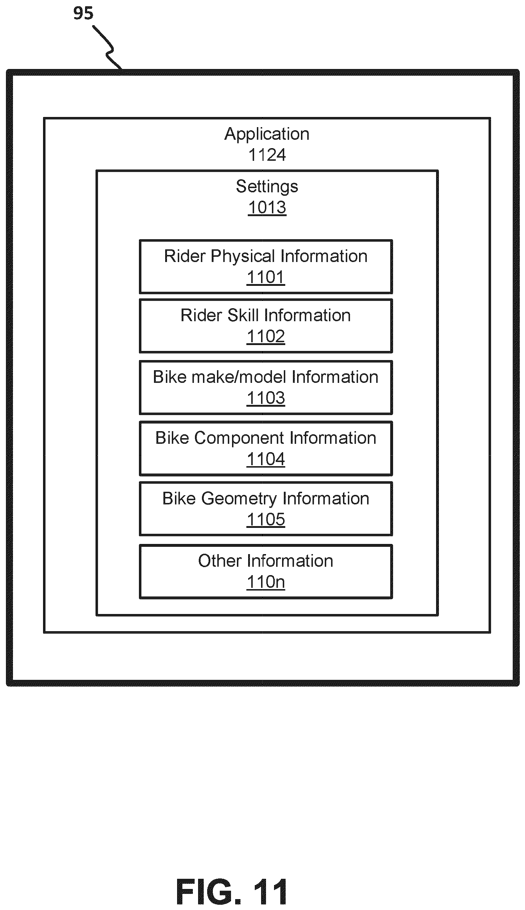

Referring now to Figure 11, a block diagram of a mobile device 95 display having a number of inputs are shown for the mobile device application 1124 in accordance with an embodiment. In general, the mobile device application 1124 operates on mobile device 95 and uses the communication capabilities of mobile device 95 to communicate with one or more active valves in the active valve system of the vehicle. The communication could be Bluetooth, near field communication (NFC), WiFi, or any other available wireless communication. In one embodiment, the communication could be wired if the mobile device 95 is mounted on the handlebar assembly 36 and a communications cable is running from one or more of the active valve systems to the handlebars and plugged into mobile device 95.

In one embodiment, the mobile device application 1124 receives input information to help establish the settings for the provided tunes. In one embodiment, the input information includes, a rider physical information 1101 which could include one or a combination of features such as rider height, weight, gender, age, body mass, body type, fitness level, heart rate, and the like. Rider skill information 1102, e.g., beginner, intermediate, advanced, professional, etc., or rider motivation (e.g., fun ride, race, workout, etc.), and the like. Bike make model information 1103, such as, bike manufacturer, bike model, bike use type (e.g., road, gravel, mountain, BMX, etc.), bike component information 1104 such as, one or more components on the bike (full suspension, half suspension, gearing, weight, tires, wheels, manufacturer of components, etc.), and the like.

Moreover, the input information to the mobile device application 1124 includes bike geometry information 1105 such as: saddle height setting, saddle pitch, saddle offset, crank arm length, wheel diameter, handlebar width, handlebar offset (fore or aft), pedal type, and the like. Further, there could be one or more other information 110n categories that could be added to the inputs. In one embodiment, the inputs could be more or fewer of the above categories, could be different categories, could be user selectable, application driven, and the like. The use of the described categories herein is provided as one embodiment.

In one embodiment, some or all of the above information could be obtained by user input, by communication between the user's mobile device 95 and a networked device such as a scale, smart watch or other smart jewelry that monitors one or more user's biometrics (e.g., heart rate, body mass, temperature, etc.), one or more sensors on the vehicle, or the like. In one embodiment, the information could be obtained by an image capture device (such as a camera) that obtains an image of the bike, a bike component, a 1D or 2D code on the bike or bike component, and the like. In one embodiment, the captured image(s) are then evaluated by the mobile device application 1124 (or other recognition capability) to make one or more bike specific measurement determinations therefrom, make one or more bike part specific component brand/model/year determination(s), make one or more bike brand/model/year determination(s), make one or more bike geometric determination(s) (e.g., saddle height-from ground, saddle height-from cranks, etc.; wheel diameter, type/brand/wear of tires, and the like).

In one embodiment, mobile device application 1124 allows the user to search, select, and upload one or more factory and/or customer active valve suspension tunes.

In one embodiment, mobile device application 1124 can provide the rider with the tunes that correlate with one or more of the rider inputs provided to settings 1013. For example, there may be 5,000 tunes stored in the factory database. In one embodiment, instead of the user manually selecting from the 5,000 tunes, mobile device application 1124 will use the user inputs to automatically narrow the number of tunes down to only those that meet the user input criteria. For example, novice tunes, expert tunes, bike model/brand tunes, damping assembly types, and the like.

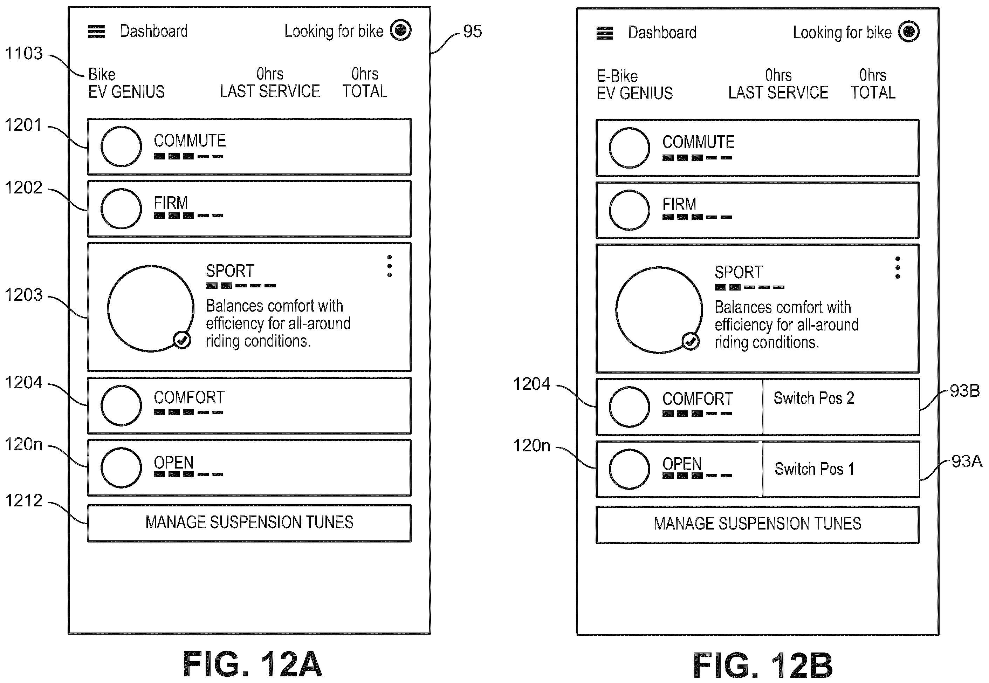

In one embodiment, mobile device application 1124 will also manage a number of bike profiles. For example, the user may have three different vehicles (a mountain bike, a road bike, and a quad). There may be different tunes downloaded to mobile device application 1124 for each of the three (or any number) of different vehicles. The user can select which vehicle she will be riding (e.g., the mountain bike), and the available tunes for the mountain bike will be presented by the mobile device application 1124 as shown and described in further detail in Figures 12A and 12B.

In one embodiment, mobile device application 1124 can also perform system diagnostics on the vehicle active valve system, can calibrate the vehicle active valve system, can provide firmware updates to one or more components of the vehicle active valve system, and the like.

In one embodiment, mobile device application 1124 on mobile device 95 can communicate directly with the active valve system and then provide the information to the rider via the mobile device display. In one embodiment, mobile device application 1124 can communicate with another device that provides the power to the active valve system (e.g., a Bosch Kiox HMI, or the like). In one embodiment, the device that provides power to the active valve system will also have a front mounted display that can present information from mobile device application 1124 to the rider. In one embodiment, the rider can change to a different active valve suspension tune (while stopped, on-the-fly, or the like) via the mobile device application 1124 and/or by the Bosch handlebar button and Kiox screen. In one embodiment, the active valve suspension tune selected on the Kiox is reflected on the mobile device application 1124 and similarly, an active valve suspension tune selected in the mobile device application 1124 is reflected on the Kiox screen.

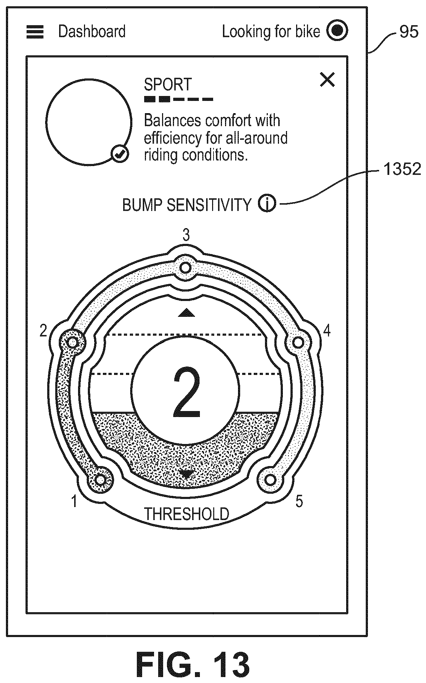

With reference now to Figures 12A and 12B, a screenshot of the mobile device application 1124 having a number of different tunes 1201-1204 is shown in accordance with an embodiment. Figure 13 is a screenshot of a user adjustable capability that is accessed when the user wants to change a tune in accordance with an embodiment.

In Figure 12A, mobile device 95 displays the mobile device application 1124 that includes the bike identifier information, e.g., model information 1103 and five different tunes 1201-120n. In one embodiment, the tunes include a commute tune 1201, a firm tune 1202, a sport tune 1203, a comfort tune 1204 and an open tune 1205. Although five tunes are shown, it should be appreciated that there may be more or fewer tunes. The use of five tunes herein is one embodiment and provided for purposes of clarity. Further, although four of the five tunes have specific names, it should be appreciated that in another embodiment, there may be all custom tunes, a number of differently modified sport tunes, or the like. For example, a rider may make a first comfort tune for road riding, a second comfort tune for trail riding, a third comfort tune for the racetrack, etc. Thus, the naming and or type of tunes is multi-faceted, and user or application driven.

Referring now to Figure 12B, a screenshot of the application having a number of different tunes shown on a display with at least one tune assigned to a switch input, is shown in accordance with an embodiment. For example, in Figure 12B, comfort tune 1204 is assigned to switch position 2 (e.g., button 93B), while open tune 120n is assigned to switch position 1 (e.g., button 93A).

In one embodiment, both the mobile device 95 and switch 93 connect wirelessly to the controller 39. The user can select a suspension tune through the app or through the handlebar switch. In the app, the user can also rearrange the tunes in the stack. As shown In Figure 12B, the rider decided to have sport and sprint next to each other so he rearranged them in the stack. As stated herein, the rider can use the app to assign a mode to the switch. For example, in the two buttons on the switch: '+' (e.g., switch position 1, or button 93A) and '-' (e.g., switch position 1, or button 93A). This would equally apply to 3 or 4 or any number of buttons on the switch.

When the rider presses the button 93A, the open tune is selected for the suspension. If the rider presses button 93B, the comfort tune would be active. In one embodiment, the bottom two slots of the stack are assigned to the two buttons on the switch. However, in another embodiment, the assignment of the switch button does not matter with regard to the location of the tunes in the slots.

This is where rearranging the stack (or reassigning the buttons) can be a powerful tool. For example, the rider might want to select between open and comfort tunes while riding. Other times, like when racing, the rider might want to select between sport tune 1203 and firm tune 1202. In one embodiment, the change to switch assignment is made by dragging sport tune 1203 and firm tune 1202 into the bottom two slots on the app. In another embodiment, the change to switch assignment is made by assigning button 93A to sport tune 1203 and button 93B to firm tune 1202 regardless of their location in the mode order presented in the app.

In one embodiment, by using the buttons to select the modes. The rider can change to a different mode that is stored on the app of the mobile device 95, even when the mobile device 95 is not readily accessible. E.g., when the mobile device is in a pocket, a backpack, etc. In one embodiment, even if the mobile device 95 is accessible, it can be easier for the rider to use the switch 93 instead of trying to navigate the touch screen of the mobile device. For example, simply pushing button 93A to switch to open mode tune 120n is likely easier and much quicker than attempting to interact with a mobile device 95.

Thus, to provide a working example, the switch is assigned two positions. Position one (e.g., Open) is switch button 93A (corresponds to the plus button) and position two (e.g., comfort) is switch button 93B (corresponding to the minus button). If the switch has a different number of buttons, then there can be a similar number of different assigned tunes.

In another example, the switch assignment can be modified by the user interacting with the App on the mobile device. For example, in a cross-country race there is a sprint mode (full time hard tail), that could be assigned to button 93B. While sprint mode would be uncomfortable to use during most of the race, during the final sprint, the rider could use the button 93B of switch 93 to wirelessly switch to sprint mode, to provide the most efficient setting for the final sprint leg of the race.

In one embodiment, the rider can use switch 93 to select between different tunes on the fly. For example, in a 3-position switch configuration, the rider will use switch 93 to cycle between 3 tunes (such as for example, a sprint/off/auto) for the active suspension -on the fly while riding. In one embodiment, sprint would be full-time firm and might be used when sprinting for a finish line in a race, off would be passive, and auto would be active valve algorithm operating normally. For example, the rider will change the position of switch 93 which will cause the tune to change.

In one embodiment, switch 93 is used to cycle through any number of different tunes using a switch selection capability that acts similar to a gear shift configuration, e.g., the rider can change the selected tune based on the number of upshifts, downshifts, button pushes, left/right movements, or the like. For example, moving (or other components of the active valve system) from center to the right, releasing, moving it to the right again, etc., would allow the rider to cycle upward from tune 1 through tune 6 (or tune n). Similarly moving the switch from center to the left, releasing, moving to the left again, would allow the rider to cycle through back down through the tunes in the opposite direction. In one embodiment, the rider would stop at any of the 6 tunes by cycling the switch to the different left/right positions, etc.

In one embodiment, switch 93 includes a memory 836 that will allow a number of tunes to be stored therein. In one embodiment, the tunes available in the memory 836 of switch 93 are programable by the rider using application 1124. In one embodiment, the tunes available in the different storage locations are modifiable at any time using the application 1124.

In one embodiment, the tunes are stored in application 1124 and are selectable on-the-fly, etc. For example, if application 1124 has 12 available tunes, switch 93 would be able to cycle through all 12 different tunes, through a limited number of the tunes, or the like. In one embodiment, for example, if application 1124 was able to only identify 5 active tunes, there would only be 5 tunes (of the 12) available in application 1124 to be utilized by switch 93.

In one embodiment, all of application 1124 active tune locations would be filled with tunes. In another embodiment, only some of application 1124 active tune locations are filled. In one embodiment, if only some of application 1124 active tune locations are filled, then switch 93 would only cycle through those tunes. For example, if application 1124 had the capability to store 10 tunes, and only two of the application 1124 active tune locations were filled with tunes, then when cycled through, switch 93 would only go to the active tune locations (in this example location 1 or location 2). Thus, when the rider wanted to switch between the two active tune locations each change selected by the rider (e.g., a push, right click, left click, etc.) would only move between active tune location 1 and active tune location 2. The rider would not need to cycle through the empty active tune locations of application 1124.

In another embodiment, if application 1124 had 100 tunes, the rider (or another) using application 1124, could designate and a certain number of the storage locations to be cycled through by activation of switch 93. For example, storage locations 1-15 are designated as low altitude (e.g., sea level to 3000 ft) road configuration tunes, storage locations 16-30 are designated as low altitude trail/gravel/fire road configuration tunes, storage locations 31-45 are designated as low altitude downhill off-road racing configuration tunes, storage locations 46-60 are designated as high altitude (e.g., 3000+ ft) road configuration tunes, storage locations, storage locations 61-75 are designated as high altitude trail/gravel/fire road configuration tunes, storage locations 76-90 are designated as high altitude downhill off-road racing configuration tunes, and storage locations 91-100 are designated as dirt track configuration tunes.

Before the ride starts, the rider could designate a subset of the different storage locations of switch 93 to be active for the given ride. For example, if the rider is going on a fire road ride when the ride was below 3000 ft (which could be manually selected, or automatically determined by one or more sensors), switch 93 would be set to only use the tunes in filled storage locations 16-30 of application 1124. Thus, when the rider wanted to switch to a different tune, each storage location change selected by the rider (e.g., a push, right click, left click, etc.) would only cycle between storage locations 16 through 30 of application 1124. The rider would not need to cycle through the irrelevant tunes.

If the altitude changed to more than 3000 ft during the ride, then the designated subset of different storage locations of application 1124 would manually (or automatically) change to storage locations 61-75.

Using the same example, if the rider was going on a fire road ride below 3000 ft (which could be manually selected, or automatically determined by one or more sensors), switch 93 would be set to only use the tunes in filled storage locations 16-30 of application 1124. However, within the storage locations 16-30, there could be additional subsets of tunes. For example, storage locations 16-20 of application 1124 are training tunes, storage locations 21-25 of application 1124 are softer tunes, and storage locations 26-30 of application 1124 are racing tunes. The range of switch 93 is further capable of being set to only cycle through the relevant tunes of application 1124. E.g., the rider is on a training ride on a fire road below 3000 ft. As such, when the rider wanted to switch to a different tune, only storage locations 16-20 of application 1124 would be available. Therefore, each storage location change selected by the rider (e.g., a push, right click, left click, etc.) would only cycle between storage locations 16 through 20 of application 1124. The rider would not need to cycle through the irrelevant tunes.

In one embodiment, application 1124 will assign a number of tunes to the storage location (e.g., memory) of suspension controller 39 is done via a wired or wireless communication between suspension controller 39 and mobile device 95 (and more specifically, app 1124 operating on mobile device 95).

For example, in a wireless communication method, suspension controller 39 would communicate with the mobile device via Bluetooth, NFC, WiFi, a hotspot, a cellular network, or the like. In one embodiment, app 1124 would recognize suspension controller 39, determine the number of storage locations of suspension controller 39, and then download the (automatic and/or user designated) tunes to the different storage locations.

In contrast, mobile device 95 (or another computing system) could be coupled with suspension controller 39 (or other smart component(s)) by way of an input port (such as USB, micro USB, or any other connectable wired configuration) to initially download the available tunes. In one embodiment, if suspension controller 39 is coupled with mobile device 95, app 1124 would recognize suspension controller 39, determine the number of storage locations of suspension controller 39 and then download the (automatic and/or user designated) tunes to the different storage locations. Suspension controller 39 would then be disconnected from the mobile device 95. As such, the rider could still switch between the tunes using switch 93 in conjunction with suspension controller 39, but the rider would not be able to wirelessly modify the tunes stored in suspension controller 39.

In one embodiment, the active tunes are designated (or sorted, ranked, located, assigned, or the like) by the rider. In one embodiment, the active tunes available to switch 93 are designated (or sorted, ranked, located, assigned, or the like) automatically by the application. In one embodiment, the active tunes available to switch 93 are designated by a combination of automation and rider input. For example, the active tunes available to switch 93 could be initially automatically assigned by application 1124 and then the rider could manually add, move, modify, replace, remove, re-order, or otherwise edit the initial automatic assignment thereof.

In one embodiment, the tunes are different based on the inputs provided at Figure 11 information such as rider skill level, bike type, one or more components on the bike, rider motivation, and the like. For example, a new rider would receive one or more tunes that were set at a first level, while an expert rider (or intermediate rider) would receive one or more tunes that were set at a second level. This differentiation in tune settings can also occur between bike types, e.g., a road bike would likely (but may not necessarily) receive different automatic (or initial tune) settings that that of a gravel bike, mountain bike, etc.

When the user selects an active valve suspension tune, e.g., sport tune 1203 the tune would include a number of different suspension settings. For example, as shown in Figure 13, sport tune 1203 has an initial bump sensitivity 1352 setting of 2 from a scale of 1 to 5. If the user wanted to, they could adjust the initial bump sensitivity 1352 to a new bump sensitivity (e.g., sensitivity level 3) which would either be a firmer setting or a softer setting depending upon which way the sensitivity scale was ranked. Other active valve suspension tune management bump sensitivity 1352 features include timers, coupling/decoupling front and/or rear dampers, incline angles, and the like.

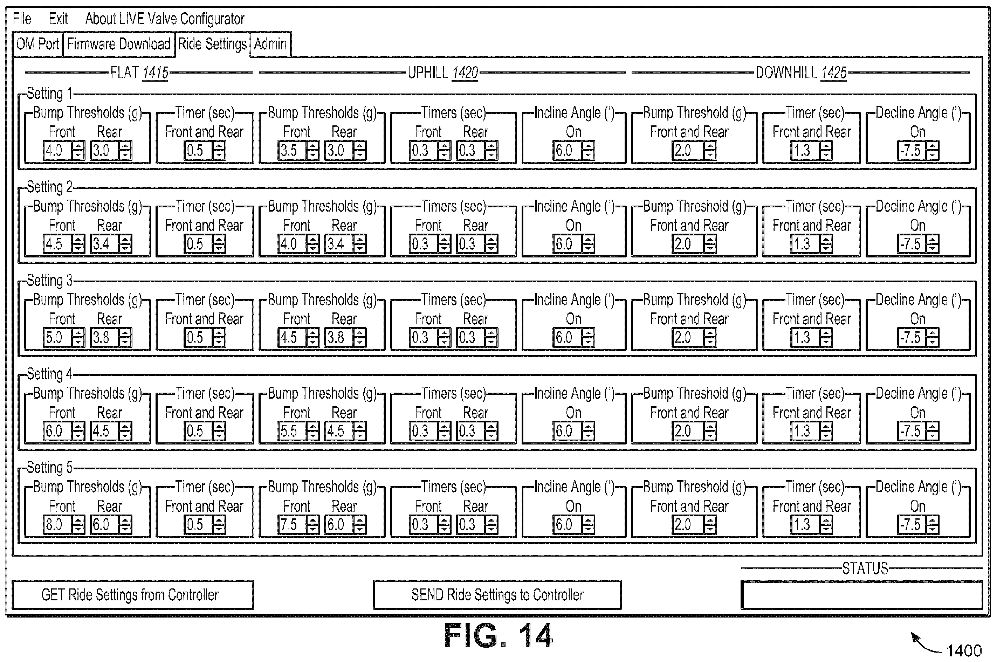

In one embodiment, as shown in Figure 14, a screenshot of a ride settings management page, the management of active valve suspension tunes 1212 includes managing metrics such as flat, uphill, and downhill bump settings.

In one embodiment, when mobile device application 1124 is opened, it will attempt to connect to suspension controller 39. In one embodiment, the settings are loaded into mobile device application 1124 either from a file at a database or from the suspension controller 39.

An "active valve suspension tune" is used herein to encapsulate a group of settings that have been optimized for a particular feel or set of riding conditions. The best way to understand all of the settings in a tune is to look at one level at a time. Within a level, there are three sets of two threshold values for both the front and rear shock. Which of these sets is active depends on what "pitch mode" the bike is in. If the bike is in uphill mode 1420 (e.g., climbing), the uphill thresholds are used. If the bike is in downhill mode 1425 (descending), the downhill thresholds are used. By comparing the sets of thresholds in one level to another, it will be noted that, as the level increases, the thresholds increase. In one embodiment, the level units are g-forces.

In one embodiment, when the user increases the bump sensitivity in the live valve smartphone app 1124(as shown in Figures 12A-13), under the hood the app 1124 moves some or all of the thresholds in the next level.

In one embodiment, the thresholds include front suspension settings and rear suspension settings. In one embodiment, the thresholds could include more or fewer suspension aspects such as a seatpost suspension setting, two different front/rear settings for a vehicle with two rear suspensions, two front suspensions, four wheeled suspension, etc.

There are also different types of use cases (or pitch metrics) that can be used. One embodiment, shows three pitch active valve suspension tunes, e.g., flat, climb, and descend, however, it should be appreciated that there could be additional active valve suspension tunes such as freefall (or jump active valve suspension tunes), etc. In one embodiment, each of the use cases can have their own thresholds or could share thresholds. In one embodiment, a "0" threshold setting can indicate an always open case, while a "99" threshold setting can indicate an always closed case.

In one embodiment, a configuration file is used to store all configurable settings associated with the operation of a live controller. It is a text file formatted as a YAML (a recursive acronym for "YAML Ain't Markup Language") file. These settings files are used by various programs to (1) program or "flash" settings to the controller's flash memory or (2) read out and save controller settings to a file.

There are many sections in a configuration file, but for the mobile device application 1124, the only section that is viewed and edited (unless the user has administrator access to the admin page), is the tune data. In one embodiment, control style tune metrics define how the suspension performs in various conditions. Metrics include coupled and decoupled, e.g., decoupled: the front and rear shocks behave independently - a bump detected by the front sensor has no effect on the rear shock; coupled: the front and rear shocks act together: when the either the front or rear sensor detects a bump, the controller will open both the front and rear shocks; the tune can also include interrelated metrics. In other words, tune metrics that are determined or modified by other tune metrics. For example, in one embodiment of a pitch-determined interrelated style, the front and rear are coupled as above when the bike is level ("flat") or descending, however, when the bike is on an incline ("climb"), the front and rear are decoupled as described above; and the like.

In other words, a tune's settings could be global for all components, or setting that are only defined for two or more of the plurality of suspension components, for suspension components in a defined grouping, etc. In one embodiment, the defined grouping could be front suspension components, rear suspension components, front and seatpost (or saddle) suspension components, rear and seatpost (or saddle) suspension components, handlebar and saddle suspension components, or any combination thereof.

In one embodiment, the angles are incline on angle: this is the angle, adjustable from 3° to 9.9°, at which the controller enters "incline" (climb) mode. In other words, incline on angle refers to the angle that indicates when the tune should shift to the climb thresholds. This angle could be monitored by a sensor that includes an inclinometer or the like. For example, a training tune could have an include on angle of 9 degrees while a race tune could have an incline on angle of 6 degrees. Thus, in a training ride example, in one embodiment, when the inclinometer is reading less than 9 degrees the "flat" thresholds would be used, when the inclinometer is reading 9 degrees or greater, the "climb" thresholds would be used.

Similarly, the tune could include a decline on angle: this is the angle, adjustable from -3° to -9.9°, at which the controller enters "decline" (descend) mode. In other words, decline on angle refers to the angle that indicates when the system should shift to the descend thresholds. Here again, this angle could be monitored by a sensor that includes an inclinometer or the like. For example, a training tune could have a decline on angle of -8 degrees while a race tune could have a decline on angle of -4 degrees. Thus, using the training ride example above, in one embodiment, when the inclinometer is reading more than -8 degrees but less than 9 degrees, the "flat" thresholds would be used, when the inclinometer is reading -8 degrees or less, the "descend" thresholds would be used and when the inclinometer is reading 9 degrees or greater, the "climb" thresholds would be used.

In one embodiment, suspension controller 39 could include a number of tune memory locations available to store the active valve suspension tunes. The tune memory locations could include a number of factory memory locations, user memory locations, etc. In one embodiment, the memory locations could be initially filled with a mix of tunes such as a factory tune in memory location 1, and a user modification of the factory tune in memory location 2.

As such, during a ride, the user could initially select the tune found in tune memory location 2. If the tune is not working properly or is not providing the desired results, the rider can then select tune memory location 1 using switch 93, or the app 1124 operating on their mobile device 95, to switch to the factory tune A settings. In one embodiment, this change to factory tune A will occur in real-time and allow the rider to continue or complete the ride using the factory tune A settings.

Similarly, if the user had filled memory location 3 with another modified version of factory tune A, filled memory location 4 with a differently modified version of factory tune A, filled memory location 5 with yet another modified version of factory tune A, the rider could evaluate the different settings of each tune by switching therethrough. Thus, the rider could use the different tunes to evaluate different changes to a single setting, to a number of settings, etc.

For example, the factory tune could have an Incline on angle of 6, while a first modified version adjusted the Incline on angle to 5, another modified version adjusted the Incline on angle to 4, yet another modified version adjusted the Incline on angle to 3, etc. Thus, the user could evaluate the ride performance across the same tune with the only variation being the Incline-on angle. From this evaluation, the user (or team, factory, aftermarket component provider, etc.) could determine their own personal best performance Incline on angle.

In one embodiment, this tuning approach could be used again for any number of the different settings for a given tune. In so doing, this capability would allow a user (team, factory, aftermarket component provider, etc.) to develop a specific tune that was based on a given factory tune, but which included a number of modified values that worked best for the user and bike configuration.

The following is an example of the code for an exemplary active valve suspension tune: In this case, a sport tune.

```
 slot:
   base_slot: 2
   id: 3
   name: [S, P, O, R, T, "\0", "\0", "\0", "\0", "\0", "\0", "\0", "\0", "\0", "\0", "\0",
      "\0", "\0", "\0", "\0", "\0", "\0", "\0", "\0", "\0", "\0", "\0", "\0",
           "\0", "\0"]
      "\0",
   threshold_index: 2
   timestamp: [0, 1]
   threshold:
   bump_threshold:
   - - [3000, 3500, 4000, 5000, 6000]
      - [2000, 2000, 2000, 2000, 2000]
      - [2500, 3000, 3500, 4500, 5500]
   - - [2250, 2625, 3000, 3750, 4500]
      - [2000, 2000, 2000, 2000, 2000]
      - [2000, 2300, 2625, 3375, 4125]
 slot_3_settings:
   mode:
    coupled_open_time:
     - [300, 300, 300, 300, 300]
     - [1300, 1300, 1300, 1300, 1300]
     - [0, 0, 0, 0, 0]
    decline_angle: [-600, -600, -600, -600, -600]
    decline_delay: [0, 0, 0, 0, 0]
    decline_hysteresis: [-300, -300, -300, -300, -300]
    decoupled_open_time:
     - - [500, 500, 500, 500, 500]
      - [500, 500, 500, 500, 500]
      - [500, 500, 500, 500, 500]
     - - [300, 300, 300, 300, 300]
      - [300, 300, 300, 300, 300]
      - [300, 300, 300, 300, 300]
    incline_angle: [600, 600, 600, 600, 600]
    incline_delay: [250, 250, 250, 250, 250]
    incline_hysteresis: [550, 550, 550, 550, 550]
    shock_control_style: 4
```

The active valve suspension tune has a name (sport tune),
a threshold index (0-5),
a front bump threshold matrix: where the three rows are defined as climb (incline), flat (neutral), descend (decline) and the columns are related to the threshold index selection, and
a rear bump threshold matrix: where the three rows are defined as climb (uphill mode 1420), neutral (flat mode 1415), descend (downhill mode 1425) and the columns are related to the threshold index selection.

In one embodiment, the settings are made automatically. In one embodiment, the settings could be selected or modified by the user, modified by the input provided by the user, or the like. In one embodiment, the settings could be a combination of automatic settings, user selected settings, and user input information which are used in combination to develop the underlying active valve suspension tune.

In one embodiment, in addition to receiving the sensor data supplied by any mounted sensors from the sensors, or from the suspension controller 39, in one embodiment the user's mobile device 95 (or one or more smart device(s) in communication with the user's mobile device) would also have one or more sensors for obtaining and supplying data such as inertia, pitch, roll, yaw, altitude, and the like. In one embodiment, some or all of the sensor information (from some or all of the pluralities of sensors) could be provided to the mobile device application 1124 to allow the mobile device application 1124 to automatically change some tune settings on the fly, provide a notice to the rider to manually change one or more tune settings, or some combination thereof.

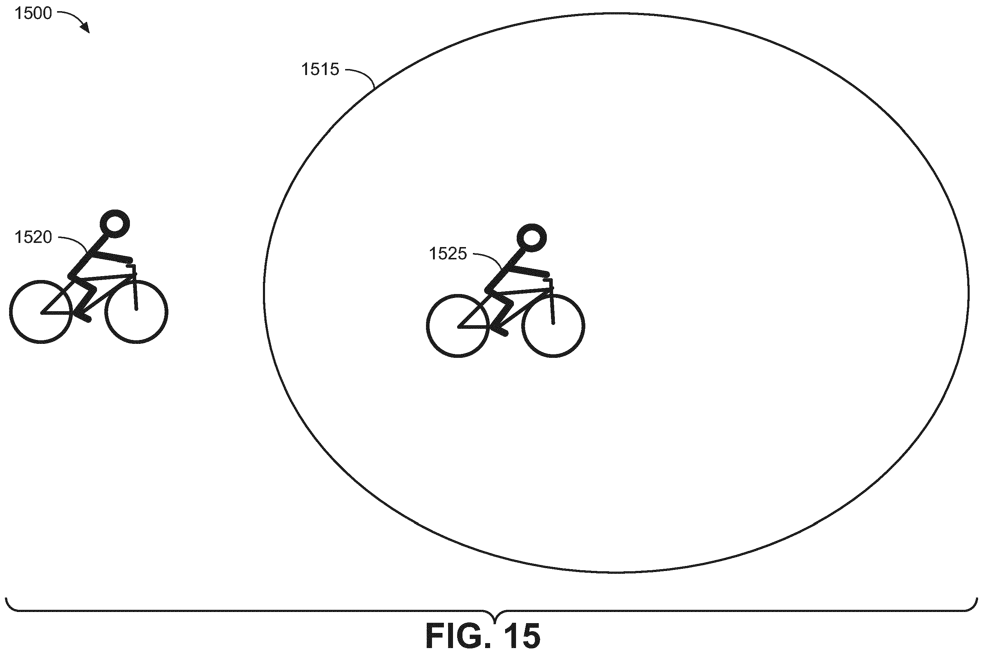

Referring now to Figure 15, a high-level view 1500 of a defined area is shown in accordance with an embodiment. For example, the user' mobile device 95 could also include location information from mobile device 95 that is pulled into the mobile device application 1124. The location information could be GPS location, WiFi location information, Cellular network location information, or any information that could be used by the mobile device 95 to obtain location information.

For example, in one embodiment, the mobile device application 1124 received input information includes location information that would define an area 1515 (such as a geofence, elevation level, terrain type, or the like). When the mobile device 95 enters into the area 1515 (as shown by bike 1525 inside area 1515 and bike 1520 outside of area 1515), the mobile device application 1124 would update some of the tune settings to match the tune settings for the given area. The update to the tune settings could be automatically performed or could be provided as an "advisory" to the rider to modify the settings to the geofence settings. In one embodiment, the location settings could further be adjusted by the in-mobile device application 1124 settings based on the previously described features that were input into the application as discussed with respect to Figures 12A-14.

In addition, in one embodiment a new rider would receive a first set of automatic setting adjustments when they entered area 1515, while an expert rider (or intermediate rider) would receive a second set of automatic setting adjustments when the entered area 1515. This differentiation of settings could also occur between bike types, e.g., a road bike entering into area 1515 would likely (but may not necessarily) receive different automatic settings that that of a gravel bike, mountain bike, etc. Moreover, the entering into area 1515 could provide a multitude of possible automatic settings based on the rider information in the mobile device application 1124, information such as rider skill level, bike type, one or more components on the bike, rider motivation, and the like.

Referring again to Figure 12A, in addition to having automatic or predefined tunes 1201-1204, there can also be peer generated custom tunes 120n that will be provided, such as in a custom mode, to other application users for download and utilization.

For example, trail x is ridden by Johnny Pro and he records his settings (or tune) and uploads them for the mobile device application 1124 (Johnny does trail x). Another rider could then download Johnny Pro's settings (e.g., the tune Johnny does trail x) and use then use that specific tune to ride trail x (or to ride other trails).

Similarly, Franky Speed could ride his bike with specific components thereon, record his settings and upload them for the mobile device application 1124. Another user with a bike having the same (or similar) specific components thereon (or same bike model, brand, year, etc.) would be able to find the custom tune for her similar bike and download that custom Franky Speed configuration to her mobile device 95. Thus, there could be custom tunes for general locations, different altitudes, specific rides, specific riders, certain bikes, different bike brands, different bike models, bikes with similar components, and the like.

For example, the custom tunes can come from FOX or the OEM and might target a specific type of rider or a specific geographic location. In one embodiment, the custom tunes are downloaded into a "bullpen" and can then be dragged into the active stack of 5 (or any defined number) tunes. In one embodiment, when a new tune is selected from the bullpen, the replaced tune would then drop down into the bullpen, available for later use (e.g., "Johnny does trail x" replaces comfort 1204). In one embodiment, before dissemination, any custom tunes would be sent for approval, and then the approved custom tunes would be available for download.

Although, in one embodiment, the custom tunes are managed by the mobile device application 1124 or the servers supporting mobile device application 1124 (e.g., the management location from which tunes are uploaded to and downloaded from), in one embodiment, one or more peer generated custom tunes 120n could be shared peer-to-peer via WiFi, Bluetooth, NFC, etc. In one embodiment, they could be shared through a middleman such as a webstore, a social network, a riding club, or any combination thereof.

In one embodiment, there could also be a collection of performance data taken during the ride. The collected performance data could be used to compare the settings (or tune) used on the ride with the actual performance of the active valve and other reporting components. This comparison could be used to determine if the selected settings (or tune) was the most appropriate for the ride, if one or more aspects of the tune should be adjusted for performance gains, if the active valve system was operating correctly, if any faults were detected, or the like. For example, in the collected performance data it may be determined that the downhill setting did not allow for the full motion of one or more smart component(s). The determination would further be that the downhill setting was too stiff and that a softer setting would have allowed for additional performance to be obtained from the one or more smart component(s). In another embodiment, the determination would be that one or more of the active valves in the active valve system was not operating correctly and needed an update, replacement, or the like. In yet another embodiment, the determination would be that one or more of the components on the bike was not operating correctly and needed repair, replacement, or the like.

In one embodiment, if the determination was that the tune was not correct for the situation, the result of the comparison would be an adjustment to the downhill portion of the tune. In one embodiment, if the same downhill adjustment was needed for the same rider on a number of different rides, there may be further input such as rider weight, height, saddle settings, and the like that could be added to the inputs for the mobile device application 1124 and then used to adjust some portion of one or more of the settings (or tunes). Moreover, if the same downhill tune adjustments were determined for a number of riders (each of which being shorter than 5'7") that height information could be used to automatically modify the initial tune information once the height was provided by the rider to the application 124. Although height is discussed, the recurring feature could be, on or a combination of, rider height, weight, gender, age, body mass, body type, fitness level, heart rate, saddle height setting, saddle pitch, saddle offset, crank arm length, wheel diameter, handlebar width, handlebar offset (fore or aft), pedal type, etc. Further, some or all of the above information could be obtained by user input, by communication between the user's mobile device 95 and networked devices such as a smart scale, smart watch or other smart jewelry that monitors one or more user's biometrics (e.g., heart rate, body mass, temperature, etc.); and the like.

### Modifying Operational Aspects Of A Suspension Control System

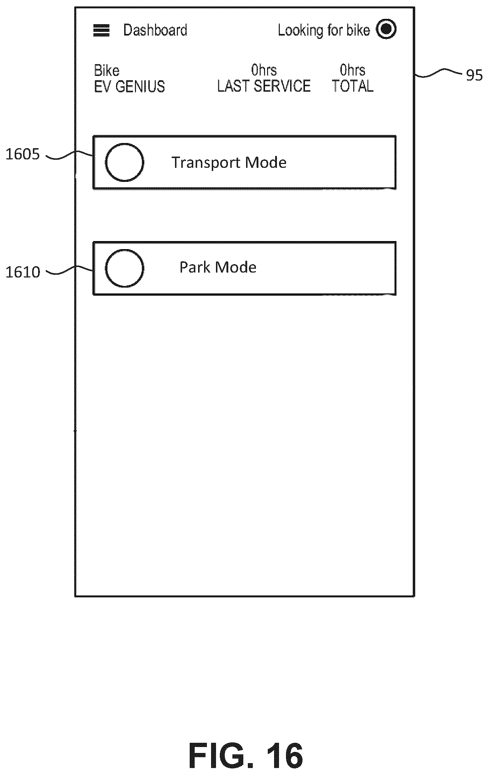

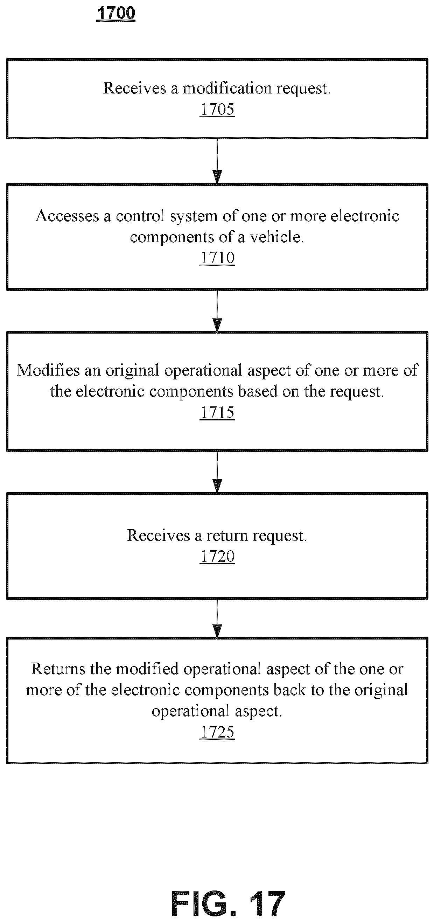

Figure 16 is a screenshot of the application 1124 having a number of different control system modifications shown on a display of mobile device 95, in accordance with an embodiment. In one embodiment, the control system modifications include a transport mode 1605 and a park mode 1610. In one embodiment, application 1124 also includes a dropper seatpost actuations 1615 counter. Figure 17 is a flow diagram 1700 of a method for modifying one or more aspects of a vehicle control system, in accordance with an embodiment.

Referring now to 1705 of Figure 17, one embodiment receives a modification request. In one embodiment, the modification request is a request to enter a transport mode 1605. In one embodiment, the modification request is a request to enter a park mode 1610.

At 1710 of Figure 17, one embodiment accesses a control system of one or more electronic components of a vehicle. In one embodiment, the control system is application 1124, controller 39, a controller located on a specific component, or the like.

At 1715 of Figure 17, one embodiment modifies an original operational aspect of one or more of the electronic components based on the request. For example, the transport mode 1605 will disable the shake-to-wake process. Similarly, park mode 1610 will disable, for example, the dropper seatpost extension process. In various embodiments, park mode 1610 will disable other or additional operations of the seat post.

At 1720 of Figure 17, one embodiment receives a return request. For example, the return request is to deactivate transport mode 1605. In one embodiment, the return request is to deactivate park mode 1610.

At 1725 of Figure 17, one embodiment returns the modified operational aspect of the one or more of the electronic components back to the original operational aspect. For example, the shake-to-wake process will be enabled. When park mode 1610 is deactivated, the dropper seatpost extension process will be operational.

### Transport mode

With reference now to Figures 16 and 17, in one embodiment, one or more of the electronic components do not include an on/off switch. Instead, as discussed herein, they sleep or otherwise enter a low power mode after the vehicle completes a period of non-use. During the low power mode of operation, one or more sensors will periodically wake to monitor such that the system will automatically wake up after detecting vehicle motion. In the following discussion, this is referred to as 'shake-to-wake'.

While this methodology is ground breaking, there can be problems during transport of the vehicle. Specifically, the movement of the vehicle during transport can cause a sensor to wake up some or all of the vehicle systems. For example, if the vehicle is being transported and the transport encounters a bumpy section, the motion of the transport will be identified by one or more vehicle sensors as motion of the vehicle. This identified motion would cause the system to transition from sleep mode to wake.

Each time the system wakes, it will be awake until the period of non-use passes and then return to sleep mode. As such, the inadvertent 'shake-to-wake' process can occur multiple times or even cause the system to remain in a higher powered mode for some or all of the transit. In so doing, the battery of the system will be active and draining even though the vehicle is not actually being used. Deleteriously, this can result in a low-power or no power situation at arrival, battery life that is reduced below the level needed to complete a ride, reduced battery life that will expire before completion of a trip, etc. In other words, the battery power level will not be full and may actually be lower than the battery requirements for the planned use of the vehicle.

To overcome this deleterious situation, a transport mode 1605 is added to the controller or application 1124. In one embodiment, transport mode 1605 disables the shake-to-wake feature by putting one or more of the sensors used to identify the "shake" into a resting, low-power, or off state. In one embodiment, transport mode 1605 disables the shake-to-wake feature by blocking an output of the one or more of the sensors used to identify the "shake". In one embodiment, transport mode 1605 disables the shake-to-wake feature by modifying the system to ignore an output of the one or more of the sensors used to identify the "shake".

In one embodiment, the transport mode 1605 is enabled and/or disabled via the application 1124. In one embodiment, the transport mode 1605 is enabled by manipulating an input or a plurality of inputs coupled with the system. The input(s) could include a pattern of inputs on one or a combination of a switch, button, lever, pedal, crank, wheel, seatpost, handlebars, visual signal, audible signal, shock assembly compressions and rebounds, etc.

For example, a lever 205a is squeezed in a predefined pattern of inputs. This will ensure the system is not set to transport mode due to normal vehicle use, inadvertent inputs, or the like. For example, the enable transport mode pattern could be a number of inputs within a predefined amount of time, a pattern long and short inputs, two or more different inputs (e.g., lever pull, button push, pedal pressure, number of crank rotations, number of wheel rotations, visual signal, audio signal, etc.) or the like. e.g., a pattern that will not normally be replicated during normal operations either accidentally or inadvertently. In one embodiment, activating transport mode 1605 will require the bike to be stationary before the inputs are recognized. For example, the vehicle is not moving (wheels not turning, etc.) when the predefined pattern is received by the system.

In a visual example, the user would make a gesture such as a thumbs up, shaka, or the like, to a visual capture device (such as their mobile device 95, front looking sensor, etc.) to indicate the system should enable transport mode 1605. In an audio example, the user would say a word or phrase that is captured by a microphone (such as on their mobile device 95, sensor, etc.) to indicate the system should enable transport mode 1605.

In one embodiment, once the vehicle is in transport mode 1605, one or more of the system inputs that would normally initiate the shake-to-wake system will be disabled. In one embodiment, the system inputs are manually selectable. In one embodiment, the system inputs are preselected.

For example, in one embodiment the transport mode 1605 could be set such that there is no monitoring going on. In one embodiment, transport mode 1605 could be set such that there is no motion monitoring (or one, some or all monitored motions will not trigger the wake).

In one embodiment, deactivating transport mode 1605 would require turning off transport mode 1605 in the application 1124. In one embodiment, transport mode 1605 is deactivated by removing and reinserting the battery. In one embodiment, deactivating transport mode 1605 requires an input such as a switch, button, lever, pedal pressure, number of crank rotations, number of wheel rotations in conjunction with crank rotations, visual signal, audible signal, shock assembly compressions and rebounds, or the like.

For example, a pedal sensor or handlebar sensor would receive a threshold pressure to indicate the bicycle is being utilized and deactivate transport mode 1605. Similarly, a number of crank rotations above a threshold value (e.g., 2, 3, etc.) would indicate the bicycle is being utilized and deactivate transport mode 1605. In another embodiment, a number of wheel rotations in conjunction with crank rotations above a threshold value would indicate the bicycle is being utilized and deactivate transport mode 1605. In one embodiment, the wheel rotations would be in concert with other inputs such as pedal pressure, handlebar pressure, shock assembly compression and/or rebound, crank rotations, etc. to ensure the system does not deactivate transport mode 1605 due to inadvertent wheel spin occurring while the vehicle is in transit.

In a visual example, the user would make a gesture such as a thumbs up, shaka, or the like, to a visual capture device (such as their mobile device 95, front looking sensor, etc.) to deactivate transport mode 1605. In an audio example, the user would say a word or phrase that is captured by a microphone (such as on their mobile device 95, sensor, etc.) to deactivate transport mode 1605.

In one embodiment, a predefined pattern of inputs will deactivate transport mode 1605. The predefined pattern will ensure the system is not woken due to an inadvertent bump of a lever 205A, rolling of the bike into or out of the transport vehicle, and the like. For example, the pattern could be 3 inputs within 3 seconds, a pattern such as long and short inputs, two or more different inputs (e.g., lever 205A pull, button push, pedal pressure, number of crank rotations, number of wheel rotations, visual signal, audio signal, etc.) or the like. e.g., a pattern that will not normally be replicated accidentally or inadvertently.

In one embodiment, an impact such as, but not limited to, a drop from a given height (such as from a tailgate of a truck, the back of a van, a bike rack, etc.) will bring the system out of transport mode 1605. For example, when a value of a shock assembly compression is at least as large as a predefined threshold identifying a minimum dropped distance. In another embodiment, a value of an accelerometer identifies a drop of a predefined threshold indicating a minimum dropped distance, etc. For example, when unloading a vehicle from a truck bed or taking it down from a bike rack can result in a drop of at least two feet. As such, when a drop of at least this magnitude is identified, transport mode 1605 will be deactivated. In one embodiment, the impact must be followed by the manipulation of one or more different components to deactivate transport mode 1605.

In one embodiment, the procedure for deactivating transport mode 1605 (or waking the system) is a default procedure. In one embodiment, the procedure for deactivating transport mode 1605 (or waking the system) may include one, some, or all of the procedures disclosed. In one embodiment, the methodology for deactivating transport mode 1605 (or waking the system) is selected by the user.

For example, if the vehicle is being transported such that the unloading will likely incur a drop of at least the threshold distance, the system can be set to deactivate transport mode 1605 when the drop is identified.

In another example, such as when the user wants the vehicle to remain in transport mode 1605 regardless of any events or without monitoring for events, the system can be set to deactivate transport mode 1605 only when a specific input is received (e.g., the user input, gesture, pattern, input via application 1124, etc.).

In one embodiment, even when a specific event is identified as being the catalyst for deactivating transport mode 1605, the transport mode 1605 may be overridden by one or more default inputs such as a pattern of inputs, input to the application 1124, etc. Thus, if the transport mode 1605 was entered with a deactivate transport mode 1605 event set as at least a two foot drop, the vehicle is able to deactivate transport mode 1605 via the override without requiring the two foot drop.

### Park mode

Often, the dropper seatpost lever 205A is relatively sensitive to user input. In one embodiment, such as FOX TM transfer Neo, the dropper seatpost will be operated by a short-throw electronic handlebar lever 205A that is relatively easy to press. The ease of operation is important in most situations as the lever 205A may be manipulated numerous times during a given ride or session and a lighter input is likely preferred in most situations.

In some situations, such as riding at a bike park, transitioning through a jump line, and the like, an accidental interaction with the dropper seatpost actuating lever 205A set for a light input may cause the seatpost to extend. If the accidentally commanded seatpost extension happens while jumping or performing other maneuvers the result could be dangerous and even harmful.

Embodiments disclosed herein provide a system and method for modifying one or more aspects of the vehicle's system to stop an inadvertent seatpost extension. For purposes of clarity, the procedure to stop the seatpost extension is referred to herein as park mode 1610.

In general, when park mode 1610 is enabled the operation the dropper seatpost will be disabled. In one embodiment, park mode 1610 will disable the extension functionality of the dropper seatpost, e.g., locking the seatpost in the lowered position. In one embodiment, park mode 1610 will disable the dropper seatpost actuating lever 205A functionality such that an interaction with the dropper seatpost actuating lever 205A (including an inadvertent interaction) will not cause the seatpost to extend.

For example, park mode 1610 will deactivate the electronic dropper seatpost actuating lever 205A, stop the generating of a signal from the electronic dropper seatpost actuating lever 205A, stop the transmission of the signal from the electronic dropper seatpost actuating lever 205A, block the reception of the signal by the dropper seatpost actuator, cause the dropper seatpost actuator to ignore the signal from the electronic dropper seatpost actuating lever 205A, and/or otherwise remove a lever 205A input from the operational process of the dropper seatpost.

In one embodiment, the vehicle will stay in park mode 1610 until it is disabled in the application 1124. In one embodiment, the vehicle will stay in park mode 1610 until a predefined input or pattern of inputs occurs. For example, pressing the dropper seatpost actuating lever 205A three times within a given time period will deactivate park mode 1610. Although a pattern is described, it should be appreciated that the deactivating of park mode 1610 could include a different pattern, interaction with different components, a combination of different component interactions, and the like.

In one embodiment, a gesture such as a thumbs up, shaka, or the like, provided to a visual capture device (such as a mobile device 95, front looking sensor, etc.) will deactivate park mode 1610. In one embodiment, a word or phrase that is captured by a microphone (such as on the mobile device 95, sensor, etc.) will deactivate park mode 1610. In one embodiment, the vehicle will activate, deactivate, or remain in park mode 1610 based on the vehicle location.

For example, a location, geofenced area, or the like is identified as an area where park mode 1610 is to be enabled. In one embodiment, when the vehicle enters (or is located within) the area, the park mode 1610 will be enabled. In one embodiment, when the vehicle exits (or is located outside) the area, the park mode 1610 will be enabled. In one embodiment, park mode 1610 will be automatically activated (or enabled) when the vehicle enters (or is located within) the area and automatically deactivated (or disabled) when the vehicle exits (or is located outside) the area.

In one embodiment, the vehicle will stay in park mode 1610 for a predefined amount of time. For example, park mode 1610 is enabled for 20 minutes, half an hour, two hours, twelve hours, etc. In one embodiment, the vehicle will stay in park mode 1610 until the system goes to sleep (or low power) mode.

For example, park mode 1610 is enabled until the vehicle is parked for a given amount of time, at which time, the vehicle will deactivate park mode 1610. In another example, the vehicle will stay in park mode 1610 until the system goes to sleep (or low power) mode, a predefined number of times.

In some cases, the procedure for deactivating park mode 1610 is a default procedure. In one embodiment, the procedure for deactivating park mode 1610 will include one, some, or all of the different procedures disclosed herein including those described for the transport mode 1605. In one embodiment, the methodology for deactivating park mode 1610 is selected by the user. In one embodiment, the methodology for deactivating park mode 1610 is selected by the user as a default and/or is a selection of one or more options as part of the enabling park mode 1610 process.

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the Claims.

Reference throughout this document to "one embodiment," "certain embodiments," "an embodiment," "various embodiments," "some embodiments," "various embodiments", or similar term, means that a particular feature, structure, or characteristic described in connection with that embodiment is included in at least one embodiment. Thus, the appearances of such phrases in various places throughout this specification are not necessarily all referring to the same embodiment. Furthermore, the particular features, structures, or characteristics of any embodiment may be combined in any suitable manner with one or more other features, structures, or characteristics of one or more other embodiments without limitation.

## Claims

1. A computer-implemented method comprising:
receiving a modification request;
accessing a control system of one or more electronic components of a vehicle;
modifying an original operational aspect of one or more of said electronic components based on said request;
receiving a return request; and
returning said modified operational aspect of said one or more of said electronic components back to said original operational aspect.

2. The computer-implemented method of Claim 1, wherein said one or more electronic components comprises a dropper seatpost and said modifying comprises at least one of:
disabling a functionality, such as an extension functionality, of said dropper seatpost;
ignoring a user-activated signal for operating said dropper seatpost;
ignoring a sensor signal for operating said dropper seatpost; and
locking said dropper seatpost in a lowered configuration.

3. The computer-implemented method of Claim 1 or 2, wherein said one or more electronic components comprises an external input for a dropper seatpost and said modifying comprises at least one of:
deactivating an operation of said external input; and
stopping a signal from said external input modifying a position of the dropper seatpost;
and optionally:
wherein said external input is selected from a group consisting of: an electronic lever and a wireless electronic lever.

4. The computer-implemented method of Claim 2 or 3, wherein said original operational aspect comprises an electronic actuator configured to open and/or close a valve/mechanism that determines a movable state of said dropper seatpost.

5. The computer-implemented method of any preceding Claim, wherein said one or more electronic components comprises at least one sensor and said modifying comprises at least one of:
deactivating an operation of said at least one sensor; and
blocking a signal from said at least one sensor.

6. The computer-implemented method of any preceding Claim, wherein said original operational aspect comprises a low-power sensor adapted to monitor for motion and to send a wakeup signal to said one or more electronic components upon detecting said motion, wherein said modifying comprises disrupting or altering a criterion for sending of said wakeup signal.

7. The computer-implemented method of any preceding Claim, further comprising:
modifying said original operational aspect via an application operating on a computing device.

8. The computer-implemented method of any preceding Claim, wherein said return request comprises:
receiving a predefined input from a group consisting of: a switch, a button, a lever, a pedal pressure sensor, a crank rotation sensor, a wheel rotation sensor in conjunction with said crank rotation sensor, a visual sensor, an audio sensor, a shock assembly compression sensor, and a shock assembly rebound sensor;
and optionally:
receiving a predefined pattern as said predefined input.

9. The computer-implemented method of any preceding Claim, further comprising:
determining a location of said vehicle; and
generating said modification request or said return request based on said location of said vehicle.

10. The computer-implemented method of any preceding Claim, further comprising:
generating said return request after at least one of:
a predefined period of time;
a predefined gesture is recognized by a visual capture device; and
a predefined sound is recognized by an audio capture device.

11. A computer-implemented system comprising at least one processor adapted to perform the steps of the method of any preceding Claim.

12. A computer program comprising instructions which, when the program is executed by a computer, cause the computer to carry out the steps of the method of any of Claims 1 to 10.

13. A computer-readable data carrier having stored thereon the computer program of Claim 12.

14. A data carrier signal carrying the computer program of Claim 12.

15. A vehicle comprising one or more electronic components and the computer-implemented system of Claim 11.
